(19) Europäisches Patentamt
European Patent Office
Office européen des brevets

(11) **EP 4 492 882 A1**

(12) **EUROPEAN PATENT APPLICATION**
published in accordance with Art. 153(4) EPC

(43) Date of publication:
**15.01.2025 Bulletin 2025/03**

(21) Application number: **23778499.6**

(22) Date of filing: **31.03.2023**

(51) International Patent Classification (IPC):
*H04W 64/00* (2009.01)   *G01S 19/43* (2010.01)

(52) Cooperative Patent Classification (CPC):
**G01S 19/43; H04W 64/00**

(86) International application number:
**PCT/CN2023/085643**

(87) International publication number:
**WO 2023/186135 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.03.2022   CN 202210336233
03.03.2023   PCT/CN2023/079525**

(71) Applicant: **Huawei Technologies Co., Ltd.
Shenzhen, Guangdong 518129 (CN)**

(72) Inventor: **LI, Cheng
Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **METHOD FOR DETERMINING POSITIONING INFORMATION, AND POSITIONING METHOD AND RELATED APPARATUSES**

(57)    Embodiments of this application provide a positioning information determining method, a positioning method, and a related apparatus, to improve positioning accuracy. The method in embodiments of this application includes: A terminal device measures a positioning reference signal sent by at least one first network device, to obtain at least one phase difference; and the terminal device sends first information to a second network device, where the first information includes the at least one phase difference, or the first information is determined based on the at least one phase difference.

FIG. 6

**Description**

This application claims priorities to Chinese Patent Application No. 202210336233.3, filed with the China National Intellectual Property Administration on March 31, 2022 and entitled "POSITIONING INFORMATION DETERMINING METHOD, POSITIONING METHOD, AND RELATED APPARATUS", and to Chinese Patent Application No. PCT/CN2023/079525, filed with the China National Intellectual Property Administration on March 3, 2023 and entitled "POSITIONING INFORMATION DETERMINING METHOD, POSITIONING METHOD, AND RELATED APPARATUS", both of which are incorporated herein by reference in their entireties.

**TECHNICAL FIELD**

This application relates to the field of communication technologies, and in particular, to a positioning information determining method, a positioning method, and a related apparatus.

**BACKGROUND**

Currently, a phase-based positioning technology has been widely applied to various satellite systems (for example, BeiDou and a global positioning system (global positioning system, GPS)), and positioning accuracy of the phase-based positioning technology can reach a centimeter level. A basic principle of the phase-based positioning technology is as follows: A transmitting end device sends a carrier signal. The carrier signal arrives at a receiving end device after a specific propagation delay. A phase difference between a phase of the carrier signal received by the receiving end device and that of a local oscillator signal of the receiving end device is referred to as a phase that is of the carrier signal from the transmitting end device and that is measured by the receiving end device. The phase includes information about the propagation delay between the transmitting end and the receiving end. Therefore, the receiving end device can obtain information about a distance between the transmitting end and the receiving end through calculation based on a phase unwrapping algorithm, and further perform position calculation to obtain a position of the transmitting end device.

The foregoing technical solution is a process of performing positioning in a satellite system by using the phase-based positioning technology. However, how to apply the phase-based positioning technology to another communication system such as a cellular communication system to improve positioning accuracy is a problem worth considering.

**SUMMARY**

This application provides a positioning information determining method, a positioning method, and a related apparatus, to improve positioning accuracy.

A first aspect of this application provides a positioning information determining method, including the following.

A terminal device measures a positioning reference signal sent by at least one first network device, to obtain at least one phase difference. Then, the terminal device sends first information to a second network device, where the first information includes the at least one phase difference, or the first information is determined based on the at least one phase difference.

In the foregoing technical solution, the terminal device measures the positioning reference signal sent by the at least one first network device. For example, the at least one first network device includes one first network device, and the first network device sends at least two positioning reference signals at two different moments. The terminal device may separately measure the at least two positioning reference signals to obtain a phase difference between two phases. For example, the at least one first network device includes a first network device 1 and a first network device 2. The first network device 1 sends a positioning reference signal 1, and the first network device 2 sends a positioning reference signal 2. The at least one phase difference includes a phase difference between a phase obtained by the terminal device by measuring the positioning reference signal 1 sent by the first network device 1 and a phase obtained by the terminal device by measuring the positioning reference signal 2 sent by the first network device 2. The terminal device sends the first information to the second network device. The first information includes the at least one phase difference, or the first information is determined based on the at least one phase difference. The first information is used by the second network device to perform positioning on the terminal device. The first information may be understood as positioning information provided by the terminal device for the second network device. It can be learned that the at least one phase difference can eliminate a synchronization error between the terminal device and the at least one first network device and a synchronization error between different first network devices. This helps the second network device perform accurate positioning on the terminal device with reference to the first information. For example, in a cellular communication system, the second network device can perform accurate positioning on the terminal device according to the technical solution in this application. This avoids a problem that positioning accuracy is reduced due to the synchronization error between the terminal device and the at least one first network device and the synchronization error between different first network devices.

A second aspect of this application provides a positioning method, including the following.

A second network device receives first information from a terminal device, where the first information includes at least one phase difference, or the first information is determined based on the at least one phase difference, and the at least one phase difference is obtained by the terminal device by measuring a positioning reference signal sent by at least one first network device. Then, the second network device performs positioning on the terminal device based on the first information.

In the foregoing technical solution, the second network device receives the first information from the terminal device, where the first information includes the at least one phase difference, or the first information is determined based on the at least one phase difference. For example, the at least one first network device includes one first network device, and the first network device sends at least two positioning reference signals at two different moments. The terminal device may separately measure the at least two positioning reference signals to obtain a phase difference between two phases. For example, the at least one first network device includes a first network device 1 and a first network device 2. The first network device 1 sends a positioning reference signal 1, and the first network device 2 sends a positioning reference signal 2. The at least one phase difference includes a phase difference between a phase obtained by the terminal device by measuring the positioning reference signal 1 sent by the first network device 1 and a phase obtained by the terminal device by measuring the positioning reference signal 2 sent by the first network device 2. The first information includes the at least one phase difference, or the first information is determined based on the at least one phase difference. This helps eliminate a synchronization error between the terminal device and the one or more first network devices and a synchronization error between different first network devices. In this way, the second network device can perform accurate positioning on the terminal device with reference to the first information. For example, in a cellular communication system, the second network device can perform accurate positioning on the terminal device according to the technical solution in this application. This avoids a problem that positioning accuracy is reduced due to the synchronization error between the terminal device and the at least one first network device and the synchronization error between different first network devices.

Based on the first aspect or the second aspect, in a first implementation of this application, the at least one first network device includes a reference network device and at least one measurement network device; and the at least one phase difference includes at least one of the following:

a phase difference between a phase obtained by the terminal device by measuring a positioning reference signal sent by the reference network device and a phase obtained by the terminal device by measuring a positioning reference signal sent by the at least one measurement network device; or

a phase difference between a channel first path phase obtained by the terminal device by measuring a positioning reference signal sent by the reference network device and a channel first path phase obtained by the terminal device by measuring a positioning reference signal sent by the at least one measurement network device; or

a phase difference, at a same frequency, between a frequency domain channel coefficient obtained by the terminal device by measuring a positioning reference signal sent by the reference network device and a frequency domain channel coefficient obtained by the terminal device by measuring a positioning reference signal sent by the at least one measurement network device.

In this implementation, a specific form of the at least one phase difference is provided above. In other words, an error caused by a radio frequency initial phase of the terminal device and synchronization errors between the terminal device and different first network devices are eliminated by using the phase difference. Therefore, positioning accuracy for the terminal device is improved. For example, the at least one first network device includes a reference network device and N measurement network devices. The at least one phase difference includes N phase differences 1. An $i^{th}$ phase difference 1 in the N phase differences 1 is a phase difference between a phase obtained by the terminal device by measuring a positioning reference signal sent by the reference network device and a phase obtained by the terminal device by measuring a positioning reference signal sent by an $i^{th}$ measurement network device; or an $i^{th}$ phase difference 1 is a phase difference between a channel first path phase obtained by the terminal device by measuring a positioning reference signal sent by the reference network device and a channel first path phase obtained by the terminal device by measuring a positioning reference signal sent by an $i^{th}$ measurement network device; or an $i^{th}$ phase difference 1 is a phase difference, at a same frequency, between a frequency domain channel coefficient obtained by the terminal device by measuring a positioning reference signal sent by the reference network device and a frequency domain channel coefficient obtained by the terminal device by measuring a positioning reference signal sent by an $i^{th}$ measurement network device. For example, the at least one first network device includes a reference network device and a measurement network device 1. The at least one phase difference includes at least one of the following: a phase difference between a phase obtained by the terminal device by measuring a positioning reference signal sent by the reference network device and a phase obtained by the terminal device by measuring a positioning reference signal sent by the measurement network device 1.

For example, the at least one first network device includes a reference network device, a measurement network device 1, and a measurement network device 2. The at least one phase difference includes: a phase difference between a phase obtained by the terminal device by measuring a positioning reference signal sent by the reference network device and a phase obtained by the terminal device by measuring a positioning reference signal sent by the measurement network device 1, and a phase difference between a phase obtained by the terminal device by measuring a positioning reference signal sent by the reference network device and a phase obtained by the terminal device by measuring a positioning reference signal sent by the measurement network device 2.

Based on the first aspect or the second aspect, in a second implementation of this application, the at least one first network device includes one first network device; and the at least one phase difference includes at least one of the following:

a phase difference between phases obtained by the terminal device by measuring positioning reference signals sent by the first network device at different moments; or

a phase difference between channel first path phases obtained by the terminal device by measuring positioning reference signals sent by the first network device at different moments; or

a phase difference, at a same frequency, between frequency domain channel coefficients obtained by the terminal device by measuring positioning reference signals sent by the first network device at different moments.

In this implementation, a specific form of the at least one phase difference is provided above. For example, in a scenario in which a synchronization error between the terminal device and the first network device is fixed at different moments, the terminal device reports the phase difference to eliminate a radio frequency initial phase of the terminal device and the synchronization error between the terminal device and the first network device. This helps the second network device determine positions of the terminal device at different moments by using the phase difference reported by the terminal device. In this way, high-accuracy positioning on the terminal device is implemented. For example, the at least one phase difference includes P phase differences 3. An $a^{th}$ phase difference 3 in the P phase differences 3 is a phase difference between a phase obtained by the terminal device by measuring a positioning reference signal sent by the first network device at an $a^{th}$ moment and a phase obtained by the terminal device by measuring a positioning reference signal sent by the first network device at an $(a+1)^{th}$ moment. Alternatively, an $a^{th}$ phase difference 3 is a phase difference between a channel first path phase obtained by the terminal device by measuring a positioning reference signal sent by the first network device at an $a^{th}$ moment and a channel first path phase obtained by the terminal device by measuring a positioning reference signal sent by the first network device at an $(a+1)^{th}$ moment. Alternatively, an $a^{th}$ phase difference 3 is a phase difference, at a same frequency, between a frequency domain channel coefficient obtained by the terminal device by measuring a positioning reference signal sent by the first network device at an $a^{th}$ moment and a frequency domain channel coefficient obtained by the terminal device by measuring a positioning reference signal sent by the first network device at an $(a+1)^{th}$ moment.

Based on the first aspect or the second aspect, in a third implementation of this application, the at least one first network device includes a reference network device and at least one measurement network device; and the first information includes at least one of the following: at least one first cumulative phase difference or at least one first equivalent distance change amount;

the at least one first cumulative phase difference includes at least one of the following:

a cumulative amount, in terms of time, of a phase difference between a phase obtained by the terminal device by measuring a positioning reference signal sent by the reference network device and a phase obtained by the terminal device by measuring a positioning reference signal sent by the at least one measurement network device; or

a cumulative amount, in terms of time, of a phase difference between a channel first path phase obtained by the terminal device by measuring a positioning reference signal sent by the reference network device and a channel first path phase obtained by the terminal device by measuring a positioning reference signal sent by the at least one measurement network device; or

a cumulative amount, in terms of time, of a phase difference, at a same frequency, between a frequency domain channel coefficient obtained by the terminal device by measuring a positioning reference signal sent by the reference network device and a frequency domain channel coefficient obtained by the terminal device by measuring a positioning reference signal sent by the at least one measurement network device; and

the at least one first equivalent distance change amount includes a change amount, in terms of time, of a distance difference between a distance from the terminal device to the reference network device and a distance from the terminal device to the at least one measurement network device.

In this implementation, the terminal device reports at least one of the following to the second network device: the at least one first cumulative phase difference or the at least one first equivalent distance change amount. Therefore, in addition to error impact such as a radio frequency initial phase of the terminal device and synchronization errors between the terminal device and a plurality of first network devices, a cumulative phase deviation caused by a linear drift of each first network device in terms of time can be further eliminated. Then, the second network device performs positioning on the terminal device with reference to the first information reported by the terminal device. This implements compensation for a synchronization error between different first network devices, thereby implementing high-accuracy positioning on the terminal device.

For example, the at least one first network device includes a reference network device and N measurement network devices, and the at least one first cumulative phase difference includes N first cumulative phase differences. An $i^{th}$ first cumulative phase difference in the N first cumulative phase differences is a difference between an $i^{th}$ phase difference 1 in N phase differences 1 and an $i^{th}$ phase difference 2 in N phase differences 2. The $i^{th}$ phase difference 1 in the N phase differences 1 is a phase difference between a phase obtained by the terminal device by measuring a positioning reference signal sent by an $i^{th}$ measurement network device in the N measurement network devices at a first moment and a phase obtained by the terminal device by measuring a positioning reference signal sent by the reference network device at the first moment; or the $i^{th}$ phase difference 1 in the N phase differences 1 is a phase difference between a channel first path phase obtained by the terminal device by measuring a positioning reference signal sent by an $i^{th}$ measurement network device in the N measurement network devices at a first moment and a channel first path phase obtained by the terminal device by measuring a positioning reference signal sent by the reference network device at the first moment; or the $i^{th}$ phase difference 1 in the N phase differences 1 is a phase difference, at a same frequency, between a frequency domain channel coefficient obtained by the terminal device by measuring a positioning reference signal sent by an $i^{th}$ measurement network device in the N measurement network devices at a first moment and a frequency domain channel coefficient obtained by the terminal device by measuring a positioning reference signal sent by the reference network device at the first moment. The $i^{th}$ phase difference 2 in the N phase differences 2 is a phase difference between a phase obtained by the terminal device by measuring a positioning reference signal sent by the $i^{th}$ measurement network device in the N measurement network devices at a second moment and a phase obtained by the terminal device by measuring a positioning reference signal sent by the reference network device at the second moment. Alternatively, the $i^{th}$ phase difference 2 in the N phase differences 2 is a phase difference between a channel first path phase obtained by the terminal device by measuring a positioning reference signal sent by the $i^{th}$ measurement network device in the N measurement network devices at a second moment and a channel first path phase obtained by the terminal device by measuring a positioning reference signal sent by the reference network device at the second moment. Alternatively, the $i^{th}$ phase difference 2 in the N phase differences 2 is a phase difference, at a same frequency, between a frequency domain channel coefficient obtained by the terminal device by measuring a positioning reference signal sent by the $i^{th}$ measurement network device in the N measurement network devices at a second moment and a frequency domain channel coefficient obtained by the terminal device by measuring a positioning reference signal sent by the reference network device at the second moment. N is an integer greater than or equal to 1, and i is an integer greater than or equal to 1 and less than or equal to N.

For example, the at least one first equivalent distance change amount includes N first equivalent distance change amounts, and an $i^{th}$ first equivalent distance change amount in the N first equivalent distance change amounts is a difference between a difference between distances from the terminal device to the reference network device and the $i^{th}$ measurement network device at a first moment $t_1$ and a difference between distances from the terminal device to the reference network device and the $i^{th}$ measurement network device at a second moment $t_{10}$. N is an integer greater than or equal to 1, and i is an integer greater than or equal to 1.

Based on the third implementation of this application, in a fourth implementation of this application, the at least one first equivalent distance change amount is determined based on the at least one first cumulative phase difference.

In this implementation, the at least one first equivalent distance change amount may be determined with reference to the at least one first cumulative phase difference. For example, the terminal device determines the at least one first cumulative phase difference based on the at least one phase difference. Then, the terminal device determines the at least one first equivalent distance change amount based on the at least one first cumulative phase difference and a wavelength that is used by the at least one first network device to send the positioning reference signal.

Based on the first aspect or the second aspect, in a fifth implementation of this application, the at least one first network device includes a reference network device and at least one measurement network device; and the first information includes at least one of the following: at least one first cumulative phase difference rate or at least one first equivalent distance change rate;

the at least one first cumulative phase difference rate includes at least one of the following:

a cumulative amount, in terms of unit time, of a phase difference between a phase obtained by the terminal device by measuring a positioning reference signal sent by the reference network device and a phase obtained by the terminal device by measuring a positioning reference signal sent by the at least one measurement network device; or
a cumulative amount, in terms of unit time, of a phase difference between a channel first path phase obtained by the terminal device by measuring a positioning reference signal sent by the reference network device and a channel first path phase obtained by the terminal device by measuring a positioning reference signal sent by the at least one measurement network device; or

a cumulative amount, in terms of unit time, of a phase difference, at a same frequency, between frequency domain channel coefficients obtained by the terminal device by measuring a positioning reference signal sent by the reference network device and a positioning reference signal sent by the at least one measurement network device; and

the at least one first equivalent distance change rate includes a change amount, in terms of unit time, of a distance difference between a distance from the terminal device to the reference network device and a distance from the terminal device to the at least one measurement network device.

In this implementation, the terminal device reports at least one of the following to the second network device: the at least one first cumulative phase difference rate or the at least one first equivalent distance change rate. In addition to error impact such as a radio frequency initial phase of the terminal device and synchronization errors between the terminal device and a plurality of first network devices, a cumulative phase deviation caused by a linear drift of each first network device in terms of time can be further eliminated. Then, the second network device performs positioning on the terminal device with reference to the first information reported by the terminal device. This implements compensation for a synchronization error between different first network devices, thereby implementing high-accuracy positioning on the terminal device.

For example, the at least one first cumulative phase difference rate includes N first cumulative phase difference rates. The N first cumulative phase difference rates are equal to an $i^{th}$ first cumulative phase difference in N first cumulative phase differences divided by a time interval between a first moment $t_1$ and a second moment $t_{10}$. The $i^{th}$ first cumulative phase difference rate indicates a cumulative amount, in terms of unit time, of a phase difference between a phase obtained by the terminal device by measuring a positioning reference signal sent by the reference network device and a phase obtained by the terminal device by measuring a positioning reference signal sent by an $i^{th}$ measurement network device. Alternatively, the $i^{th}$ first cumulative phase difference rate indicates a cumulative amount, in terms of unit time, of a phase difference between a channel first path phase obtained by the terminal device by measuring a positioning reference signal sent by the reference network device and a channel first path phase obtained by the terminal device by measuring a positioning reference signal sent by an $i^{th}$ measurement network device. Alternatively, the $i^{th}$ first cumulative phase difference rate indicates a cumulative amount, in terms of unit time, of a phase difference, at a same frequency, between a frequency domain channel coefficient obtained by the terminal device by measuring a positioning reference signal sent by the reference network device and a frequency domain channel coefficient obtained by the terminal device by measuring a positioning reference signal sent by an $i^{th}$ measurement network device.

For example, the at least one first equivalent distance change rate includes N first equivalent distance change rates. An $i^{th}$ first equivalent distance change rate in the N first equivalent distance change rates is equal to an $i^{th}$ first equivalent distance change amount in N first equivalent distance change amounts divided by the time interval between the first moment $t_1$ and the second moment $t_{10}$.

Based on the fifth implementation of this application, in a sixth implementation of this application, the at least one first equivalent distance change rate is determined based on the at least one first cumulative phase difference rate.

In this implementation, the at least one first equivalent distance change rate may be determined with reference to the at least one first cumulative phase difference rate. For example, the terminal device determines the at least one first cumulative phase difference rate based on the at least one phase difference. Then, the terminal device determines the at least one first equivalent distance change amount based on the at least one first cumulative phase difference rate and a wavelength that is used by the at least one first network device to send the positioning reference signal.

Based on the first aspect or the second aspect, in a seventh implementation of this application, the at least one first network device includes one first network device;

the first information includes at least one of the following: at least one second cumulative phase difference or at least one second equivalent distance change amount;
the at least one second cumulative phase difference includes at least one of the following:

a cumulative amount, in terms of time, of a phase difference between phases obtained by the terminal device by measuring positioning reference signals sent by the first network device at different moments; or
a cumulative amount, in terms of time, of a phase difference between channel first path phases obtained by the terminal device by measuring positioning reference signals sent by the first network device at different moments; or
a cumulative amount, in terms of time, of a phase difference, at a same frequency, between frequency domain channel coefficients obtained by the terminal device by measuring positioning reference signals sent by the first network device at different moments; and

the at least one second equivalent distance change amount includes a change amount, in terms of time, of a distance difference between distances from the terminal device to the first network device at different moments.

In this implementation, the terminal device reports at least one of the following to the second network device: the at least one second cumulative phase difference or the at least one second equivalent distance change amount. In this method, based on a characteristic that a time drift error included in a phase difference changes linearly in terms of time, impact of the time drift error is eliminated through differentiation based on the phase difference. The phase difference can eliminate a radio frequency initial phase of the terminal device and a synchronization error between the terminal device and the first network device. The second cumulative phase difference can further eliminate the impact of the time drift error. The second network device can implement high-accuracy positioning on the terminal device based on the at least one second cumulative phase difference or the at least one second equivalent distance change amount reported by the terminal device.

For example, the at least one first network device includes one first network device, and the at least one phase difference includes P phase differences 3. For the P phase differences 3, refer to the foregoing related descriptions. The at least one second cumulative phase difference includes M second cumulative phase differences. An $a^{th}$ second cumulative phase difference in the M second cumulative phase differences is a difference between an $a^{th}$ phase difference 3 in the P phase differences 3 and an $(a+1)^{th}$ phase difference 3 in the P phase differences 3. M is an integer greater than or equal to 1, and a is an integer greater than or equal to 1. The $a^{th}$ phase difference 3 is a phase difference between a phase obtained by the terminal device by measuring a positioning reference signal sent by the first network device at an $a^{th}$ moment and a phase obtained by the terminal device by measuring a positioning reference signal sent by the first network device at an $(a+1)^{th}$ moment. The $(a+1)^{th}$ phase difference 3 is a phase difference between the phase obtained by the terminal device by measuring the positioning reference signal sent by the first network device at the $(a+1)^{th}$ moment and a phase obtained by the terminal device by measuring a positioning reference signal sent by the first network device at an $(a+2)^{th}$ moment.

Based on the seventh implementation of this application, in an eighth implementation of this application, the at least one second equivalent distance change amount is determined based on the at least one second cumulative phase difference.

In this implementation, the at least one second equivalent distance change amount may be determined with reference to the at least one second cumulative phase difference. For example, the terminal device determines the at least one second cumulative phase difference based on the at least one phase difference. Then, the terminal device determines the at least one second equivalent distance change amount based on the at least one second cumulative phase difference and a wavelength that is used by the at least one first network device to send the positioning reference signal.

Based on the first aspect or the second aspect, in a ninth implementation of this application, the at least one first network device includes one first network device; and the first information includes at least one of the following: at least one second cumulative phase difference rate or at least one second equivalent distance change rate;

the at least one second cumulative phase difference rate includes at least one of the following:

a cumulative amount, in terms of unit time, of a phase difference between phases obtained by the terminal device by measuring positioning reference signals sent by the first network device at different moments; or

a cumulative amount, in terms of unit time, of a phase difference between channel first path phases obtained by the terminal device by measuring positioning reference signals sent by the first network device at different moments; or

a cumulative amount, in terms of unit time, of a phase difference, at a same frequency, between frequency domain channel coefficients obtained by the terminal device by measuring positioning reference signals sent by the first network device at different moments; and

the at least one second equivalent distance change rate is a change amount, in terms of unit time, of a distance difference between distances from the terminal device to the first network device at different moments.

In this implementation, the terminal device reports at least one of the following to the second network device: the at least one second cumulative phase difference rate or the at least one second equivalent distance change rate. In this method, based on a characteristic that a time drift error included in a phase difference changes linearly in terms of time, impact of the time drift error is eliminated through differentiation based on the phase difference. The phase difference can eliminate a radio frequency initial phase of the terminal device and a synchronization error between the terminal device and the first network device. The second cumulative phase difference rate can further eliminate the impact of the time drift error. The second network device can implement high-accuracy positioning on the terminal device based on the at least one second cumulative phase difference rate or the at least one second equivalent distance change rate reported by the terminal device.

For example, the at least one second cumulative phase difference rate includes M second cumulative phase difference rates. The M second cumulative phase difference rates are equal to an $a^{th}$ second cumulative phase difference in M second cumulative phase differences divided by a time interval between a moment $t_a$ and a moment $t_{a+2}$.

For example, the at least one second equivalent distance change rate includes M second equivalent distance change rates. An $a^{th}$ second equivalent distance change rate in the M second equivalent distance change rates is equal to M second equivalent distance change amounts divided by the time interval between the moment $t_a$ and the moment $t_{a+2}$.

Based on the ninth implementation of this application, in a tenth implementation of this application, the at least one second equivalent distance change rate is determined based on the at least one second cumulative phase difference rate.

In this implementation, the at least one second equivalent distance change rate may be determined with reference to the at least one second cumulative phase difference rate. For example, the terminal device determines the at least one second cumulative phase difference rate based on the at least one phase difference. Then, the terminal device determines the at least one second equivalent distance change rate based on the at least one second cumulative phase difference rate and a wavelength that is used by the at least one first network device to send the positioning reference signal.

Based on any one of the second aspect of this application and the first implementation of this application to the tenth implementation of this application, in an eleventh implementation of this application, that the second network device performs positioning on the terminal device based on the first information includes:

the second network device performs positioning on the terminal device based on the first information and at least one phase deviation, where the at least one phase deviation includes a phase deviation between different first network devices in the at least one first network device that is obtained by a calibration terminal device by measuring the positioning reference signal sent by the at least one first network device, and the at least one phase deviation is reported by the calibration terminal device.

In this implementation, the second network device may further perform positioning on the terminal device with reference to the at least one phase deviation. The at least one phase deviation is used to eliminate error impact such as a radio frequency initial phase of the terminal device and synchronization errors between the terminal device and a plurality of first network devices. Thus, the second network device compensates for a synchronization error between first network devices. In this way, high-accuracy positioning on the terminal device is implemented.

Based on the eleventh implementation, in a twelfth implementation of this application, the method further includes: The second network device receives the at least one phase deviation from the calibration terminal device.

Based on any one of the second aspect of this application and the first implementation of this application to the tenth implementation of this application, in a thirteenth implementation of this application, that the second network device performs positioning on the terminal device based on the first information includes:

the second network device performs positioning on the terminal device based on the first information and at least one cumulative phase deviation, where the at least one cumulative phase deviation includes a cumulative amount, in terms of time, of a phase deviation between different first network devices in the at least one first network device that is obtained by a calibration terminal device by measuring the positioning reference signal sent by the at least one first network device, and the at least one cumulative phase deviation is reported by the calibration terminal device.

In this implementation, the second network device may further perform positioning on the terminal device with reference to the at least one cumulative phase deviation. Therefore, in addition to error impact such as a radio frequency initial phase of the terminal device and synchronization errors between the terminal device and a plurality of first network devices, a cumulative phase deviation caused by a linear drift of each first network device in terms of time can be further eliminated. Then, the second network device performs positioning on the terminal device with reference to the first information reported by the terminal device and the at least one cumulative phase deviation. This implements compensation for a synchronization error between different first network devices, thereby implementing high-accuracy positioning on the terminal device.

Based on the thirteenth implementation, in a fourteenth implementation of this application, the method further includes: The second network device receives the at least one cumulative phase deviation from the calibration terminal device.

A third aspect of this application provides a terminal device, including:

a processing module, configured to measure a positioning reference signal sent by at least one first network device, to obtain at least one phase difference; and
a transceiver module, configured to send first information to a second network device, where the first information includes the at least one phase difference, or the first information is determined based on the at least one phase difference.

A fourth aspect of this application provides a second network device, including:

a transceiver module, configured to receive first information from a terminal device, where the first information includes at least one phase difference, or the first information is determined based on the at least one phase difference, and the at least one phase difference is obtained by the terminal device by measuring a positioning reference signal sent by at least one first network device; and

a processing module, configured to perform positioning on the terminal device based on the first information.

Based on the third aspect or the fourth aspect, in a first implementation of this application, the at least one first network device includes a reference network device and at least one measurement network device; and the at least one phase difference includes at least one of the following:

a phase difference between a phase obtained by the terminal device by measuring a positioning reference signal sent by the reference network device and a phase obtained by the terminal device by measuring a positioning reference signal sent by the at least one measurement network device; or
a phase difference between a channel first path phase obtained by the terminal device by measuring a positioning reference signal sent by the reference network device and a channel first path phase obtained by the terminal device by measuring a positioning reference signal sent by the at least one measurement network device; or
a phase difference, at a same frequency, between a frequency domain channel coefficient obtained by the terminal device by measuring a positioning reference signal sent by the reference network device and a frequency domain channel coefficient obtained by the terminal device by measuring a positioning reference signal sent by the at least one measurement network device.

Based on the third aspect or the fourth aspect, in a second implementation of this application, the at least one first network device includes one first network device; and the at least one phase difference includes at least one of the following:

a phase difference between phases obtained by the terminal device by measuring positioning reference signals sent by the first network device at different moments; or
a phase difference between channel first path phases obtained by the terminal device by measuring positioning reference signals sent by the first network device at different moments; or
a phase difference, at a same frequency, between frequency domain channel coefficients obtained by the terminal device by measuring positioning reference signals sent by the first network device at different moments.

Based on the third aspect or the fourth aspect, in a third implementation of this application, the at least one first network device includes a reference network device and at least one measurement network device; and the first information includes at least one of the following: at least one first cumulative phase difference or at least one first equivalent distance change amount;
the at least one first cumulative phase difference includes at least one of the following:

a cumulative amount, in terms of time, of a phase difference between a phase obtained by the terminal device by measuring a positioning reference signal sent by the reference network device and a phase obtained by the terminal device by measuring a positioning reference signal sent by the at least one measurement network device; or
a cumulative amount, in terms of time, of a phase difference between a channel first path phase obtained by the terminal device by measuring a positioning reference signal sent by the reference network device and a channel first path phase obtained by the terminal device by measuring a positioning reference signal sent by the at least one measurement network device; or
a cumulative amount, in terms of time, of a phase difference, at a same frequency, between a frequency domain channel coefficient obtained by the terminal device by measuring a positioning reference signal sent by the reference network device and a frequency domain channel coefficient obtained by the terminal device by measuring a positioning reference signal sent by the at least one measurement network device; and
the at least one first equivalent distance change amount includes a change amount, in terms of time, of a distance difference between a distance from the terminal device to the reference network device and a distance from the terminal device to the at least one measurement network device.

Based on the third implementation of this application, in a fourth implementation of this application, the at least one first equivalent distance change amount is determined based on the at least one first cumulative phase difference.
Based on the third aspect or the fourth aspect, in a fifth implementation of this application, the at least one first network device includes a reference network device and at least one measurement network device; and the first information includes at least one of the following: at least one first cumulative phase difference rate or at least one first equivalent distance change rate;
the at least one first cumulative phase difference rate includes at least one of the following:

a cumulative amount, in terms of unit time, of a phase difference between a phase obtained by the terminal device by measuring a positioning reference signal sent by the reference network device and a phase obtained by the terminal device by measuring a positioning reference signal sent by the at least one measurement network device; or

a cumulative amount, in terms of unit time, of a phase difference between a channel first path phase obtained by the terminal device by measuring a positioning reference signal sent by the reference network device and a channel first path phase obtained by the terminal device by measuring a positioning reference signal sent by the at least one measurement network device; or

a cumulative amount, in terms of unit time, of a phase difference, at a same frequency, between frequency domain channel coefficients obtained by the terminal device by measuring a positioning reference signal sent by the reference network device and a positioning reference signal sent by the at least one measurement network device; and

the at least one first equivalent distance change rate includes a change amount, in terms of unit time, of a distance difference between a distance from the terminal device to the reference network device and a distance from the terminal device to the at least one measurement network device.

Based on the fifth implementation of this application, in a sixth implementation of this application, the at least one first equivalent distance change rate is determined based on the at least one first cumulative phase difference rate.

Based on the third aspect or the fourth aspect, in a seventh implementation of this application, the at least one first network device includes one first network device;

the first information includes at least one of the following: at least one second cumulative phase difference or at least one second equivalent distance change amount;

the at least one second cumulative phase difference includes at least one of the following:

a cumulative amount, in terms of time, of a phase difference between phases obtained by the terminal device by measuring positioning reference signals sent by the first network device at different moments; or

a cumulative amount, in terms of time, of a phase difference between channel first path phases obtained by the terminal device by measuring positioning reference signals sent by the first network device at different moments; or

a cumulative amount, in terms of time, of a phase difference, at a same frequency, between frequency domain channel coefficients obtained by the terminal device by measuring positioning reference signals sent by the first network device at different moments; and

the at least one second equivalent distance change amount includes a change amount, in terms of time, of a distance difference between distances from the terminal device to the first network device at different moments.

Based on the seventh implementation of this application, in an eighth implementation of this application, the at least one second equivalent distance change amount is determined based on the at least one second cumulative phase difference.

Based on the third aspect or the fourth aspect, in a ninth implementation of this application, the at least one first network device includes one first network device; and the first information includes at least one of the following: at least one second cumulative phase difference rate or at least one second equivalent distance change rate;

the at least one second cumulative phase difference rate includes at least one of the following:

a cumulative amount, in terms of unit time, of a phase difference between phases obtained by the terminal device by measuring positioning reference signals sent by the first network device at different moments; or

a cumulative amount, in terms of unit time, of a phase difference between channel first path phases obtained by the terminal device by measuring positioning reference signals sent by the first network device at different moments; or

a cumulative amount, in terms of unit time, of a phase difference, at a same frequency, between frequency domain channel coefficients obtained by the terminal device by measuring positioning reference signals sent by the first network device at different moments; and

the at least one second equivalent distance change rate is a change amount, in terms of unit time, of a distance difference between distances from the terminal device to the first network device at different moments.

Based on the ninth implementation of this application, in a tenth implementation of this application, the at least one second equivalent distance change rate is determined based on the at least one second cumulative phase difference rate.

Based on any one of the fourth aspect of this application and the first implementation of this application to the tenth implementation of this application, in an eleventh implementation of this application, the processing module is specifically configured to:

perform positioning on the terminal device based on the first information and at least one phase deviation, where the at least one phase deviation includes a phase deviation between different first network devices in the at least one first network device that is obtained by a calibration terminal device by measuring the positioning reference signal sent by the at least one first network device, and the at least one phase deviation is reported by the calibration terminal device.

Based on the eleventh implementation, in a twelfth implementation of this application, the transceiver module is further configured to:

receive the at least one phase deviation from the calibration terminal device.

Based on any one of the fourth aspect of this application and the first implementation of this application to the tenth implementation of this application, in a thirteenth implementation of this application, the processing module is specifically configured to:

perform positioning on the terminal device based on the first information and at least one cumulative phase deviation, where the at least one cumulative phase deviation includes a cumulative amount, in terms of time, of a phase deviation between different first network devices in the at least one first network device that is obtained by a calibration terminal device by measuring the positioning reference signal sent by the at least one first network device, and the at least one cumulative phase deviation is reported by the calibration terminal device.

Based on the thirteenth implementation, in a fourteenth implementation of this application, the transceiver module is further configured to:

receive the at least one cumulative phase deviation from the calibration terminal device.

A fifth aspect of this application provides a communication apparatus. The communication apparatus includes a processor. The processor is configured to invoke and run a computer program stored in a memory, so that the processor implements any implementation of either of the first aspect and the second aspect.

Optionally, the communication apparatus further includes a transceiver. The processor is further configured to control the transceiver to send and receive signals.

Optionally, the communication apparatus includes the memory, and the memory stores the computer program.

A sixth aspect of this application provides a computer program product including instructions. When the computer program product runs on a computer, the computer is enabled to perform any implementation of the first aspect and the second aspect.

A seventh aspect of this application provides a computer-readable storage medium, including computer instructions. When the computer instructions are run on a computer, the computer is enabled to perform any implementation of the first aspect and the second aspect.

An eighth aspect of this application provides a chip apparatus, including a processor, configured to be connected to a memory, and invoke a program stored in the memory, to enable the processor to perform any implementation of the first aspect and the second aspect.

A ninth aspect of this application provides a communication system. The communication system includes the terminal device according to the third aspect and the second network device according to the fourth aspect.

According to the foregoing technical solutions, it can be learned that embodiments of this application have the following advantages.

In the foregoing technical solutions, the terminal device measures the positioning reference signal sent by the at least one first network device, to obtain the at least one phase difference. Then, the terminal device sends the first information to the second network device, where the first information includes the at least one phase difference, or the first information is determined based on the at least one phase difference. The at least one phase difference can eliminate a synchronization error between the terminal device and the first network device and a synchronization error between different first network devices. This helps the second network device perform accurate positioning on the terminal device with reference to the first information. For example, in a cellular communication system, the second network device can perform accurate positioning on the terminal device according to the technical solution in this application. This avoids a problem that positioning accuracy is reduced due to the synchronization error between the terminal device and the first network device and the synchronization error between different first network devices.

**BRIEF DESCRIPTION OF DRAWINGS**

FIG. 1 is a diagram of a communication system according to an embodiment of this application;

FIG. 2 is another diagram of a communication system according to an embodiment of this application;

FIG. 3 is another diagram of a communication system according to an embodiment of this application;

FIG. 4A is a diagram of sending and receiving of a positioning reference signal according to an embodiment of this application;

FIG. 4B is a diagram of a principle of obtaining a phase by a terminal device by measuring a positioning reference signal sent by a first network device according to an embodiment of this application;

FIG. 4C is a diagram in which a terminal device obtains a transmission path between the terminal device and a first network device by using a channel between the terminal device and the first network device according to an embodiment of this application;

FIG. 4D is a diagram of a transmission path between a terminal device and a base station according to an embodiment of this application;

FIG. 5 is a diagram of a scenario in which positioning is performed on a terminal device by using a phase-based positioning technology according to an embodiment of this application;

FIG. 6 is a diagram of an embodiment of a positioning information determining method and a positioning method according to an embodiment of this application;

FIG. 7 is a diagram of another scenario in which positioning is performed on a terminal device by using a phase-based positioning technology according to an embodiment of this application;

FIG. 8 is a diagram of another scenario in which positioning is performed on a terminal device by using a phase-based positioning technology according to an embodiment of this application;

FIG. 9 is a diagram of another scenario in which positioning is performed on a terminal device by using a phase-based positioning technology according to an embodiment of this application;

FIG. 10 is a diagram of another scenario in which positioning is performed on a terminal device by using a phase-based positioning technology according to an embodiment of this application;

FIG. 11 is a diagram of a moment at which a terminal device measures a positioning reference signal according to an embodiment of this application;

FIG. 12 is a diagram of a structure of a communication apparatus according to an embodiment of this application;

FIG. 13 is a diagram of another structure of a communication apparatus according to an embodiment of this application;

FIG. 14 is a diagram of a structure of a terminal device according to an embodiment of this application; and

FIG. 15 is a diagram of another structure of a communication apparatus according to an embodiment of this application.

## DESCRIPTION OF EMBODIMENTS

Embodiments of this application provide a positioning information determining method, a positioning method, and a related apparatus, to improve positioning accuracy.

The following clearly and completely describes the technical solutions in embodiments of this application with reference to the accompanying drawings in embodiments of this application. It is clear that the described embodiments are merely some but not all of embodiments of this application. Based on embodiments of this application, all other embodiments obtained by a person skilled in the art without creative efforts fall within the protection scope of this application.

Reference to "an embodiment", "some embodiments", or the like described in this application indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and variations thereof all mean "including but not limited to", unless otherwise specifically emphasized in another manner.

In descriptions of this application, unless otherwise specified, "/" means "or". For example, A/B may mean A or B. The term "and/or" in this specification is merely an association relationship of associated objects, and indicates that three relationships may exist. For example, A and/or B may indicate the following three cases: Only A exists, both A and B exist, and only B exists. In addition, "at least one" means one or more, and "a plurality of" means two or more. "At least one of the following items (pieces)" or a similar expression thereof refers to any combination of these items, including a single item (piece) or any combination of a plurality of items (pieces). For example, at least one of a, b, or c may represent a, b, c, a and b, a and c, b and c, or a, b, and c. Herein, a, b, and c may be singular or plural.

The technical solutions in this application may be applied to various communication systems, for example, a 5th generation (5th generation, 5G) mobile communication system, a new radio (new radio, NR) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS), a mobile communication system (for example, a 6G mobile communication system) later than a 5G network, a vehicle-to-everything (vehicle-to-everything, V2X) communication system, a device-to-device (device-to-device, D2D) communication system, and the like.

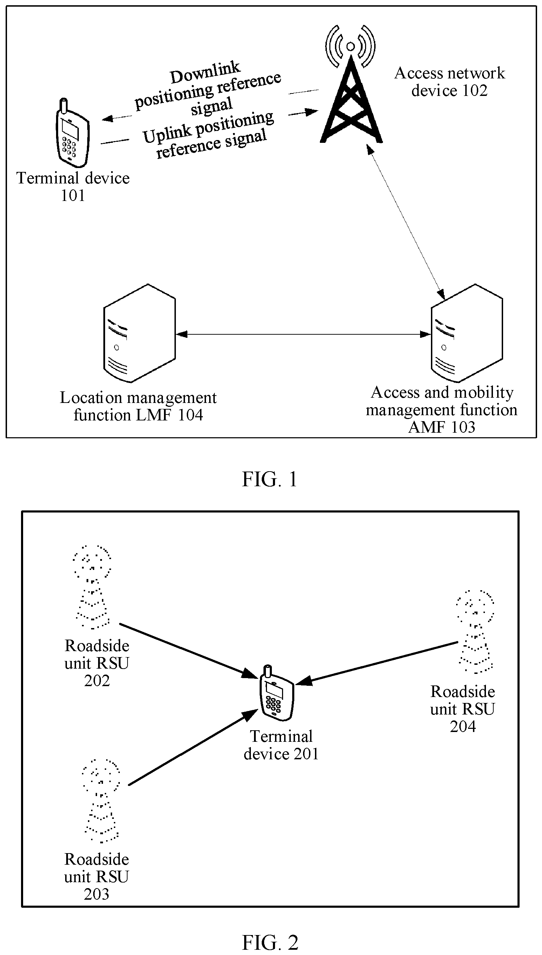

With reference to FIG. 1 to FIG. 3, the following describes some scenarios to which this application is applicable.

FIG. 1 is a diagram of a communication system according to an embodiment of this application. Refer to FIG. 1. The communication system includes a terminal device 101, an access network device 102, an access and mobility management function (access and mobility management function, AMF) 103, and a location management function (location management function, LMF) 104.

Optionally, the terminal device 101 is connected to the access network device 102 through an interface, the access network device is connected to the AMF 103 through an interface, and the AMF 104 is connected to the LMF 104 through an interface. The LMF 104 is configured to perform positioning calculation and management for a position of the terminal device 101. For example, the terminal device 101 is connected to the access network device 103 through a new radio-radio interface between universal terrestrial radio access network and user equipment (new radio the radio interface between universal terrestrial radio access network and the user equipment, NR-Uu) interface, and the access network device 102 is connected to the AMF 103 through a next generation control panel (next generation control plane, NG-C) interface. The AMF 103 is connected to the LMF 104 through an NL1 interface. The NL1 interface is used as a transmission link of an LTE positioning protocol (LTE positioning protocol, LPP) and an NR positioning protocol (NR positioning protocol annex, NRPPa) between the LMF 104 and the AMF 103. The technical solutions of this application are performed between the terminal device 101, the access network device 102, and the LMF 104, so that the LMF 104 implements positioning on the terminal device 101.

FIG. 1 shows only an example in which the communication system includes the access network device 102. However, in actual application, the communication system may further include more access network devices. The technical solutions of this application are performed between the terminal device 101, a plurality of access network devices, and the LMF 104, so that the LMF 104 implements positioning on the terminal device 101. This is not specifically limited in this application.

In the communication system shown in FIG. 1, the LMF is a name in a current communication system. In a future communication system, a name of the LMF may change with evolution of the communication system. The name of the LMF is not limited in this application. For example, the LMF may be referred to as a location management device, and the location management device is configured to perform positioning calculation for a position of the terminal device. In the current communication system or the future communication system, any functional network element that has another name and that has a function similar to that of the LMF may be understood as the location management device in embodiments of this application, and is applicable to a communication method provided in embodiments of this application.

FIG. 2 is another diagram of a communication system according to an embodiment of this application. Refer to FIG. 2. The communication system includes a terminal device 201, a roadside unit (roadside unit, RSU) 202, an RSU 203, and an RSU 204. The terminal device 201 and the RSU 202 to the RSU 204 are located outside a signal coverage area of an access network device. As shown in FIG. 2, the terminal device 201 communicates with the RSU through a prose communication 5 (prose communication 5, PC5) interface. Positioning on the terminal device 201 can be implemented between the terminal device 201 and the RSU according to the technical solutions in this application.

It should be noted that in the communication system shown in FIG. 2, a form of the RSU is merely an example, and is not a specific limitation on the RSU in this application. The RSU is a roadside unit deployed on a roadside, supports sidelink communication and positioning-related protocols, and can provide a wireless communication function for a terminal device. The RSU may be a roadside station, an access point, an access base station, or a sidelink device in various forms. For an access network device, the RSU is a terminal device. For a terminal device, the RSU may serve as an access network device. In other words, the RSU may be a terminal device or an access network device. This is not specifically limited in this application.

The foregoing communication systems to which this application is applicable are merely some examples. In actual application, this application may be further applicable to another communication system with a positioning requirement. This is not specifically limited in this application. The foregoing examples are not intended to limit the technical solutions of this application.

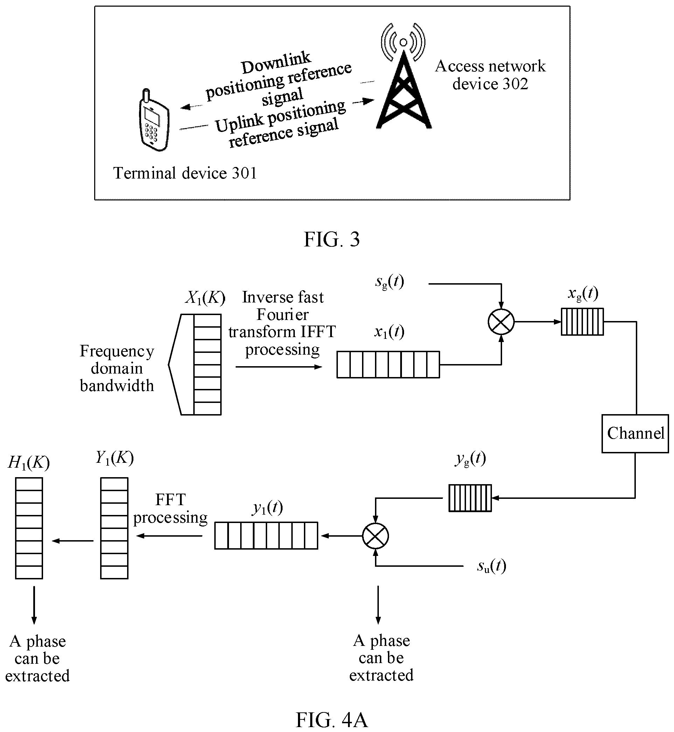

FIG. 3 is another diagram of a communication system according to an embodiment of this application. Refer to FIG. 3. The communication system includes a terminal device 301 and an access network device 302.

Optionally, the terminal device 301 is connected to the access network device 302 through an interface. For example, the terminal device 301 is connected to the access network device 302 through an NR-Uu interface. The technical solutions of this application are performed between the terminal device 301 and the access network device 302, so that the access network device 302 implements positioning on the terminal device 301.

FIG. 3 shows only an example in which the communication system includes the access network device 302. However, in actual application, the communication system may further include more access network devices. The technical solutions of this application are performed between the terminal device 101 and a plurality of access network devices, so that the access network devices implement positioning on the terminal device 301. This is not specifically limited in this application.

The following describes the terminal device and the access network device in this application.

The terminal device may be a wireless terminal device that can receive scheduling and indication information of a network device. The wireless terminal device may be a device that provides voice and/or data connectivity for a user, a handheld device with a wireless connection function, or another processing device connected to a wireless modem.

The terminal device is also referred to as user equipment (user equipment, UE), a mobile station (mobile station, MS), a mobile terminal (mobile terminal, MT), or the like, and is a device that includes a wireless communication function (providing voice/data connectivity for a user), for example, a handheld device or an in-vehicle device that has a wireless connection function. Currently, some examples of the terminal device are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a factory robot, a positioning device in an industrial park, a wireless terminal in industrial control (industrial control), a wireless terminal in the internet of vehicles, a wireless terminal in self-driving (self-driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in the internet of vehicles may be an in-vehicle device, an entire vehicle device, an in-vehicle module, a vehicle, or the like. The wireless terminal in industrial control may be a camera, a robot, or the like.

The network device may be a device in a wireless network. For example, the network device is a device that is deployed in a radio access network and that provides a wireless communication function for the terminal device. For example, the network device may be a radio access network (radio access network, RAN) node that connects the terminal device to the wireless network, and may also be referred to as an access network device.

The network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), or an access point (access point, AP), a wireless relay node, a wireless backhaul node, a transmission point (transmission point, TP), or the like in a wireless fidelity (wireless fidelity, Wi-Fi) system, or may be a network device in a 5G mobile communication system, for example, a next generation NodeB (next generation NodeB, gNB), a transmission reception point (transmission reception point, TRP), or a transmission point (transmission point, TP) in a new radio (new radio, NR) system, or one antenna panel or a group of antenna panels (including a plurality of antenna panels) of a base station in a 5G mobile communication system. Alternatively, the network device may be a network node that forms a gNB or a transmission point, for example, a baseband unit (baseband unit, BBU) or a distributed unit (distributed unit, DU). In some possible specific forms of the network device shown above, the network device shown above is a transceiver node, and the transceiver node may also be referred to as a transmission reception point (transmission and reception point, TRP).

In some deployments, the gNB may include a central unit (centralized unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is finally changed to information at the PHY layer, or is changed from information at the PHY layer. Therefore, in this architecture, higher layer signaling (for example, RRC layer signaling) may be considered to be sent by the DU, or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

A communication system to which this application is applicable includes a terminal device, one or more first network devices, and a second network device. The following describes some possible implementations of the first network device and the second network device.

1. The first network device is an access network device, and the second network device is a location management device.
2. Both the first network device and the second network device are access network devices.
In this implementation, the second network device may be one of the one or more first network devices. In other words, one of the network devices performs positioning on the terminal device.
3. The first network device is an RSU, and the second network device is a location management device.

In this application, with reference to FIG. 4A, the following describes a phase obtained by a terminal device by measuring a positioning reference signal sent by a first network device.

Refer to FIG. 4A. The first network device maps a positioning reference signal $X_1(K)$ in frequency domain. A time domain signal $x_1(t)$ is obtained by performing inverse Fourier transform processing on the positioning reference signal $X_1$ $(K)$. A radio frequency signal $x_g(t)$ is obtained by performing up-conversion processing on the time domain signal $x_1(t)$. The up-conversion processing includes: The first network device multiplies or mixes the time domain signal $x_1(t)$ and a local oscillator signal (or carrier signal or carrier frequency signal) of the first network device. The first network device transmits the radio frequency signal $x_g(t)$.

After channel propagation, a signal received by the terminal device is $y_g(t)$. The terminal device may multiply or mix the received signal $y_g(t)$ and a local oscillator signal (or carrier signal or carrier frequency signal) of the terminal device, to obtain a baseband signal $y_1(t)$.

Therefore, a phase obtained by the terminal device by measuring the positioning reference signal sent by the first network device is a phase difference between a phase obtained by the terminal device by measuring the received local oscillator signal $s_g(t)$ (or carrier signal or carrier frequency signal) of the first network device and a phase obtained by the terminal device by measuring the local oscillator signal $s_u(t)$ (or carrier signal or carrier frequency signal) of the terminal device. Alternatively, a phase obtained by the terminal device by measuring the positioning reference signal sent by the first network device is a phase obtained by the terminal device by measuring the received local oscillator signal $s_g(t)$ (or carrier signal or carrier frequency signal) of the first network device. The local oscillator signal $s_g(t)$ (or carrier signal or carrier frequency signal) of the first network device is used to carry the positioning reference signal $X_1(K)$.

The following describes some possible implementations in which the terminal device obtains a phase by measuring a positioning reference signal sent by one first network device.

Implementation 1: The terminal device extracts, on an intermediate radio frequency by using a phase-locked loop, the phase difference between the received local oscillator signal (or carrier signal or carrier frequency signal) of the first network device and the local oscillator signal (or carrier signal or carrier frequency signal) of the terminal device, that is, performs phase measurement. Certainly, there is another measurement manner. This is not specifically limited in this application. For example, the terminal device obtains, by using a code correlation technology or a cross correlation technology, the phase difference between the local oscillator signal (or carrier signal or carrier frequency signal) of the first network device received by the terminal device and the local oscillator signal (or carrier signal or carrier frequency signal) of the terminal device.

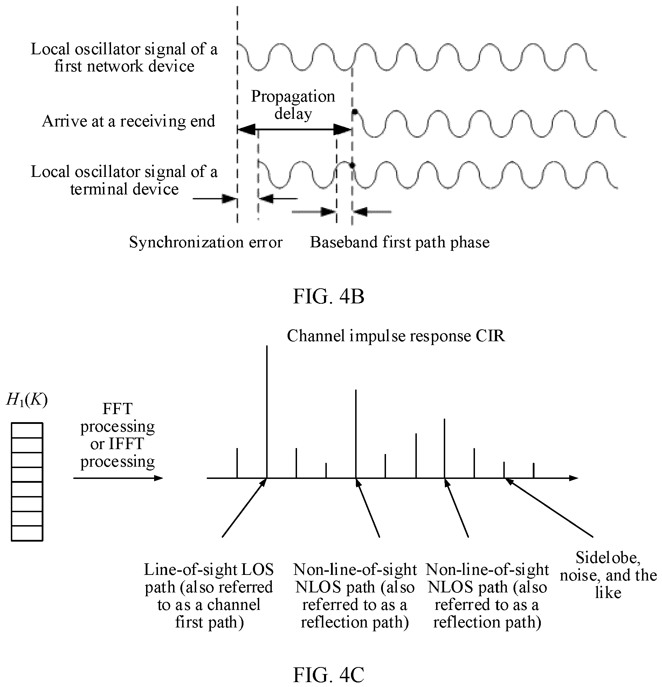

For example, as shown in FIG. 4A and FIG. 4B, the first network device sends the radio frequency signal $x_g(t)$. $x_g$ $(t)$ reaches the terminal device after a specific propagation delay. The terminal device determines the received local oscillator signal $s_g(t)$ of the first network device by using the radio frequency signal $x_g(t)$. The phase difference between the phase obtained by the terminal device by measuring the received local oscillator signal $s_g(t)$ of the first network device and that of the local local oscillator signal of the terminal device is referred to as the phase obtained by the terminal device by measuring the positioning reference signal sent by the first network device. The phase includes information about the propagation delay between a transmitting end and a receiving end (the terminal device and an access network device). Therefore, the terminal device can obtain information about a distance between the transmitting end and the receiving end through calculation based on a phase unwrapping algorithm, and perform position calculation to obtain a position of the terminal device.

It can be learned from Implementation 1 that in this application, the terminal device may obtain the phase by measuring the carrier signal of the first network device that is received by the terminal device. Therefore, the phase obtained by the terminal device by measuring the positioning reference signal sent by the first network device may also be referred to as a carrier phase. In this case, a phase difference below may also be referred to as a carrier phase difference.

Implementation 2: As shown in FIG. 4A, the terminal device obtains the positioning reference signal $Y_1(K)$ by using the radio frequency signal $y_g(t)$. The terminal device performs channel estimation based on the positioning reference signal $Y_1(K)$ and the positioning reference signal $X_1(K)$ used on a first network device side, to obtain a frequency domain channel coefficient. The frequency domain channel coefficient may be a frequency impulse response, a channel coefficient, or a channel frequency response (channel frequency response, CFR). The frequency domain channel coefficient may be represented as $H_1(K)$. The terminal device may extract a phase of a channel coefficient of a specific frequency or a specific subcarrier in the frequency domain channel coefficient.

It can be learned from Implementation 2 that in this application, the terminal device may determine, based on a channel between the terminal device and the first network device, a frequency domain phase of the channel in frequency domain. Therefore, the phase obtained by the terminal device by measuring the positioning reference signal sent by the first network device may also be referred to as a frequency domain phase. In this case, a phase difference below may also be referred to as a frequency domain phase difference.

Implementation 3: As shown in FIG. 4A and FIG. 4C, the terminal device obtains the positioning reference signal $T_1(K)$ by using the radio frequency signal $y_g(t)$. The terminal device performs channel estimation based on the positioning reference signal $T_1(K)$ and the positioning reference signal $X_1(K)$ used on a first network device side, to obtain a frequency domain channel coefficient. The frequency domain channel coefficient may be a frequency impulse response, a channel coefficient, or a channel frequency response. The frequency domain channel coefficient may be represented as $H_1(K)$. The terminal device performs fast Fourier transform (fast Fourier transform, FFT) processing or inverse fast Fourier transform (inverse fast Fourier transform, IFFT) processing on the frequency domain channel coefficient $H_1(K)$ to obtain a time domain channel coefficient (for example, a channel impulse response (channel impulse response, CIR)). The terminal device extracts, from the time domain channel coefficient, a phase of a channel coefficient corresponding to a channel first path.

It can be learned from Implementation 3 that in this application, the terminal device may determine, based on a channel between the terminal device and the first network device, a time domain phase of the channel in time domain or a phase of a channel first path. Therefore, the phase obtained by the terminal device by measuring the positioning reference signal sent by the first network device may also be referred to as a time domain phase or a channel first path phase. In this case, a phase difference below may also be referred to as a time domain phase difference or a channel first path phase difference.

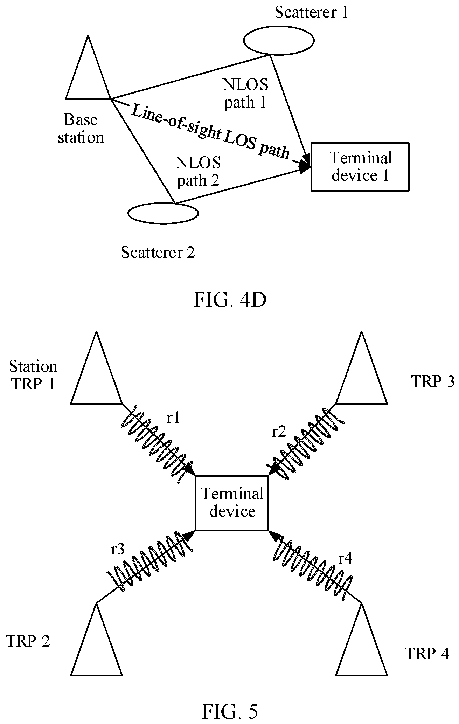

For example, as shown in FIG. 4D, a line-of-sight (line-of-sight, LOS) path or a first path is a line-of-sight path between the terminal device and a base station, that is, a path directly from the first network device to the terminal device. A non-line-of-sight (non-line-of-sight, NLOS) path or a reflection path is a non-line-of-sight path between the terminal device and the base station, that is, a path from the first network device to the terminal device through reflection.

In an actual positioning process, the terminal device may perform positioning in combination with a plurality of first network devices. For example, as shown in FIG. 5, the terminal device may measure positioning reference signals sent by different TRPs to obtain a plurality of phases. The terminal device may construct an equation set by using the plurality of phases, and obtain distances from the terminal device to different TRPs and a position of the terminal device through joint calculation based on a known position of a TRP. In this way, high-accuracy positioning on the terminal device is implemented.

It can be learned that although the phase-based positioning technology can implement high-accuracy positioning, the phase-based positioning technology is relatively sensitive to a synchronization error between different stations (for example, between different TRPs) and a synchronization error between the terminal device and a station. A satellite system is equipped with a high-accuracy atomic clock and a relatively expensive ground calibration station. Therefore, when the phase-based positioning technology is used for positioning in the satellite system, impact of a synchronization error can be eliminated. However, in a cellular communication network, an access network device and a terminal device cannot be equipped with a high-accuracy atomic clock, and a synchronization error between different stations and a synchronization error between the terminal device and a station affect phase measurement accuracy, resulting in limited positioning accuracy. This application provides corresponding technical solutions, to improve positioning accuracy. For details, refer to related descriptions in the following embodiments.

In this application, a name of the positioning reference signal may be positioning reference signal (positioning reference signal, PRS), sounding reference signal (sounding reference signal, SRS), channel state information reference signal (channel status information reference signal, CSI-RS), demodulation reference signal (demodulation reference signal, DMRS), secondary synchronization signal (secondary synchronization signal, SSS), or primary synchronization signal (primary synchronization signal, PSS). This is not specifically limited in this application.

In this application, a same measurement window may also be referred to as a same measurement window occasion (measurement window instance), and a same PRS processing window may also be referred to as a same PRS processing window occasion (PRS processing window instance). A same measurement gap may also be referred to as a same measurement gap occasion (measurement gap instance).

In this application, a channel is derived based on a frequency domain RE occupied by a positioning reference signal resource. The channel may also be referred to as a channel response, a time domain channel response, a time domain channel coefficient, or the like. This is not specifically limited in this application. Therefore, in this application, a channel first path may also be referred to as a first path of a channel response, a first path of a time domain channel response, or a first path of a time domain channel coefficient. The first path may also be referred to as a 1st path, a first path (first path), or a LOS path (LOS path). This is not specifically limited in this application.

The technical solutions of this application are described below with reference to embodiments.

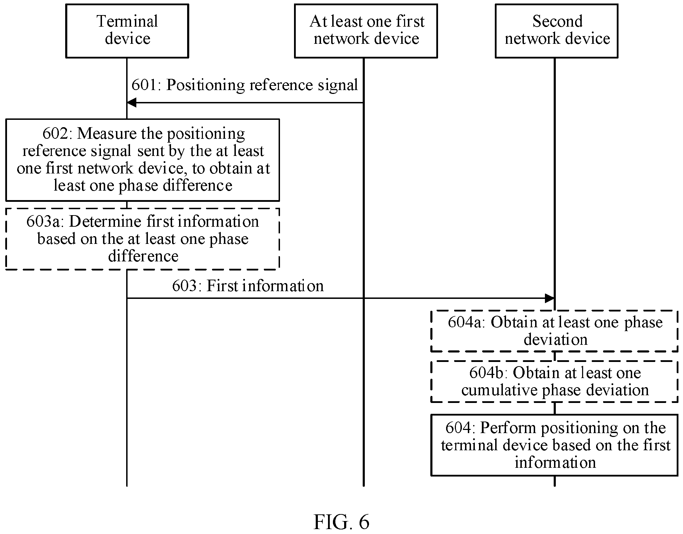

FIG. 6 is a diagram of an embodiment of a positioning information determining method and a positioning method according to an embodiment of this application. Refer to FIG. 6. The method includes the following steps.

601: At least one first network device sends a positioning reference signal to a terminal device. Correspondingly, the terminal device receives the positioning reference signal sent by the at least one first network device.

The following describes some possible implementations in which the at least one first network device sends the positioning reference signal.

Implementation 1: The at least one first network device includes a plurality of first network devices. The plurality of first network devices separately send positioning reference signals to the terminal device at a first moment. Correspondingly, the terminal device receives the positioning reference signals sent by the plurality of first network devices at the first moment. In other words, the positioning reference signal sent by the at least one first network device includes the positioning reference signals sent by the plurality of first network devices to the terminal device at the first moment.

The first moment includes: a time domain symbol, a slot, a sub-slot, a subframe, a system frame, a measurement window (measurement window), a measurement gap (measurement gap), a PRS processing window (PRS processing window), a signal cycle, or an uplink-downlink switching cycle. The time domain symbol may be an orthogonal frequency division multiplexing (orthogonal frequency division multiplexing, OFDM) symbol.

That the plurality of first network devices separately send the positioning reference signals to the terminal device at the first moment indicates that the plurality of first network devices send the positioning reference signals to the terminal device at a same moment. That the terminal device receives the positioning reference signals sent by the plurality of first network devices at the first moment indicates that the terminal receives the positioning reference signals sent by the plurality of first network devices at a same moment. The same moment includes: a same time domain symbol, a same slot, a same sub-slot, a same subframe, a same frame, a same measurement window, a same measurement gap, a same PRS processing window, a same reference signal cycle, a same uplink-downlink switching cycle, or one time interval length. The time interval length includes 1 ms (millisecond), 2 ms, 5 ms, 10 ms, 20 ms, or the like.

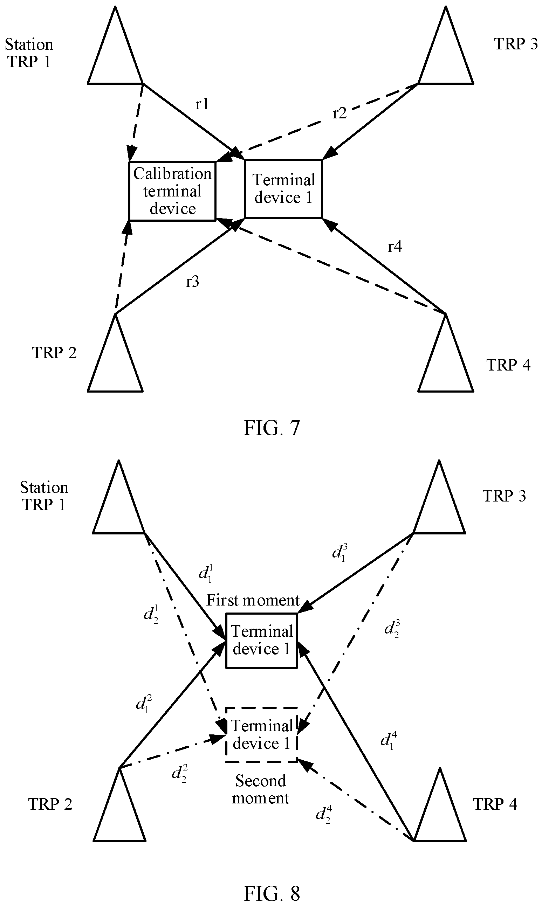

For example, as shown in FIG. 7, the plurality of first network devices include a TRP 1, a TRP 2, a TRP 3, and a TRP 4. The TRP 1, the TRP 2, the TRP 3, and the TRP 4 separately send positioning reference signals to the terminal device at the first moment.

Implementation 2: The at least one first network device includes a plurality of first network devices. The plurality of first network devices separately send positioning reference signals to the terminal device at a plurality of moments. Correspondingly, the terminal device receives the positioning reference signals separately sent by the plurality of first network devices at the plurality of moments. In other words, the positioning reference signal sent by the at least one first network device includes the positioning reference signals separately sent by the plurality of first network devices at the plurality of moments. The following uses an example in which the plurality of moments include a first moment and a second moment for description.

The second moment includes: a time domain symbol, a slot, a sub-slot, a subframe, a system frame, a measurement window, a measurement gap, a PRS processing window, a reference signal cycle, an uplink-downlink switching cycle, or a time interval length. The time interval length includes 1 ms (millisecond), 2 ms, 5 ms, 10 ms, 20 ms, or the like.

For example, as shown in FIG. 7, the plurality of first network devices include a TRP 1, a TRP 2, a TRP 3, and a TRP 4. The TRP 1, the TRP 2, the TRP 3, and the TRP 4 separately send positioning reference signals to the terminal device at the first moment. The TRP 1, the TRP 2, the TRP 3, and the TRP 4 separately send positioning reference signals to the terminal device at the second moment.

Optionally, when the plurality of moments include three or more moments, there may be an equal time interval between any two adjacent moments in the three or more moments. For example, the first moment and the second moment are two adjacent moments. The second moment and a third moment are two adjacent moments. A time interval between the first moment and the second moment is equal to a time interval between the second moment and the third moment. The third moment includes: a time domain symbol, a slot, a sub-slot, a subframe, a system frame, a measurement window, a measurement gap, a PRS processing window, a reference signal cycle, an uplink-downlink switching cycle, or a time interval length. The time interval length includes 1 ms (millisecond), 2 ms, 5 ms, 10 ms, 20 ms, or the like.

Implementation 3: The at least one first network device includes one first network device. The first network device sends positioning reference signals to the terminal device at a plurality of moments. Correspondingly, the terminal device receives the positioning reference signals from the first network device at the plurality of moments. In other words, the positioning reference signal sent by the at least one first network device includes the positioning reference signals sent by the first network device to the terminal device at the plurality of moments. The following uses an example in which the plurality of moments include a first moment, a second moment, and a third moment for description.

In Implementation 3, the at least one first network device alternatively includes more first network devices, and these first network devices separately send positioning reference signals to the terminal device at a plurality of moments. Correspondingly, the terminal device receives, at the plurality of moments, the positioning reference signals sent by these first network devices to the terminal device at the plurality of moments.

Optionally, when the plurality of moments include at least three moments, there may be an equal time interval between any two adjacent moments in the plurality of moments. For example, the first moment and the second moment are two adjacent moments. The second moment and the third moment are two adjacent moments. A time interval between the first moment and the second moment is equal to a time interval between the second moment and the third moment.

It should be noted that positioning reference signals sent by different first network devices may be the same or different. This is not specifically limited in this application.

602: The terminal device measures the positioning reference signal sent by the at least one first network device, to obtain at least one phase difference.

In a possible implementation, the at least one first network device includes a reference network device and at least one measurement network device.

Specifically, the terminal device may select one first network device from the at least one first network device as the reference network device, and a remaining first network device is used as the at least one measurement network device.

Based on the foregoing definition of the phase, optionally, the at least one phase difference includes: a phase difference between a phase of a carrier signal that carries a positioning reference signal of the reference network device and that is received by the terminal device and a phase of a carrier signal that carries a positioning reference signal of the at least one measurement network device and that is received by the terminal device.

Based on the foregoing description, optionally, the at least one phase difference includes: a phase difference obtained by the terminal device based on positioning reference signals sent by the reference network device and the measurement network device at a same moment. The same moment may be the first moment, the second moment, or the third moment. The same moment includes: a same symbol, a same slot, a same sub-slot, a same subframe, a same frame, a same measurement window, a same measurement gap, a same PRS processing window, a same reference signal cycle, a same uplink-downlink switching cycle, or one time interval length. The time interval length includes 1 ms (millisecond), 2 ms, 5 ms, 10 ms, 20 ms, or the like.

In other words, the terminal device obtains, through measurement, the phase difference between the phase of the carrier signal carrying the positioning reference signal of the reference network device and the phase of the carrier signal carrying the positioning reference signal of the at least one measurement network device. The phase difference may be considered to be obtained by the terminal device through measurement at a same moment. Specifically, the terminal device may obtain the phase difference through measurement in a same time domain symbol, a same slot, a same subframe, a same frame, a same measurement window, a same measurement gap, a same PRS processing window, a same reference signal cycle, a same uplink-downlink switching cycle, or one time interval length. The time interval length includes 1 ms (millisecond), 2 ms, 5 ms, 10 ms, 20 ms, or the like.

In this implementation, the at least one phase difference includes at least one of the following:

1. A phase difference between phases obtained by the terminal device by measuring, at a same moment, positioning reference signals separately sent by the reference network device and the at least one measurement network device.

2. A phase difference between channel first path phases obtained by the terminal device by measuring, at a same moment, positioning reference signals separately sent by the reference network device and the at least one measurement network device.

3. A phase difference between first path phases obtained by the terminal device by measuring, at a same moment, positioning reference signals separately sent by the reference network device and the at least one measurement network device.

4. A phase difference, at a same frequency, between frequency domain channel coefficients obtained by the terminal device by measuring, at a same moment, positioning reference signals separately sent by the reference network device and the at least one measurement network device.

Based on the foregoing positioning of the phase, optionally, the at least one phase difference includes a difference between a first phase difference and at least one second phase difference. The first phase difference is a phase difference between a phase of a carrier signal of the terminal device and a phase of a carrier signal that carries a positioning reference signal of the reference network device and that is received by the terminal device. The at least one second phase difference includes a phase difference between the phase of the carrier signal of the terminal device and a phase of a carrier signal that carries a positioning reference signal of the at least one measurement network device and that is received by the terminal device.

The carrier signal may alternatively be a carrier frequency signal or a local oscillator signal. This is not specifically limited in this application.

Based on this implementation, the following describes some possible content included in the at least one phase difference.

The at least one phase difference includes at least one of the following:

1. A phase difference between a phase obtained by the terminal device by measuring a positioning reference signal sent by the reference network device and a phase obtained by the terminal device by measuring a positioning reference signal sent by the at least one measurement network device.
For a specific manner in which the terminal device obtains the phase by measuring the positioning reference signal sent by the first network device, refer to related descriptions of Implementation 1 in step 601.

2. A phase difference between a channel first path phase obtained by the terminal device by measuring a positioning reference signal sent by the reference network device and a channel first path phase obtained by the terminal device by measuring a positioning reference signal sent by the at least one measurement network device.

For a specific manner in which the terminal device obtains the channel first path phase by measuring the positioning reference signal sent by the first network device, refer to related descriptions of Implementation 2 in step 601.

Specifically, the terminal device measures the positioning reference signal sent by the reference network device to obtain the phase of a channel first path between the terminal device and the reference network device. The terminal device measures the positioning reference signal sent by the at least one measurement network device to obtain the phase of a channel first path between the terminal device and the at least one measurement network device. Then, the terminal device determines the at least one phase difference by using the phase of the channel first path between the terminal device and the reference network device and the phase of the channel first path between the terminal device and the at least one measurement network device.

3. A phase difference, at a same frequency, between a frequency domain channel coefficient obtained by the terminal device by measuring a positioning reference signal sent by the reference network device and a frequency domain channel coefficient obtained by the terminal device by measuring a positioning reference signal sent by the at least one measurement network device.

For a specific manner in which the terminal device obtains the frequency domain channel coefficient by measuring the positioning reference signal sent by the first network device, refer to related descriptions of Implementation 3 in step 601.

The frequency domain channel coefficient obtained by the terminal device by measuring the positioning reference signal sent by the reference network device represents an amplitude change and a phase change that occur when the positioning reference signal sent by the reference network device passes through a channel between the terminal device and the reference network device.

The frequency domain channel coefficient obtained by the terminal device by measuring the positioning reference signal sent by the at least one measurement network device represents an amplitude change and a phase change that occur when the positioning reference signal sent by the at least one measurement network device passes through a channel between the terminal device and the at least one measurement network device.

For example, the at least one first network device includes a reference network device and a measurement network device 1. A frequency domain channel coefficient obtained by the terminal device by measuring a positioning reference signal sent by the reference network device is H1(K), and a frequency domain channel coefficient obtained by the terminal device by measuring a positioning reference signal sent by the measurement network device 1 is H2(K). The terminal device extracts a phase A of a first frequency from H1(K), and extracts a phase B of the first frequency from H2(K). The terminal device may determine a phase difference between the phase A and the phase B.

Based on Implementation 1 in step 601, the measurement reference network device and the at least one measurement network device separately send positioning reference signals at the first moment. The at least one phase difference includes at least one of the following:

a phase difference between a phase obtained by the terminal device by measuring a positioning reference signal sent by the measurement reference network device at the first moment and a phase obtained by the terminal device by measuring a positioning reference signal sent by the at least one measurement network device at the first moment; or

a phase difference between a channel first path phase obtained by the terminal device by measuring a positioning reference signal sent by the measurement reference network device at the first moment and a channel first path phase obtained by the terminal device by measuring a positioning reference signal sent by the at least one measurement network device at the first moment; or

a phase difference, at a same frequency, between a frequency domain channel coefficient obtained by the terminal device by measuring a positioning reference signal sent by the measurement reference network device at the first moment and a frequency domain channel coefficient obtained by the terminal device by measuring a positioning reference signal sent by the at least one measurement network device at the first moment.

Optionally, the same frequency may be a same subcarrier, a same carrier frequency, a same carrier aggregation (carrier aggregation, CC), a same bandwidth (band), a same bandwidth part (bandwidth part, BWP), a same frequency layer (frequency layer), a same center frequency, or a same absolute radio frequency channel number (absolute radio frequency channel number, ARFCN). This is not specifically limited in this application.

For example, the at least one first network device includes a reference network device and N measurement network devices. The at least one phase difference includes N phase differences 1.

An $i^{th}$ phase difference 1 in the N phase differences 1 is a phase difference between a phase obtained by the terminal device by measuring a positioning reference signal sent by an $i^{th}$ measurement network device in the N measurement network devices at the first moment and a phase obtained by the terminal device by measuring a positioning reference signal sent by the reference network device at the first moment; or an $i^{th}$ phase difference 1 in the N phase differences 1 is a phase difference between a channel first path phase obtained by the terminal device by measuring a positioning reference signal sent by an $i^{th}$ measurement network device in the N measurement network devices at the first moment and a channel first path phase obtained by the terminal device by measuring a positioning reference signal sent by the reference network device at the first moment; or an $i^{th}$ phase difference 1 in the N phase differences 1 is a phase difference, at a same frequency, between a frequency domain channel coefficient obtained by the terminal device by measuring a positioning reference signal sent by an $i^{th}$ measurement network device in the N measurement network devices at the first moment and a frequency domain channel coefficient obtained by the terminal device by measuring a positioning reference signal sent by the reference network device at the first moment. N is an integer greater than or equal to 1, and i is an integer greater than or equal to 1 and less than or equal to N. In other words, the at least one phase difference is a phase difference obtained by the terminal device by measuring positioning reference signals sent by the at least one first network device at a same moment. Optionally, the at least one phase difference is associated with a same timestamp. Therefore, it is convenient to represent an association between phase differences in the at least one phase difference. In other words, the terminal device obtains the phase difference by measuring positioning reference signals sent by the at least one first network device at a same moment. In this way, a second network device performs positioning on the terminal device based on the at least one phase difference. This helps improve positioning accuracy.

In this implementation, the at least one phase difference includes at least one of the following:

1. A phase difference between phases obtained by the terminal device by measuring, at a same moment, positioning reference signals separately sent by the reference network device and the at least one measurement network device.

2. A phase difference between channel first path phases obtained by the terminal device by measuring, at a same moment, positioning reference signals separately sent by the reference network device and the at least one measurement network device. A channel is derived based on a frequency domain RE occupied by a positioning reference signal.

3. A phase difference between first path phases obtained by the terminal device by measuring, at a same moment, positioning reference signals separately sent by the reference network device and the at least one measurement network device.

4. A phase difference, at a same frequency, between frequency domain channel coefficients obtained by the terminal device by measuring, at a same moment, positioning reference signals separately sent by the reference network device and the at least one measurement network device.

The following provides descriptions by using an example in which the N phase differences 1 include phase differences between a phase obtained by the terminal device by measuring a positioning reference signal sent by the reference network device at the first moment and phases obtained by the terminal device by measuring positioning reference signals sent by the N measurement network devices at the first moment.

For example, as shown in FIG. 7, the reference network device is a TRP 1, and the N measurement network devices include a TRP 2, a TRP 3, and a TRP 4. The at least one phase difference includes: $\varphi_{21}(t_1)$, $\varphi_{31}(t_1)$, and $\varphi_{41}(t_1)$.

$\varphi_{21}(t_1)$ is a phase difference between a phase obtained by the terminal device by measuring a positioning reference signal sent by the TRP 2 at the first moment $t_1$ and a phase obtained by the terminal device by measuring a positioning reference signal sent by the TRP 1 at the first moment $t_1$.

$\varphi_{31}(t_1)$ is a phase difference between a phase obtained by the terminal device by measuring a positioning reference signal sent by the TRP 3 at the first moment $t_1$ and the phase obtained by the terminal device by measuring the positioning reference signal sent by the TRP 1 at the first moment $t_1$.

$\varphi_{41}(t_1)$ is a phase difference between a phase obtained by the terminal device by measuring a positioning reference signal sent by the TRP 4 at the first moment $t_1$ and the phase obtained by the terminal device by measuring the positioning reference signal sent by the TRP 1 at the first moment $t_1$.

Further, based on Implementation 2 in step 601, the reference network device and the at least one measurement network device separately send positioning reference signals at the second moment. The at least one phase difference further includes at least one of the following:

a phase difference between a phase obtained by the terminal device by measuring a positioning reference signal sent by the reference network device at the second moment and a phase obtained by the terminal device by measuring a positioning reference signal sent by the at least one measurement network device at the second moment; or

a phase difference between a channel first path phase obtained by the terminal device by measuring a positioning reference signal sent by the reference network device at the second moment and a channel first path phase obtained by the terminal device by measuring a positioning reference signal sent by the at least one measurement network device at the second moment; or

a phase difference, at a same frequency, between a frequency domain channel coefficient obtained by the terminal device by measuring a positioning reference signal sent by the reference network device at the second moment and a frequency domain channel coefficient obtained by the terminal device by measuring a positioning reference signal sent by the at least one measurement network device at the second moment.

For example, the at least one first network device includes a reference network device and N measurement network devices. The at least one phase difference includes N phase differences 2.

An $i^{th}$ phase difference 2 in the N phase differences 2 is a phase difference between a phase obtained by the terminal device by measuring a positioning reference signal sent by the $i^{th}$ measurement network device in the N measurement network devices at the second moment and a phase obtained by the terminal device by measuring a positioning reference signal sent by the reference network device at the second moment. Alternatively, an $i^{th}$ phase difference 2 in the N phase differences 2 is a phase difference between a channel first path phase obtained by the terminal device by measuring a positioning reference signal sent by the $i^{th}$ measurement network device in the N measurement network devices at the second moment and a channel first path phase obtained by the terminal device by measuring a positioning reference signal sent by the reference network device at the second moment. Alternatively, an $i^{th}$ phase difference 2 in the N phase differences 2 is a phase difference, at a same frequency, between a frequency domain channel coefficient obtained by the terminal device by measuring a positioning reference signal sent by the $i^{th}$ measurement network device in the N measurement network devices at the second moment and a frequency domain channel coefficient obtained by the terminal device by measuring a positioning reference signal sent by the reference network device at the second moment. N is an integer greater than or equal to 1, and i is an integer greater than or equal to 1 and less than or equal to N.

The following provides descriptions by using an example in which the N phase differences 2 include phase differences between a phase obtained by the terminal device by measuring a positioning reference signal sent by the reference network device at the second moment and phases obtained by the terminal device by measuring positioning reference signals sent by the N measurement network devices at the second moment.

For example, as shown in FIG. 7, the reference network device is a TRP 1, and the N measurement network devices include a TRP 2, a TRP 3, and a TRP 4. The at least one phase difference includes: $\varphi_{21}(t_1)$, $\varphi_{31}(t_1)$, $\varphi_{41}(t_1)$, $\varphi_{21}(t_{10})$, $\varphi_{31}(t_{10})$, and $\varphi_{41}(t_{10})$.

$\varphi_{21}(t_1)$ is a phase difference between a phase obtained by the terminal device by measuring a positioning reference signal sent by the TRP 2 at the first moment $t_1$ and a phase obtained by the terminal device by measuring a positioning reference signal sent by the TRP 1 at the first moment $t_1$.

$\varphi_{31}(t_1)$ is a phase difference between a phase obtained by the terminal device by measuring a positioning reference signal sent by the TRP 3 at the first moment $t_1$ and the phase obtained by the terminal device by measuring the positioning reference signal sent by the TRP 1 at the first moment $t_1$.

$\varphi_{41}(t_1)$ is a phase difference between a phase obtained by the terminal device by measuring a positioning reference signal sent by the TRP 4 at the first moment $t_1$ and the phase obtained by the terminal device by measuring the positioning reference signal sent by the TRP 1 at the first moment $t_1$.

$\varphi_{21}(t_{10})$ is a phase difference between a phase obtained by the terminal device by measuring a positioning reference signal sent by the TRP 2 at the second moment $t_{10}$ and a phase obtained by the terminal device by measuring a positioning reference signal sent by the TRP 1 at the second moment $t_{10}$.

$\varphi_{31}(t_{10})$ is a phase difference between a phase obtained by the terminal device by measuring a positioning reference signal sent by the TRP 3 at the second moment $t_{10}$ and the phase obtained by the terminal device by measuring the positioning reference signal sent by the TRP 1 at the second moment $t_{10}$.

$\varphi_{41}(t_{10})$ is a phase difference between a phase obtained by the terminal device by measuring a positioning reference signal sent by the TRP 4 at the second moment $t_{10}$ and the phase obtained by the terminal device by measuring the positioning reference signal sent by the TRP 1 at the second moment $t_{10}$.

In another possible implementation, the at least one first network device includes one or more first network devices.

Based on the foregoing definition of the phase, optionally, the at least one first network device includes one first network device. The at least one phase difference includes a phase difference between a phase of a carrier signal that carries a positioning reference signal sent by the first network device at the first moment and that is received by the terminal device and a phase of a carrier signal that carries a positioning reference signal sent by the first network device at the second moment and that is received by the terminal device.

Based on the foregoing definition of the phase, optionally, the at least one first network device includes one first network device. The at least one phase difference includes a phase difference between a third phase difference and a fourth phase difference. The third phase difference is a phase difference between a phase of a carrier signal of the terminal device and a phase of a carrier signal that carries a positioning reference signal sent by the first network device at the first moment and that is received by the terminal device. The fourth phase difference is a phase difference between the phase of the carrier signal of the terminal device and a phase of a carrier signal that carries a positioning reference signal sent by the first network device at the second moment and that is received by the terminal device.

The carrier signal may alternatively be a carrier frequency signal or a local oscillator signal. This is not specifically limited in this application.

Based on this implementation, the following describes some possible content included in the at least one phase difference.

The at least one phase difference includes at least one of the following:

> 1. A phase difference between phases obtained by the terminal device by measuring positioning reference signals sent by each of the at least one first network device at different moments.

For example, the at least one first network device includes one first network device. The at least one phase difference includes a phase difference between phases obtained by the terminal device by measuring positioning reference signals sent by the first network device at different moments.

For example, the at least one first network device includes a first network device 1. The at least one phase difference includes a phase difference between a phase obtained by the terminal device by measuring a positioning reference signal sent by the first network device 1 at the first moment $t_1$ and a phase obtained by the terminal device by measuring a positioning reference signal sent by the first network device 1 at the second moment $t_{10}$.

Optionally, the at least one phase difference further includes a phase difference between the phase obtained by the terminal device by measuring the positioning reference signal sent by the first network device 1 at the second moment $t_{10}$ and a phase obtained by the terminal device by measuring a positioning reference signal sent by the first network device 1 at the third moment $t_{20}$.

Optionally, a time interval between the first moment $t_1$ and the second moment $t_{10}$ is equal to a time interval between the second moment $t_{10}$ and the third moment $t_{20}$.

2. The at least one phase difference includes: a phase difference between channel first path phases obtained by the terminal device by measuring positioning reference signals sent by each of the at least one first network device at different moments.

For example, the at least one first network device includes one first network device. The at least one phase difference includes a phase difference between channel first path phases obtained by the terminal device by measuring positioning reference signals sent by the first network device at different moments.

For example, the at least one first network device includes a first network device 1. The at least one phase difference includes a phase difference between a channel first path phase obtained by the terminal device by measuring a positioning reference signal sent by the first network device 1 at the first moment $t_1$ and a channel first path phase obtained by the terminal device by measuring a positioning reference signal sent by the first network device 1 at the second moment $t_{10}$.

Optionally, the at least one phase difference further includes a phase difference between the channel first path phase obtained by the terminal device by measuring the positioning reference signal sent by the first network device 1 at the second moment $t_{10}$ and a channel first path phase obtained by the terminal device by measuring a positioning reference signal sent by the first network device 1 at the third moment $t_{20}$.

Optionally, a time interval between the first moment $t_1$ and the second moment $t_{10}$ is equal to a time interval between the second moment $t_{10}$ and the third moment $t_{20}$.

3. The at least one phase difference includes: a phase difference, at a same frequency, between frequency domain channel coefficients obtained by the terminal device by measuring positioning reference signals sent by each of the at least one first network device at different moments.

For example, the at least one first network device includes one first network device. The at least one phase difference includes a phase difference, at a same frequency, between frequency domain channel coefficients obtained by the terminal device by measuring positioning reference signals sent by the first network device at different moments.

Optionally, for the same frequency, refer to the foregoing related descriptions.

For example, the at least one first network device includes a first network device 1. The at least one phase difference includes a phase difference, at a same frequency, between a frequency domain channel coefficient obtained by the terminal device by measuring a positioning reference signal sent by the first network device 1 at the first moment $t_1$ and a frequency domain channel coefficient obtained by the terminal device by measuring a positioning reference signal sent by the first network device 1 at the second moment $t_{10}$.

Optionally, the at least one phase difference further includes a phase difference between the frequency domain channel coefficient obtained by the terminal device by measuring the positioning reference signal sent by the first network device 1 at the second moment $t_{10}$ and a frequency domain channel coefficient obtained by the terminal device by measuring a positioning reference signal sent by the first network device 1 at the third moment $t_{20}$.

Optionally, a time interval between the first moment $t_1$ and the second moment $t_{10}$ is equal to a time interval between the second moment $t_{10}$ and the third moment $t_{20}$.

The following describes the technical solutions of this application by using an example in which the at least one first network device includes one first network device and the at least one phase difference includes a phase difference between phases obtained by the terminal device by measuring positioning reference signals sent by each of the at least one first network device at different moments.

For example, the at least one phase difference includes P phase differences 3. An $a^{th}$ phase difference 3 in the P phase differences 3 is a phase difference between a phase obtained by the terminal device by measuring a positioning reference signal sent by the first network device at an $a^{th}$ moment and a phase obtained by the terminal device by measuring a positioning reference signal sent by the first network device at an $(a+1)^{th}$ moment.

a is an integer greater than or equal to 1. P is an integer greater than or equal to 1, and a value of P is related to a quantity of moments at which the first network device sends a positioning reference signal. For example, if the terminal device measures positioning reference signals sent by the first network device at two moments, P is equal to 1. If the terminal device measures positioning reference signals sent by the first network device at three moments, P is equal to 2.

Optionally, an $(a+1)^{th}$ phase difference 3 in the P phase differences 3 is a phase difference between the phase obtained by the terminal device by measuring the positioning reference signal sent by the first network device at the $(a+1)^{th}$ moment and a phase obtained by the terminal device by measuring a positioning reference signal sent by the first network device at an $(a+2)^{th}$ moment. A time interval between the $a^{th}$ moment and the $(a+1)^{th}$ moment is equal to a time interval between the $(a+1)^{th}$ moment and the $(a+2)^{th}$ moment. Time intervals between different adjacent moments in the plurality of moments are equal. P is equal to a moment quantity of the plurality of moments minus 1.

For example, as shown in FIG. 8, the at least one first network device includes a TRP 1, and the P phase differences 3 include $\Delta\varphi_1(t_1, t_{10})$. That is, P is equal to 1. $\Delta\varphi_1(t_1, t_{10})$ is a phase difference between a phase obtained by the terminal device by measuring a positioning reference signal sent by the TRP 1 at the first moment $t_1$ and a phase obtained by the terminal device by measuring a positioning reference signal sent by the TRP 1 at the second moment $t_{10}$. That is, $\Delta\varphi_1 (t_1, t_{10}) = \varphi_1(t_{10}) - \varphi_1(t_1)$. $\varphi_1(t_1)$ is the phase obtained by the terminal device by measuring the positioning reference signal sent by the TRP 1 at the first moment $t_1$. $\varphi_1(t_{10})$ is the phase obtained by the terminal device by measuring the positioning reference signal sent by the TRP 1 at the second moment $t_{10}$.

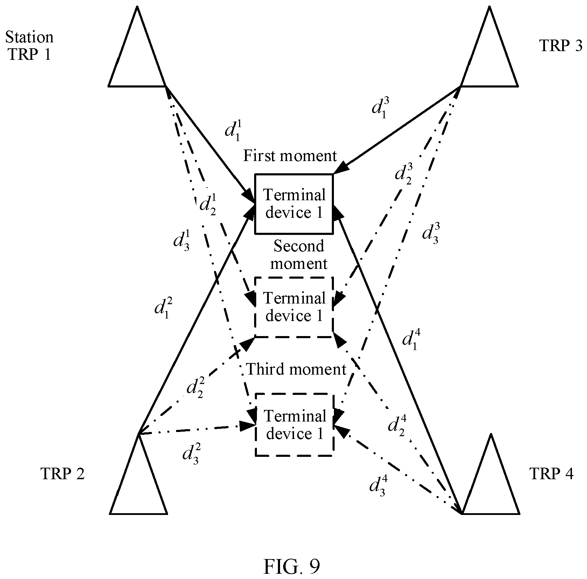

For example, as shown in FIG. 9, the at least one first network device includes a TRP 1, and the P phase differences 3 include $\Delta\varphi_1(t_1, t_{10})$ and $\Delta\varphi_1(t_{10}, t_{20})$. That is, P is equal to 2. For $\Delta\varphi_1(t_1, t_{10})$, refer to the foregoing descriptions. $\Delta\varphi_1(t_{10}, t_{20})$ is a phase difference between a phase obtained by the terminal device by measuring a positioning reference signal sent by the TRP 1 at the second moment $t_{10}$ and a phase obtained by the terminal device by measuring a positioning reference signal sent by the TRP 1 at the third moment $t_{20}$, That is, $\Delta\varphi_1(t_{10}, t_{20}) = \varphi_1(t_{20}) - \varphi_1(t_{10})$. $\varphi_1(t_{20})$ is the phase obtained by the terminal device by measuring the positioning reference signal sent by the TRP 1 at the third moment $t_{20}$. $\varphi_1(t_{10})$ is the phase obtained by the terminal device by measuring the positioning reference signal sent by the TRP 1 at the second moment $t_{10}$.

The following describes an example in a scenario in which the at least one first network device includes a plurality of first network devices.

For example, as shown in FIG. 8, the at least one first network device includes a TRP 1, a TRP 2, a TRP 3, and a TRP 4. The at least one phase difference includes: $\Delta\varphi_1(t_1, t_{10})$, $\Delta\varphi_2(t_1, t_{10})$, $\Delta\varphi_3(t_1, t_{10})$, and $\Delta\varphi_4(t_1, t_{10})$.

For $\Delta\varphi_1(t_1, t_{10})$, refer to the foregoing descriptions. $\Delta\varphi_2(t_1, t_{10})$ is a phase difference between a phase obtained by the terminal device by measuring a positioning reference signal sent by the TRP 2 at the first moment $t_1$ and a phase obtained by the terminal device by measuring a positioning reference signal sent by the TRP 2 at the second moment $t_{10}$. $\Delta\varphi_3(t_1, t_{10})$ is a phase difference between a phase obtained by the terminal device by measuring a positioning reference signal sent by the TRP 3 at the first moment $t_1$ and a phase obtained by the terminal device by measuring a positioning reference signal sent by the TRP 2 at the second moment $t_{10}$. $\Delta\varphi_4(t_1, t_{10})$ is a phase difference between a phase obtained by the terminal device by measuring a positioning reference signal sent by the TRP 4 at the first moment $t_1$ and a phase obtained by the terminal device by measuring a positioning reference signal sent by the TRP 4 at the second moment $t_{10}$.

For example, as shown in FIG. 8, the at least one first network device includes a TRP 1, a TRP 2, a TRP 3, and a TRP 4. The at least one phase difference includes: $\Delta\varphi_1(t_1, t_{10})$, $\Delta\varphi_2(t_1, t_{10})$, $\Delta\varphi_3(t_1, t_{10})$, $\Delta\varphi_4(t_1, t_{10})$, $\Delta\varphi_1(t_{10}, t_{20})$, $\Delta\varphi_2(t_{10}, t_{20})$, $\Delta\varphi_3(t_{10}, t_{20})$, and $\Delta\varphi_4(t_{10}, t_{20})$.

$\Delta\varphi_1(t_1, t_{10})$ is a phase difference between a phase obtained by the terminal device by measuring a positioning reference signal sent by the TRP 1 at the first moment $t_1$ and a phase obtained by the terminal device by measuring a positioning reference signal sent by the TRP 1 at the second moment $t_{10}$.

$\Delta\varphi_2 (t_1, t_{10})$ is a phase difference between a phase obtained by the terminal device by measuring a positioning reference signal sent by the TRP 2 at the first moment $t_1$ and a phase obtained by the terminal device by measuring a positioning reference signal sent by the TRP 2 at the second moment $t_{10}$.

$\Delta\varphi_3 (t_1, t_{10})$ is a phase difference between a phase obtained by the terminal device by measuring a positioning reference signal sent by the TRP 3 at the first moment $t_1$ and a phase obtained by the terminal device by measuring a positioning reference signal sent by the TRP 3 at the second moment $t_{10}$.

$\Delta\varphi_4(t_1, t_{10})$ is a phase difference between a phase obtained by the terminal device by measuring a positioning reference signal sent by the TRP 4 at the first moment $t_1$ and a phase obtained by the terminal device by measuring a positioning reference signal sent by the TRP 4 at the second moment $t_{10}$.

$\Delta\varphi_1(t_{10}, t_{20})$ is a phase difference between the phase obtained by the terminal device by measuring the positioning reference signal sent by the TRP 1 at the second moment $t_{10}$ and a phase obtained by the terminal device by measuring a positioning reference signal sent by the TRP 1 at the third moment $t_{20}$.

$\Delta\varphi_2(t_{10}, t_{20})$ is a phase difference between the phase obtained by the terminal device by measuring the positioning reference signal sent by the TRP 2 at the second moment $t_{10}$ and a phase obtained by the terminal device by measuring a positioning reference signal sent by the TRP 2 at the third moment $t_{20}$.

$\Delta\varphi_3(t_{10}, t_{20})$ is a phase difference between the phase obtained by the terminal device by measuring the positioning reference signal sent by the TRP 3 at the second moment $t_{10}$ and a phase obtained by the terminal device by measuring a positioning reference signal sent by the TRP 3 at the third moment $t_{20}$.

$\Delta\varphi_4(t_{10}, t_{20})$ is a phase difference between the phase obtained by the terminal device by measuring the positioning reference signal sent by the TRP 4 at the second moment $t_{10}$ and a phase obtained by the terminal device by measuring a positioning reference signal sent by the TRP 4 at the third moment $t_{20}$.

It should be noted that, optionally, the first moment $t_1$ and the second moment $t_{10}$ are two adjacent moments. The second moment $t_{10}$ and the third moment $t_{20}$ are two adjacent moments. A time interval between the first moment $t_1$ and the second moment $t_{10}$ is equal to a time interval between the second moment $t_{10}$ and the third moment $t_{20}$.

603: The terminal device sends first information to a second network device.

The first information includes the at least one phase difference, or the first information is determined based on the at least one phase difference. For the at least one phase difference, refer to related descriptions of step 602.

The first information is used by the second network device to perform positioning on the terminal device. The first information may be understood as positioning information provided by the terminal device for the second network device.

In an implementation in which the first information is determined based on the at least one phase difference, optionally, the embodiment shown in FIG. 6 further includes step 603a. Step 603a may be performed before step 603.

603a: The terminal device determines the first information based on the at least one phase difference.

The following describes step 603a with reference to content included in the first information.

First, the first information is described based on an implementation in which the at least one first network device includes a reference network device and at least one measurement network device.

1. The first information includes at least one of the following: at least one first cumulative phase difference or at least one first equivalent distance change amount.

The at least one first cumulative phase difference includes at least one of the following: a cumulative amount, in terms of time, of a phase difference between a phase obtained by the terminal device by measuring a positioning reference signal sent by the reference network device and a phase obtained by the terminal device by measuring a positioning reference signal sent by the at least one measurement network device; or a cumulative amount, in terms of time, of a phase difference between a channel first path phase obtained by the terminal device by measuring a positioning reference signal sent by the reference network device and a channel first path phase obtained by the terminal device by measuring a positioning reference signal sent by the at least one measurement network device; or a cumulative amount, in terms of time, of a phase difference, at a same frequency, between a frequency domain channel coefficient obtained by the terminal device by measuring a positioning reference signal sent by the reference network device and a frequency domain channel coefficient obtained by the terminal device by measuring a positioning reference signal sent by the at least one measurement network device.

The at least one first equivalent distance change amount includes a change amount, in terms of time, of a distance difference between a distance from the terminal device to the reference network device and a distance from the terminal device to the at least one measurement network device.

Specifically, the terminal device determines the at least one first cumulative phase difference based on the at least one phase difference.

For example, the at least one first network device includes a reference network device and N measurement network devices, and the at least one phase difference includes N phase differences 1 and N phase differences 2. For the N phase differences 1 and the N phase differences 2, refer to the foregoing related descriptions. The terminal device determines the at least one first cumulative phase difference based on the N phase differences 1 and the N phase differences 2. The at least one first cumulative phase difference includes N first cumulative phase differences. An $i^{th}$ first cumulative phase difference in the N first cumulative phase differences is a difference between an $i^{th}$ phase difference 1 in N phase differences 1 and an $i^{th}$ phase difference 2 in N phase differences 2.

For example, the $i^{th}$ first cumulative phase difference indicates a cumulative amount, in terms of time, of a phase difference between a phase obtained by the terminal device by measuring a positioning reference signal sent by the reference network device and a phase obtained by the terminal device by measuring a positioning reference signal sent by an ith measurement network device. Alternatively, the ith first cumulative phase difference indicates a cumulative amount, in terms of time, of a phase difference between a channel first path phase obtained by the terminal device by measuring a positioning reference signal sent by the reference network device and a channel first path phase obtained by the terminal device by measuring a positioning reference signal sent by an ith measurement network device. Alternatively, the ith first cumulative phase difference indicates a cumulative amount, in terms of time, of a phase difference, at a same frequency, between a frequency domain channel coefficient obtained by the terminal device by measuring a positioning reference signal sent by the reference network device and a frequency domain channel coefficient obtained by the terminal device by measuring a positioning reference signal sent by an ith measurement network device.

The following provides descriptions by using an example in which the terminal device determines a first cumulative phase difference within a time interval between the first moment $t_1$ and the second moment $t_{10}$ In actual application, the terminal device may determine first cumulative phase differences within a plurality of time intervals. This is not specifically limited in this application.

The following provides descriptions by using an example in which the ith first cumulative phase difference indicates the cumulative amount, in terms of time, of the phase difference between the phase obtained by the terminal device by measuring the positioning reference signal sent by the reference network device and the phase obtained by the terminal device by measuring the positioning reference signal sent by the ith measurement network device. The ith first cumulative phase difference may be expressed as:

$$\Delta\varphi_{ij}(t_1, t_{10}) = \varphi_{ij}(t_{10}) - \varphi_{ij}(t_1) \quad \text{Formula 1}$$

$\varphi_{ij}(t_2)$ represents the ith phase difference 2 in the N phase differences 2. The ith phase difference 2 represents a phase difference between a phase obtained by the terminal device by measuring a positioning reference signal sent by the ith measurement network device in the N measurement network devices at the second moment $t_{10}$ and a phase obtained by the terminal device by measuring a positioning reference signal sent by the reference network device at the second moment $t_{10}$.

$\varphi_{ij}(t_1)$ represents the ith phase difference 1 in the N phase differences 1. The ith phase difference 1 represents a phase difference between a phase obtained by the terminal device by measuring a positioning reference signal sent by the ith measurement network device in the N measurement network devices at the first moment $t_1$ and a phase obtained by the terminal device by measuring a positioning reference signal sent by the reference network device at the first moment $t_1$.

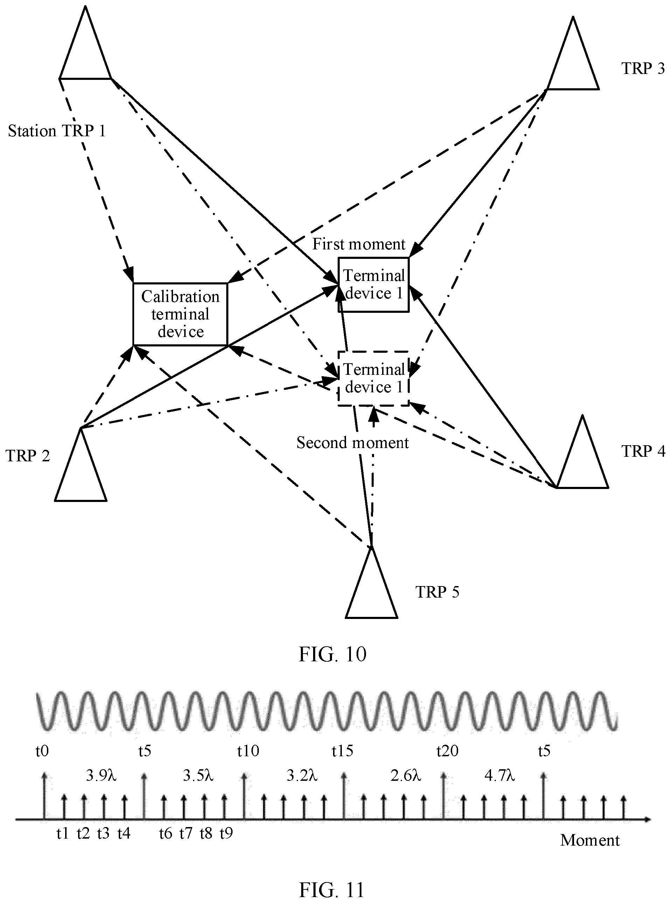

Specifically, the terminal device reports the first cumulative phase difference to track a cumulative amount of a phase difference in terms of time. To avoid a loss of an entire cycle, it needs to be ensured that a phase change between any two measurements of the terminal device is less than $2\pi$. If the phase change is less than $2\pi$, a corresponding position movement of the terminal device is small. A feasible method is that the terminal device accumulates change amounts of a plurality of phase differences, and then performs reporting. That is, the first cumulative phase difference is reported, and a large distance change is calculated by using the accumulated change amounts of the plurality of phase differences. For example, as shown in FIG. 11, within the time interval between the first moment $t_1$ and the second moment $t_{10}$, the terminal device measures, a plurality of times, the positioning reference signal sent by the reference network device and the positioning reference signal sent by the measurement network device to obtain a plurality of corresponding phase differences, and then determines the first cumulative phase difference with reference to the plurality of phase differences.

For example, a phase difference between a phase obtained by the terminal device by measuring a positioning reference signal sent by the reference network device at a moment $t_1$ and a phase obtained by the terminal device by measuring a positioning reference signal sent by the ith measurement network device at the moment $t_1$ is $\varphi_{ij}(t_1)$. A phase difference between a phase obtained by the terminal device by measuring a positioning reference signal sent by the reference network device at a moment $t_2$ and a phase obtained by the terminal device by measuring a positioning reference signal sent by the ith measurement network device at the moment $t_2$ is $\varphi_{ij}(t_2)$. A phase difference between a phase obtained by the terminal device by measuring a positioning reference signal sent by the reference network device at a moment $t_3$ and a phase obtained by the terminal device by measuring a positioning reference signal sent by the ith measurement network device at the moment $t_3$ is $\varphi_{ij}(t_3)$. A phase difference between a phase obtained by the terminal device by measuring a positioning reference signal sent by the reference network device at a moment $t_4$ and a phase obtained by the terminal device by measuring a positioning reference signal sent by the ith measurement network device at the moment $t_4$ is $\varphi_{ij}(t_4)$. A phase difference between a phase obtained by the terminal device by measuring a positioning reference signal sent by the reference network device at a moment $t_5$ and a phase obtained by the terminal device by measuring a positioning reference signal sent by the ith measurement network device at the moment $t_5$ is $\varphi_{ij}(t_5)$. A phase difference between a phase obtained by the terminal device by measuring a positioning reference signal sent by the reference network device at a moment $t_6$ and a phase obtained by the terminal device by measuring a positioning reference signal sent by the ith measurement network device at the moment $t_6$ is $\varphi_{ij}(t_6)$. A phase difference between a phase obtained by the terminal device by measuring a positioning reference signal sent by the reference network device at a moment $t_7$ and a phase obtained by the terminal device by measuring a positioning reference signal sent by the $i^{th}$ measurement network device at the moment $t_7$ is $\varphi_{ij}(t_7)$. A phase difference between a phase obtained by the terminal device by measuring a positioning reference signal sent by the reference network device at a moment $t_8$ and a phase obtained by the terminal device by measuring a positioning reference signal sent by the $i^{th}$ measurement network device at the moment $t_8$ is $\varphi_{ij}(t_8)$. A phase difference between a phase obtained by the terminal device by measuring a positioning reference signal sent by the reference network device at a moment $t_9$ and a phase obtained by the terminal device by measuring a positioning reference signal sent by the $i^{th}$ measurement network device at the moment $t_9$ is $\varphi_{ij}(t_9)$. A phase difference between a phase obtained by the terminal device by measuring a positioning reference signal sent by the reference network device at a moment $t_{10}$ and a phase obtained by the terminal device by measuring a positioning reference signal sent by the $i^{th}$ measurement network device is $\varphi_{ij}(t_{10})$.

If the moment $t_1$ is the 1st second, and the moment $t_{10}$ is the 10th second, the $i^{th}$ first cumulative phase difference may be expressed as:

$$\Delta\varphi_{ij}(t_1, t_{10}) = [\varphi_{ij}(t_{10}) - \varphi_{ij}(t_9)] + [\varphi_{ij}(t_9) - \varphi_{ij}(t_8)] + [\varphi_{ij}(t_8) - \varphi_{ij}(t_7)] + [\varphi_{ij}(t_7) - \varphi_{ij}(t_6)] + [\varphi_{ij}(t_6) - \varphi_{ij}(t_5)] + [\varphi_{ij}(t_5) - \varphi_{ij}(t_4)] + [\varphi_{ij}(t_5) - \varphi_{ij}(t_3)] + [\varphi_{ij}(t_3) - \varphi_{ij}(t_1)] + [\varphi_{ij}(t_2) - \varphi_{ij}(t_1)] = \varphi_{ij}(t_{10}) - \varphi_{ij}(t_1) \quad \text{Formula 2}$$

$$\text{Formula 2}$$

That is, a first cumulative phase difference from the 1st second to the 10th second needs to be calculated by gradually accumulating the phase differences at the 1st second, the 2nd second, ..., and the 10th second, to eliminate a problem of ambiguity of an entire cycle, but cannot be directly obtained by using the phase difference corresponding to the 10th second and the phase difference corresponding to the 1st second. Even if Formula 1 may be expressed as subtraction of phase differences at two moments, actually, phase differences at a plurality of moments need to be gradually accumulated.

The terminal device determines the at least one first equivalent distance change amount based on the at least one first cumulative phase difference. Specifically, the terminal device determines the at least one first equivalent distance change amount based on the at least one first cumulative phase difference and a wavelength that is used by the at least one first network device to send the positioning reference signal.

The following provides descriptions by using an example in which the terminal device determines a first equivalent distance change amount within a time interval between the first moment $t_1$ and the second moment $t_{10}$. In actual application, the terminal device may determine first equivalent distance change amounts within a plurality of time intervals. This is not specifically limited in this application.

For example, the at least one first equivalent distance change amount includes N first equivalent distance change amounts. An $i^{th}$ first equivalent distance change amount in the N first equivalent distance change amounts is a difference between a difference between distances from the terminal device to the reference network device and the $i^{th}$ measurement network device at the first moment $t_1$ and a difference between distances from the terminal device to the reference network device and the $i^{th}$ measurement network device at the second moment $t_{10}$. The $i^{th}$ first equivalent distance change amount is expressed below by using Formula 3:

$$\Delta d_{ij} = (\Delta\varphi_{ij}(t_1, t_{10}) - \Delta\theta_{ij})\lambda / 2\pi \quad \text{Formula 3}$$

$\Delta\varphi_{ij}(t_1, t_{10})$ is an $i^{th}$ first cumulative phase difference. For $\Delta\theta_{ij}$, refer to related descriptions below. $\lambda$ is a wavelength used by the $i^{th}$ measurement network device to send the positioning reference signal. In this specification, an example in which wavelengths used by the at least one first network device to send positioning reference signals are all $\lambda$ is used to describe the technical solutions of this application.

2. The first information includes at least one of the following: at least one first cumulative phase difference rate or at least one first equivalent distance change rate.

The at least one first cumulative phase difference rate includes at least one of the following: a cumulative amount, in terms of unit time, of a phase difference between a phase obtained by the terminal device by measuring a positioning reference signal sent by the reference network device and a phase obtained by the terminal device by measuring a positioning reference signal sent by the at least one measurement network device; or a cumulative amount, in terms of unit time, of a phase difference between a channel first path phase obtained by the terminal device by measuring a positioning reference signal sent by the reference network device and a channel first path phase obtained by the terminal device by measuring a positioning reference signal sent by the at least one measurement network device; or a cumulative amount, in terms of unit time, of a phase difference, at a same frequency, obtained by the terminal device by measuring a positioning reference signal sent by the reference network device and a positioning reference signal sent by the at least one measurement network device.

The at least one first equivalent distance change rate includes a change amount, in terms of unit time, of a distance difference between a distance from the terminal device to the reference network device and a distance from the terminal device to the at least one measurement network device.

Specifically, the terminal device determines the at least one first cumulative phase difference based on the at least one phase difference. Then, the terminal device determines the at least one first cumulative phase difference rate based on the at least one first cumulative phase difference.

For a process in which the terminal device determines the at least one first cumulative phase difference, refer to the foregoing related descriptions. The terminal device determines the at least one first cumulative phase difference rate based on the at least one first cumulative phase difference and a time interval between the first moment $t_1$ and the second moment $t_{10}$.

For example, the at least one first cumulative phase difference rate includes N first cumulative phase difference rates. The N first cumulative phase difference rates are equal to an $i^{th}$ first cumulative phase difference in N first cumulative phase differences divided by the time interval between the first moment $t_1$ and a second moment $t_{10}$. The $i^{th}$ first cumulative phase difference rate indicates a cumulative amount, in terms of unit time, of a phase difference between a phase obtained by the terminal device by measuring a positioning reference signal sent by the reference network device and a phase obtained by the terminal device by measuring a positioning reference signal sent by an $i^{th}$ measurement network device. Alternatively, the $i^{th}$ first cumulative phase difference rate indicates a cumulative amount, in terms of unit time, of a phase difference between a channel first path phase obtained by the terminal device by measuring a positioning reference signal sent by the reference network device and a channel first path phase obtained by the terminal device by measuring a positioning reference signal sent by an $i^{th}$ measurement network device. Alternatively, the $i^{th}$ first cumulative phase difference rate indicates a cumulative amount, in terms of unit time, of a phase difference, at a same frequency, between a frequency domain channel coefficient obtained by the terminal device by measuring a positioning reference signal sent by the reference network device and a frequency domain channel coefficient obtained by the terminal device by measuring a positioning reference signal sent by an $i^{th}$ measurement network device.

The following provides descriptions by using an example in which the $i^{th}$ first cumulative phase difference rate indicates the cumulative amount, in terms of unit time, of the phase difference between the phase obtained by the terminal device by measuring the positioning reference signal sent by the reference network device and the phase obtained by the terminal device by measuring the positioning reference signal sent by the $i^{th}$ measurement network device. The $i^{th}$ first cumulative phase difference rate may be expressed as:

$$\partial \Delta \varphi_i = \Delta \varphi_{ij}(t_1, t_{10}) / (t_{10} - t_1) \quad \text{Formula 4}$$

$\Delta \varphi_{ij}(t_1, t_{10})$ is the $i^{th}$ first cumulative phase difference, and $(t_{10} - t_1)$ is the time interval between the first moment and the second moment.

The terminal device determines the at least one first equivalent distance change rate based on the at least one first cumulative phase difference rate. Specifically, the terminal device determines the at least one first equivalent distance change rate based on the at least one first cumulative phase difference rate and a wavelength that is used by the at least one first network device to send the positioning reference signal.

For example, the at least one first equivalent distance change rate includes N first equivalent distance change rates. An $i^{th}$ first equivalent distance change rate in the N first equivalent distance change rates is equal to an $i^{th}$ first equivalent distance change amount in N first equivalent distance change amounts divided by the time interval between the first moment $t_1$ and the second moment $t_{10}$. The $i^{th}$ first equivalent distance change rate is expressed below by using Formula 5:

$$\partial \Delta d_{ij} = \frac{\Delta d_{ij}}{(t_{10} - t_1)} = \frac{(\Delta \varphi_{ij}(t_1, t_{10}) - \Delta \theta_{ij})\lambda}{2\pi(t_{10} - t_1)} \quad \text{Formula 5}$$

$\Delta d_{ij}$ is the $i^{th}$ first equivalent distance change amount, and $(t_{10} - t_1)$ is the time interval between the first moment and the second moment. $\Delta \varphi_{ij}(t_1, t_{10})$ is the $i^{th}$ first cumulative phase difference. $\Delta \theta_{ij}$ is a phase deviation between the reference network device and the $i^{th}$ measurement network device. For $\Delta \theta_{ij}$, refer to the following detailed descriptions. $\lambda$ is a wavelength used by the $i^{th}$ measurement network device to send the positioning reference signal.

The following describes the first information on a basis that the at least one first network device includes one or more first network devices. The following describes the first information by using one of the at least one first network device as an example. This is similar for another first network device.

1. The first information includes at least one of the following: at least one second cumulative phase difference or at least one second equivalent distance change amount.

The at least one second cumulative phase difference includes at least one of the following: a cumulative amount, in terms of time, of a phase difference between phases obtained by the terminal device by measuring positioning reference signals sent by the first network device at different moments; or a cumulative amount, in terms of time, of a phase difference between channel first path phases obtained by the terminal device by measuring positioning reference signals sent by the first network device at different moments; or a cumulative amount, in terms of time, of a phase difference, at a same frequency, between frequency domain channel coefficients obtained by the terminal device by measuring positioning reference signals sent by the first network device at different moments.

The at least one second equivalent distance change amount includes a change amount, in terms of time, of a distance difference between distances from the terminal device to the first network device at different moments.

Specifically, the terminal device determines the at least one second cumulative phase difference based on the at least one phase difference.

For example, the at least one first network device includes one first network device, and the at least one phase difference includes P phase differences 3. For the P phase differences 3, refer to the foregoing related descriptions. The at least one second cumulative phase difference includes M second cumulative phase differences. An $a^{th}$ second cumulative phase difference in the M second cumulative phase differences is a difference between an $a^{th}$ phase difference 3 in the P phase differences 3 and an $(a+1)^{th}$ phase difference 3 in the P phase differences 3. M is an integer greater than or equal to 1, and a is an integer greater than or equal to 1. A value of M is determined based on a quantity of moments at which the terminal device measures a positioning reference signal. M is equal to the quantity of moments minus 1.

The $a^{th}$ phase difference 3 is a phase difference between a phase obtained by the terminal device by measuring a positioning reference signal sent by the first network device at an $a^{th}$ moment and a phase obtained by the terminal device by measuring a positioning reference signal sent by the first network device at an $(a+1)^{th}$ moment. The $(a+1)^{th}$ phase difference 3 is a phase difference between the phase obtained by the terminal device by measuring the positioning reference signal sent by the first network device at the $(a+1)^{th}$ moment and a phase obtained by the terminal device by measuring a positioning reference signal sent by the first network device at an $(a+2)^{th}$ moment. A time interval between the $a^{th}$ moment and the $(a+1)^{th}$ moment is equal to a time interval between the $(a+1)^{th}$ moment and the $(a+2)^{th}$ moment.

For example, the $a^{th}$ second cumulative phase difference may be expressed as:

$$\nabla \phi_1 = \Delta \varphi_1(t_a, t_{a+1}) - \Delta \varphi_1(t_{a+1}, t_{a+2}) \quad \text{Formula 6.1}$$

$\Delta \varphi_1(t_a, t_{a+1})$ is the $a^{th}$ phase difference 3 in the P phase differences 3. $\Delta \varphi_1(t_{a+1}, t_{a+2})$ is the $(a+1)^{th}$ phase difference 3 in the P phase differences 3.

Specifically, the terminal device reports the second cumulative phase difference to track a cumulative amount of a phase difference in terms of time. To avoid a loss of an entire cycle, it needs to be ensured that a phase change between any two measurements of the terminal device is less than $2\pi$. If the phase change is less than $2\pi$, a corresponding position movement of the terminal device is small. A feasible method is that the terminal device accumulates change amounts of a plurality of phase differences, and then performs reporting. That is, the second cumulative phase difference is reported. A large distance change is calculated by using the accumulated change amounts of the plurality of phase differences. For example, as shown in FIG. 11, within a time interval between a moment $t_1$ and a moment $t_{20}$, the terminal device measures, a plurality of times, a positioning reference signal sent by the first network device to obtain a phase difference between phases obtained at different moments, and then determines the at least one second cumulative phase difference with reference to the phase difference between the phases obtained at the different moments.

For example, a phase difference between a phase obtained by the terminal device by measuring a positioning reference signal sent by the first network device at the moment $t_1$ and a phase obtained by the terminal device by measuring a positioning reference signal sent by the first network device at a moment $t_2$ is $\Delta \varphi_1(t_1, t_2)$. A phase difference between the phase obtained by the terminal device by measuring the positioning reference signal sent by the first network device at the moment $t_2$ and a phase obtained by the terminal device by measuring a positioning reference signal sent by the first network device at a moment $t_3$ is $\Delta \varphi_1(t_2, t_3)$. A phase difference between the phase obtained by the terminal device by measuring the positioning reference signal sent by the first network device at the moment $t_3$ and a phase obtained by the terminal device by measuring a positioning reference signal sent by the first network device at a moment $t_4$ is $\Delta \varphi_1(t_3, t_4)$. A phase difference between the phase obtained by the terminal device by measuring the positioning reference signal sent by the first network device at the moment $t_4$ and a phase obtained by the terminal device by measuring a positioning reference signal sent by the first network device at a moment $t_5$ is $\Delta \varphi_1(t_4, t_5)$. A phase difference between the phase obtained by the terminal device by measuring the positioning reference signal sent by the first network device at the moment $t_5$ and a phase obtained by the terminal device by measuring a positioning reference signal sent by the first network device at a moment $t_6$ is $\Delta \varphi_1(t_5, t_6)$. A phase difference between the phase obtained by the terminal device by measuring the positioning reference signal sent by the first network device at the moment $t_6$ and a phase obtained by the terminal device by measuring a positioning reference signal sent by the first network device at a moment $t_7$ is $\Delta \varphi_1(t_6, t_7)$. A phase difference between the phase obtained by the terminal device by measuring the positioning reference signal sent by the first network device at the moment $t_7$ and a phase obtained by the terminal device by measuring a positioning reference signal sent by the first network device at a moment $t_8$ is $\Delta\varphi_1(t_7, t_8)$. A phase difference between the phase obtained by the terminal device by measuring the positioning reference signal sent by the first network device at the moment $t_8$ and a phase obtained by the terminal device by measuring a positioning reference signal sent by the first network device at a moment $t_9$ is $\Delta\varphi_1(t_8, t_9)$. A phase difference between the phase obtained by the terminal device by measuring the positioning reference signal sent by the first network device at the moment $t_9$ and a phase obtained by the terminal device by measuring a positioning reference signal sent by the first network device at a moment $t_{10}$ is $\Delta\varphi_1(t_9, t_{10})$. A phase difference between the phase obtained by the terminal device by measuring the positioning reference signal sent by the first network device at the moment $t_{10}$ and a phase obtained by the terminal device by measuring a positioning reference signal sent by the first network device at a moment $t_{11}$ is $\Delta\varphi_1(t_{10}, t_{11})$. A phase difference between the phase obtained by the terminal device by measuring the positioning reference signal sent by the first network device at the moment $t_{11}$ and a phase obtained by the terminal device by measuring a positioning reference signal sent by the first network device at a moment $t_{12}$ is $\Delta\varphi_1(t_{11}, t_{12})$. A phase difference between the phase obtained by the terminal device by measuring the positioning reference signal sent by the first network device at the moment $t_{12}$ and a phase obtained by the terminal device by measuring a positioning reference signal sent by the first network device at a moment $t_{13}$ is $\Delta\varphi_1(t_{12}, t13)$. A phase difference between the phase obtained by the terminal device by measuring the positioning reference signal sent by the first network device at the moment $t_{13}$ and a phase obtained by the terminal device by measuring a positioning reference signal sent by the first network device at a moment $t_{14}$ is $\Delta\varphi_1(t_{13}, t_{14})$. A phase difference between the phase obtained by the terminal device by measuring the positioning reference signal sent by the first network device at the moment $t_{14}$ and a phase obtained by the terminal device by measuring a positioning reference signal sent by the first network device at a moment $t_{15}$ is $\Delta\varphi_1(t_{14}, t_{15})$. A phase difference between the phase obtained by the terminal device by measuring the positioning reference signal sent by the first network device at the moment $t_{15}$ and a phase obtained by the terminal device by measuring a positioning reference signal sent by the first network device at a moment $t_{16}$ is $\Delta\varphi_1(t_{15}, t_{16})$. A phase difference between the phase obtained by the terminal device by measuring the positioning reference signal sent by the first network device at the moment $t_{16}$ and a phase obtained by the terminal device by measuring a positioning reference signal sent by the first network device at a moment $t_{17}$ is $\Delta\varphi_1(t_{16}, t_{17})$. A phase difference between the phase obtained by the terminal device by measuring the positioning reference signal sent by the first network device at the moment $t_{17}$ and a phase obtained by the terminal device by measuring a positioning reference signal sent by the first network device at a moment $t_{18}$ is $\Delta\varphi_1(t_{17}, t_{18})$. A phase difference between the phase obtained by the terminal device by measuring the positioning reference signal sent by the first network device at the moment $t_{18}$ and a phase obtained by the terminal device by measuring a positioning reference signal sent by the first network device at a moment $t_{19}$ is $\Delta\varphi_1(t_{18}, t_{19})$. A phase difference between the phase obtained by the terminal device by measuring the positioning reference signal sent by the first network device at the moment $t_{19}$ and a phase obtained by the terminal device by measuring a positioning reference signal sent by the first network device at the moment $t_{20}$ is $\Delta\varphi_1(t_{19}, t_{20})$.

If the $a^{th}$ moment is the moment $t_1$, the moment $t_1$ is the 1st second, the $(a+1)^{th}$ moment is the moment $t_{10}$, the moment $t_{10}$ is the 10th second, the $(a+)^{th}$ moment is the moment $t_{20}$, and the moment $t_{20}$ is the 20th second, the $a^{th}$ second cumulative phase difference may be expressed as:

$$
\begin{aligned}
\nabla\phi_1 = &[\Delta\varphi_1(t_{19}, t_{20}) - \Delta\varphi_1(t_{18}, t_{19})] + [\Delta\varphi_1(t_{18}, t_{19}) - \Delta\varphi_1(t_{17}, t_{18})] + \\
&[\Delta\varphi_1(t_{17}, t_{18}) - \Delta\varphi_1(t_{17}, t_{16})] + [\Delta\varphi_1(t_{17}, t_{16}) - \Delta\varphi_1(t_{16}, t_{15})] + \\
&[\Delta\varphi_1(t_{16}, t_{15}) - \Delta\varphi_1(t_{15}, t_{14})] + [\Delta\varphi_1(t_{15}, t_{14}) - \Delta\varphi_1(t_{14}, t_{13})] + \\
&[\Delta\varphi_1(t_{14}, t_{13}) - \Delta\varphi_1(t_{13}, t_{12})] + [\Delta\varphi_1(t_{13}, t_{12}) - \Delta\varphi_1(t_{12}, t_{11})] + \\
&[\Delta\varphi_1(t_{12}, t_{11}) - \Delta\varphi_1(t_{11}, t_{10})] + [\Delta\varphi_1(t_{11}, t_{10}) - \Delta\varphi_1(t_{10}, t_{9})] + \\
&[\Delta\varphi_1(t_{10}, t_{9}) - \Delta\varphi_1(t_{9}, t_{8})] + [\Delta\varphi_1(t_{9}, t_{8}) - \Delta\varphi_1(t_{8}, t_{7})] + \\
&[\Delta\varphi_1(t_{8}, t_{7}) - \Delta\varphi_1(t_{7}, t_{6})] + [\Delta\varphi_1(t_{7}, t_{6}) - \Delta\varphi_1(t_{6}, t_{5})] + \\
&[\Delta\varphi_1(t_{6}, t_{5}) - \Delta\varphi_1(t_{5}, t_{4})] + [\Delta\varphi_1(t_{5}, t_{4}) - \Delta\varphi_1(t_{4}, t_{3})] + \\
&[\Delta\varphi_1(t_{4}, t_{3}) - \Delta\varphi_1(t_{3}, t_{2})] + [\Delta\varphi_1(t_{2}, t_{3}) - \Delta\varphi_1(t_{1}, t_{2})] = \\
&\Delta\varphi_1(t_{19}, t_{20}) - \Delta\varphi_1(t_{1}, t_{2})
\end{aligned}
$$

Formula 6.2

That is, a second cumulative phase difference from the 1st second to the 20th second needs to be calculated by gradually accumulating the phase differences at the 1st second, the 2nd second, ..., and the 20th second, to eliminate a problem of ambiguity of an entire cycle, but cannot be directly obtained by using the phase difference corresponding to the 20th second and the phase difference corresponding to the 1st second. Even if Formula 6.1 may be expressed as subtraction of phase differences at two moments, actually, phase differences at a plurality of moments need to be gradually accumulated.

The terminal device determines the at least one second equivalent distance change amount based on the at least one second cumulative phase difference. Specifically, the terminal device determines the at least one second equivalent distance change amount based on the at least one second cumulative phase difference and a wavelength that is used by the at least one first network device to send the positioning reference signal.

The following provides descriptions by using an example in which the terminal device determines a second equivalent distance change amount within a time interval between the moment $t_a$ and the moment $t_{a+2}$. In actual application, the terminal device may determine second equivalent distance change amounts within a plurality of time intervals. This is not specifically limited in this application.

For example, the at least one second equivalent distance change amount includes M second equivalent distance change amounts. An $a^{th}$ second equivalent distance change amount in the M second equivalent distance change amounts is a difference between an $a^{th}$ first distance difference in P first distance differences and an $(a+1)^{th}$ first distance difference in the P first distance differences. The $a^{th}$ first distance difference is a distance difference between a distance from the terminal device to the first network device at the $a^{th}$ moment and a distance from the terminal device to the first network device at the $(a+1)^{th}$ moment. The $(a+1)^{th}$ first distance difference is a distance difference between the distance from the terminal device to the first network device at the $(a+1)^{th}$ moment and a distance from the terminal device to the first network device at the $(a+2)^{th}$ moment.

The $a^{th}$ second equivalent distance change amount is expressed below by using Formula 7:

$$\nabla d_1 = \Delta d_a - \Delta d_{a+1} = \nabla \phi_1 \lambda / 2\pi \quad \text{Formula 7}$$

$\Delta d_a$ is the $a^{th}$ first distance difference in the P first distance differences. $\Delta d_{a+1}$ is the $(a+1)^{th}$ first distance difference in the P first distance differences. $\lambda$ is the wavelength used by the first network device to send the positioning reference signal.

2. The first information includes at least one of the following: at least one second cumulative phase difference rate or at least one second equivalent distance change rate.

The at least one second cumulative phase difference rate includes at least one of the following: a cumulative amount, in terms of unit time, of a phase difference between phases obtained by the terminal device by measuring positioning reference signals sent by the first network device at different moments; or a cumulative amount, in terms of unit time, of a phase difference between channel first path phases obtained by the terminal device by measuring positioning reference signals sent by the first network device at different moments; or a cumulative amount, in terms of unit time, of a phase difference, at a same frequency, between frequency domain channel coefficients obtained by the terminal device by measuring positioning reference signals sent by the first network device at different moments.

The at least one second equivalent distance change rate is a change amount, in terms of unit time, of a distance difference between distances from the terminal device to the first network device at different moments.

Specifically, the terminal device determines the at least one second cumulative phase difference based on the at least one phase difference. Then, the terminal device determines the at least one second cumulative phase difference rate based on the at least one second cumulative phase difference.

For a process in which the terminal device determines the at least one second cumulative phase difference, refer to the foregoing related descriptions. The terminal device determines the at least one second cumulative phase difference rate based on the at least one second cumulative phase difference and a time interval between the moment $t_a$ and the moment $t_{a+2}$.

For example, the at least one second cumulative phase difference rate includes M second cumulative phase difference rates. The M second cumulative phase difference rates are equal to an $a^{th}$ second cumulative phase difference in M second cumulative phase differences divided by a time interval between a moment $t_a$ and a moment $t_{a+2}$.

For example, the $a^{th}$ second cumulative phase difference rate may be expressed as:

$$\partial \nabla \phi_1 = \frac{\Delta \varphi_1(t_a, t_{a+1}) - \Delta \varphi_1(t_{a+1}, t_{a+2})}{t_{a+2} - t_a} \quad \text{Formula 8}$$

$\Delta \varphi_1(t_a, t_{a+1})$ is the $a^{th}$ phase difference 3 in the P phase differences 3. $\Delta \varphi_1(t_{a+1}, t_{a+2})$ is the $(a+1)^{th}$ phase difference 3 in the P phase differences 3. For the P phase differences 3, refer to the foregoing related descriptions.

The terminal device determines the at least one second equivalent distance change rate based on the at least one second cumulative phase difference rate. Specifically, the terminal device determines the at least one second equivalent distance change rate based on the at least one second cumulative phase difference rate and a wavelength that is used by the first network device to send the positioning reference signal.

For example, the at least one second equivalent distance change rate includes M second equivalent distance change rates. An $a^{th}$ second equivalent distance change rate in the M second equivalent distance change rates is equal to M second equivalent distance change amounts divided by the time interval between the moment $t_a$ and the moment $t_{a+2}$. The $a^{th}$ second equivalent distance change rate is expressed below by using Formula 9:

$$\partial \nabla d_1 = \frac{\Delta d_a - \Delta d_{a+1}}{t_{a+2} - t_a} = \frac{\nabla \phi_1 \lambda}{2\pi(t_{a+2} - t_a)} \quad \text{Formula 9}$$

$\Delta d_a$ is the $a^{th}$ first distance difference in the P first distance differences. $\Delta d_{a+1}$ is the $(a+1)^{th}$ first distance difference in the P first distance differences. $\lambda$ is the wavelength used by the first network device to send the positioning reference signal.

604: The second network device performs positioning on the terminal device based on the first information.

Optionally, the embodiment shown in FIG. 6 further includes step 604a. Step 604a may be performed before step 604.

604a: The second network device obtains at least one phase deviation.

The at least one phase deviation includes a phase deviation between different first network devices in the at least one first network device that is obtained by a calibration terminal device by measuring the positioning reference signal sent by the at least one first network device. The at least one phase deviation is reported by the calibration terminal device.

Specifically, the second network device receives the at least one phase deviation from the calibration terminal device. For the at least one phase deviation, refer to related descriptions below.

It should be noted that an execution sequence between step 604a and step 603 is not fixed. Step 603 may be first performed, and then step 604a is performed; or step 604a is first performed, and then step 603 is performed; or step 603 and step 604a are simultaneously performed based on a case. This is not specifically limited in this application.

Based on step 604a, optionally, step 604 specifically includes:

The second network device performs positioning on the terminal device based on the first information and the at least one phase deviation. For some related examples in which the second network device performs positioning on the terminal device with reference to the first information and the at least one phase deviation, refer to related descriptions below.

Optionally, the embodiment shown in FIG. 6 further includes step 604b. Step 604b may be performed before step 604.

604b: The second network device obtains at least one cumulative phase deviation.

The at least one cumulative phase deviation includes a cumulative amount, in terms of time, of a phase deviation between different first network devices in the at least one first network device that is obtained by a calibration terminal device by measuring the positioning reference signal sent by the at least one first network device, and the at least one cumulative phase deviation is reported by the calibration terminal device.

Specifically, the second network device receives the at least one cumulative phase deviation from the calibration terminal device. For the at least one cumulative phase deviation, refer to related descriptions below.

It should be noted that an execution sequence between step 604b and step 603 is not fixed. Step 603 may be first performed, and then step 604b is performed; or step 604b is first performed, and then step 603 is performed; or step 603 and step 604b are simultaneously performed based on a case. This is not specifically limited in this application.

Based on step 604b, optionally, step 604 specifically includes:

The second network device performs positioning on the terminal device based on the first information and the at least one cumulative phase deviation. For some related examples in which the second network device performs positioning on the terminal device with reference to the first information and the at least one cumulative phase deviation, refer to related descriptions below.

The following describes step 604 with reference to content included in the first information.

1. The at least one first network device includes a reference network device and at least one measurement network device, and the first information includes at least one phase difference.

The at least one phase difference includes at least one of the following: a phase difference between a phase obtained by the terminal device by measuring a positioning reference signal sent by the reference network device and a phase obtained by the terminal device by measuring a positioning reference signal sent by the at least one measurement network device; or a phase difference between a channel first path phase obtained by the terminal device by measuring a positioning reference signal sent by the reference network device and a channel first path phase obtained by the terminal device by measuring a positioning reference signal sent by the at least one measurement network device; or a phase difference, at a same frequency, between a frequency domain channel coefficient obtained by the terminal device by measuring a positioning reference signal sent by the reference network device and a frequency domain channel coefficient obtained by the terminal device by measuring a positioning reference signal sent by the at least one measurement network device.

The following provides descriptions by using an example in which the at least one phase difference includes the phase difference between the phase obtained by the terminal device by measuring the positioning reference signal sent by the reference network device and the phase obtained by the terminal device by measuring the positioning reference signal sent by the at least one measurement network device.

The following describes a process in which the second network device performs positioning on the terminal device with reference to the first information and the at least one phase deviation.

The at least one phase deviation includes a phase deviation between different first network devices in the at least one first network device that is obtained by a calibration terminal device by measuring the positioning reference signal sent by the at least one first network device.

Specifically, in this implementation, the at least one first network device includes a reference network device and at least one measurement network device. The at least one phase deviation includes a difference between a phase deviation between the calibration terminal device and the reference network device and a phase deviation between the calibration terminal device and the at least one measurement network device.

Specifically, the calibration terminal device obtains a phase by measuring a positioning reference signal sent by the reference network device at the first moment. Then, the calibration terminal device determines the phase deviation between the calibration terminal device and the reference network device with reference to the phase and positions of the calibration terminal device and the reference network device. The phase deviation between the calibration terminal device and the reference network device may represent a synchronization error between the calibration terminal device and the reference network device and a radio frequency initial phase of the calibration terminal device. For a specific determining process, refer to related descriptions below.

Specifically, the calibration terminal device obtains a phase by measuring a positioning reference signal sent by each of the at least one measurement network device at the first moment. Then, the calibration terminal device obtains a phase deviation between the calibration terminal device and each measurement network device through calculation with reference to the phase and positions of the calibration terminal device and each measurement network device. The phase deviation between the calibration terminal device and each measurement network device may represent a synchronization error between the calibration terminal device and each measurement network device and a radio frequency initial phase of the calibration terminal device. Therefore, the at least one phase deviation may be understood as a phase deviation between the reference network device and the at least one measurement network device that is measured by the calibration terminal device. The at least one phase deviation represents a synchronization error between the reference network device and the at least one measurement network device. For a specific process of determining the at least one phase deviation, refer to related descriptions below.

The following provides descriptions by using an example in which the at least one phase difference includes N phase differences 1. For the N phase differences 1, refer to the foregoing related descriptions. Details are not described herein again.

The at least one phase deviation includes N first phase deviations. The phase deviation between the calibration terminal device and each measurement network device includes N second phase deviations. The phase deviation between the calibration terminal device and the reference network device is referred to as a third phase deviation. An $i^{th}$ first phase deviation in the N first phase deviations is a difference between an $i^{th}$ second phase deviation in the N second phase deviations and the third phase deviation.

The $i^{th}$ second phase deviation in the N second phase deviations is a phase deviation between the calibration terminal device and the $i^{th}$ measurement network device in the N measurement network devices at the first moment. In other words, the N second phase deviations include a phase deviation between the calibration terminal device and each of the N measurement network devices at the first moment. The third phase deviation is a phase deviation between the calibration terminal device and the reference network device at the first moment. For the second network device, a position of the calibration terminal device is known.

The $i^{th}$ first phase deviation in the N first phase deviations is a phase compensation value of an $i^{th}$ phase difference 1 in the N phase differences 1. For a specific principle, refer to related descriptions below.

Specifically, the N phase differences 4 are obtained based on a phase difference between a phase obtained by the calibration terminal device by measuring a positioning reference signal sent by each measurement network device at the first moment and a phase obtained by the calibration terminal device by measuring a positioning reference signal sent by the reference network device at the first moment. The calibration terminal device determines the N first phase deviations with reference to the N phase differences 4. The calibration terminal device sends the N first phase deviations to the second network device. Correspondingly, the second network device receives the N first phase deviations from the calibration terminal device.

For example, as shown in FIG. 7, the reference network device is a TRP 1, and the N measurement network devices include a TRP 2, a TRP 3, and a TRP 4. The second network device receives the N first phase deviations sent by the calibration terminal device. For the second network device, a position of the calibration terminal device is known. A phase $\varphi_i(t_1)$ obtained by the calibration terminal device by measuring a positioning reference signal sent by an $i^{th}$ TRP at the first moment may be expressed as the following Formula 1:

$$\varphi_i(t_1) = 2\pi r_i / \lambda - 2\pi N_i + 2\pi c \delta_i(t_1) / \lambda + \phi_i(t_1) + n_i \quad \text{Formula 10}$$

$r_i$ represents a distance between the calibration terminal device and the $i^{th}$ TRP included in the N measurement network devices. $N_i$ represents a quantity of entire cycles of a wavelength between the calibration terminal device and the $i^{th}$ TRP included in the N measurement network devices. $c$ represents the speed of light. $\delta_i(t_1)$ represents a synchronization error between the calibration terminal device and the $i^{th}$ TRP included in the N measurement network devices at the first moment $t_1$. $\phi_i(t_1)$ represents a radio frequency initial phase of the calibration terminal device at the first moment $t_1$. Different devices have different radio frequency initial phases. $n_i$ represents phase noise. $\lambda$ is a wavelength corresponding to a frequency of a carrier signal carrying a positioning reference signal sent by the $i^{th}$ TRP at the first moment.

The calibration terminal device calculates, based on the position of the calibration terminal device, the distance $r_i$ between the calibration terminal device and the $i^{th}$ TRP included in the N measurement network devices at the first moment. The calibration terminal device may calculate the $i^{th}$ second phase deviation $\theta_i(t_1)$ in the N second phase deviations based on $\varphi_i(t_1)$. The second phase deviation $\theta_i(t_1)$ represents a synchronization error between the calibration terminal device and the $i^{th}$ TRP included in the N measurement network devices and a radio frequency initial phase of the calibration terminal device at the first moment. The $i^{th}$ second phase deviation $\theta_i(t_1)$ in the N second phase deviations may be expressed as:

$$\theta_i(t_1) = 2\pi c \delta_i(t_1) / \lambda + \phi_i(t_1) = \varphi_i(t_1) - 2\pi r_i / \lambda + n_i \quad \text{Formula 11}$$

Because $\theta_i(t_1)$ represents the synchronization error between the calibration terminal device and the $i^{th}$ TRP included in the N measurement network devices and the radio frequency initial phase of the calibration terminal device at the first moment, the radio frequency initial phase of the calibration terminal device needs to be eliminated through inter-station differentiation. The calibration terminal device measures a positioning reference signal of the TRP 1 (namely, the reference network device) at the first moment to obtain a phase $\varphi_1(t_1)$. In this case, the calibration terminal device may obtain the third phase deviation $\theta_j(t_1)$ through calculation based on $\varphi_1(t_1)$. The third phase deviation $\theta_j(t_1)$ represents a synchronization error between the calibration terminal device and the TRP 1 and the radio frequency initial phase of the calibration terminal device at the first moment. In this case, a differential value between the $i^{th}$ second phase deviation $\theta_i(t_1)$ and the third phase deviation $\theta_j(t_1)$ may be expressed as:

$$\theta_{ij}(t_1) = \theta_i(t_1) - \theta_j(t_1) \quad \text{Formula 12}$$

$\theta_{ij}(t_1)$ is the $i^{th}$ first phase deviation in the N first phase deviations. It can be learned that the second network device performs differentiation between the $i^{th}$ second phase deviation $\theta_i(t_1)$ and the third phase deviation $\theta_j(t_1)$, to obtain $\theta_{ij}(t_1)$. $\theta_{ij}(t_1)$ is not affected by an error of the radio frequency initial phase of the calibration terminal device. In addition, $\theta_{ij}(t_1)$ may represent a synchronization error between the $i^{th}$ TRP included in the N measurement network devices and the TRP 1.

The second network device performs positioning on the terminal device based on the N phase differences 1 and the N first phase deviations.

It can be learned from the foregoing description that the $i^{th}$ phase difference 1 in the N phase differences 1 is a phase difference between a phase obtained by the terminal device by measuring a positioning reference signal sent by the $i^{th}$ measurement network device at the first moment and a phase obtained by the terminal device by measuring a positioning reference signal sent by the reference network device at the first moment. The terminal device eliminates, by using a differential value between phases, impact of an error of a radio frequency initial phase of the terminal device and impact of a synchronization error between the terminal device and the at least one first network device (including the N measurement network devices and the reference network device). $\theta_{ij}(t_1)$ may be understood as a phase compensation value of the $i^{th}$ phase difference 1 in the N phase differences 1. Compensation for a synchronization error between the $i^{th}$ measurement network device and the reference network device is implemented.

In addition, because a synchronization error between different stations or the radio frequency initial phase of the terminal device may vary with a moment, a phase obtained by the terminal device by measuring a positioning reference signal at a different moment also changes. Therefore, the terminal device and the calibration terminal device should measure, at a same moment, a positioning reference signal sent by a TRP. Optionally, the same moment includes: a same OFDM symbol, a same slot, a same sub-slot, a same subframe, a same signal frame, a same measurement window, a same measurement gap, a same PRS processing window, a same reference signal cycle, a same uplink-downlink switching cycle, or a time interval length. The time interval length includes 1 ms (millisecond), 2 ms (millisecond), 5 ms, 10 ms, or 20 ms. The terminal device reports the N phase differences 1, and the calibration terminal device reports the N first phase deviations. Thus, the second network device performs accurate positioning on the terminal device.

According to the foregoing analysis, for the terminal device, in a positioning process, the terminal device may select a reference network device. Then, phase differences between phases obtained by the terminal device by measuring positioning reference signals sent by the measurement network devices at the first moment and a phase obtained by the terminal device by measuring a positioning reference signal sent by the reference network device at the first moment are the N phase differences 1. Then, phase differences between phases obtained by the calibration terminal device by measuring the positioning reference signals sent by the measurement network devices at the first moment and a phase obtained by the calibration terminal device by measuring the positioning reference signal sent by the reference network device at the first moment are the N phase differences 4. The calibration terminal device determines the N first phase deviations by using the N phase differences 4, and reports the N first phase deviations to the second network device. The second network device performs positioning on the terminal device based on the N phase differences 1 and the N first phase deviations.

The following describes a process in which the second network device performs positioning on the terminal device based on the N phase differences 1 and the N first phase deviations.

For example, as shown in FIG. 7, the reference network device is a TRP 1, and the N measurement network devices include a TRP 2, a TRP 3, and a TRP 4. The second network device constructs the following equations based on the N phase differences 1 and the N first phase deviations:

$$\varphi_{21}(t_1) - \theta_{21}(t_1) = 2\pi\Delta r'_{21} / \lambda - 2\pi N_{21} + n_i \quad \text{Formula 13}$$

$$\varphi_{31}(t_1) - \theta_{31}(t_1) = 2\pi\Delta r'_{31} / \lambda - 2\pi N_{31} + n_i \quad \text{Formula 14}$$

$$\varphi_{41}(t_1) - \theta_{41}(t_1) = 2\pi\Delta r'_{41} / \lambda - 2\pi N_{41} + n_i \quad \text{Formula 15}$$

In Formula 13, $\varphi_{21}(t_1)$ is a phase difference between a phase obtained by the terminal device by measuring a positioning reference signal sent by the TRP 2 at the first moment $t_1$ and a phase obtained by the terminal device by measuring a positioning reference signal sent by the TRP 1 at the first moment $t_1$. $\theta_{21}(t_1)$ is a phase deviation between the TRP 2 and the TRP 1 that is measured by the calibration terminal device at the first moment, that is, the 1st first phase deviation in the N first phase deviations. The 1st first phase deviation is equal to a difference between the 1st second phase deviation in the N second phase deviations and the third phase deviation. $N_{21}$ is ambiguity of an entire cycle corresponding to a difference between distances from the terminal device to the TRP 2 and the TRP 1. $\Delta r_{21}$ is a distance difference between a distance from the terminal device to the TRP 2 at the first moment and a distance from the terminal device to the TRP 1 at the first moment. $\lambda$ is a wavelength corresponding to a frequency of a carrier signal carrying a positioning reference signal of a TRP. Herein, an example in which a wavelength corresponding to a frequency of a carrier signal carrying a positioning reference signal of each TRP is $\lambda$ is used for description.

In Formula 14, $\varphi_{31}(t_1)$ is a phase difference between a phase obtained by the terminal device by measuring a positioning reference signal sent by the TRP 3 at the first moment $t_1$ and a phase obtained by the terminal device by measuring a positioning reference signal sent by the TRP 1 at the first moment $t_1$. $\theta_{31}(t_1)$ is a phase deviation between the TRP 3 and the TRP 1 that is measured by the calibration terminal device at the first moment, that is, the 2nd first phase deviation in the N first phase deviations. The 2nd first phase deviation is equal to a difference between the 2nd second phase deviation in the N second phase deviations and the third phase deviation. $N_{31}$ is ambiguity of an entire cycle corresponding to a difference between distances from the terminal device to the TRP 3 and the TRP 1. $\Delta r_{31}$ is a distance difference between a distance from the terminal device to the TRP 3 at the first moment and a distance from the terminal device to the TRP 1 at the first moment.

In Formula 15, $\varphi_{41}(t_1)$ is a phase difference between a phase obtained by the terminal device by measuring a positioning reference signal sent by the TRP 4 at the first moment $t_1$ and a phase obtained by the terminal device by measuring a positioning reference signal sent by the TRP 1 at the first moment $t_1$. $\theta_{41}(t_1)$ is a phase deviation between the TRP 4 and the TRP 1 that is measured by the calibration terminal device at the first moment, that is, the 3rd first phase deviation in the N first phase deviations. The 3rd first phase deviation is equal to a difference between the 3rd second phase deviation in the N second phase deviations and the third phase deviation. $N_{41}$ is ambiguity of an entire cycle corresponding to a difference between distances from the terminal device to the TRP 4 and the TRP 1. $\Delta r_{41}$ is a distance difference between a distance from the terminal device to the TRP 4 at the first moment and a distance from the terminal device to the TRP 1 at the first moment.

The second network device obtains a distance between the terminal device and each TRP and a position of the terminal device through calculation with reference to Formula 13 to Formula 15.

It can be learned that in the foregoing implementation, the second network device receives the N phase differences 1 from the terminal device, that is, the phase difference between the phase obtained by the terminal device by measuring the positioning reference signal sent by the reference network device at the first moment and the phase obtained by the terminal device by measuring the positioning reference signal sent by the at least one measurement network device at the first moment, and sends the phase differences to the second network device. In this way, error impact such as a radio frequency initial phase of the terminal device and synchronization errors between the terminal device and a plurality of first network devices is eliminated. The ith phase difference 1 is a phase difference between phases obtained by the terminal device by measuring positioning reference signals separately sent by the ith measurement network device and the reference network device at the first moment. The second network device obtains the N first phase deviations. The ith first phase deviation in the N first phase deviations may be a phase compensation value of the ith phase difference 1 in the N phase differences 1. Compensation for a synchronization error between the ith measurement network device and the reference network device is implemented. Then, the second network device performs positioning on the terminal device based on the N phase differences 1 and the N first phase deviations. In this way, high-accuracy positioning on the terminal device is implemented.

2. The at least one first network device includes a reference network device and at least one measurement network device; and the first information includes at least one of the following: at least one first cumulative phase difference or at least one first equivalent distance change amount, or the first information includes at least one of the following: at least one first cumulative phase difference rate or at least one first equivalent distance change rate.

The following describes, by using an example in which the first information includes the at least one first cumulative phase difference or the at least one first equivalent distance change amount, a process in which the second network device performs positioning on the terminal device.

Optionally, a process in which the second network device performs positioning on the terminal device by using the first information and the at least one cumulative phase deviation is described. The following describes a specific process in which the second network device performs positioning on the terminal device.

The at least one cumulative phase deviation includes a cumulative amount, in terms of time, of a phase deviation between the reference network device and the at least one measurement network device that is measured by the calibration terminal device. In other words, the at least one cumulative phase deviation includes:

a cumulative amount, in terms of time, of a difference between a phase deviation between the calibration terminal device and the reference network device and a phase deviation between the calibration terminal device and the at least one measurement network device.

For example, the at least one cumulative phase deviation includes N cumulative phase deviations. An ith cumulative phase deviation $\Delta\theta_{ij}$ in the N cumulative phase deviations is a difference between an ith first phase deviation $\theta_{ij}(t_1)$ in N first phase deviations and an ith fourth phase deviation $\theta_{ij}(t_2)$ in N fourth phase deviations.

For the N first phase deviations, refer to the foregoing related descriptions. The ith fourth phase deviation $\theta_{ij}(t_2)$ in the N fourth phase deviations is a difference between an ith fifth phase deviation $\theta_i(t_2)$ in N fifth phase deviations and a sixth phase deviation $\theta_j(t_2)$.

The ith fifth phase deviation $\theta_i(t_2)$ in the N fifth phase deviations is a phase deviation between the calibration terminal device and the ith measurement network device in the N measurement network devices at the second moment. The sixth phase deviation $\theta_j(t_2)$ is a phase deviation between the calibration terminal device and the reference network device at the second moment.

The ith cumulative phase deviation is a phase compensation value of the ith first cumulative phase difference in the N first cumulative phase differences. In this way, a radio frequency initial phase of the calibration terminal device is eliminated, and a synchronization error between different stations is compensated for For a specific principle, refer to related descriptions below.

The following describes a possible implementation in which the second network device performs positioning on the terminal device with reference to the first information and the at least one cumulative phase deviation.

With reference to the foregoing related descriptions of FIG. 7, it can be learned that a calibration terminal device whose position is accurately known is introduced to a network, and a radio frequency initial phase of the calibration terminal device is eliminated by using the calibration terminal device, and a synchronization error between different TRPs is calibrated by using the calibration terminal device.

In a phase-based positioning process, a terminal device usually needs to continuously track a phase, and accurately track the terminal device by using a cumulative amount of the phase in terms of time. The terminal device may determine N first cumulative phase differences. For example, an ith first cumulative phase difference in the N first cumulative phase differences is represented by the foregoing Formula 1.

The ith cumulative phase deviation in the foregoing N cumulative phase deviations may be expressed as:

$$\Delta\theta_{ij} = \theta_{ij}(t_{10}) - \theta_{ij}(t_1) \quad \text{Formula 16}$$

$\theta_{ij}(t_1)$ represents the i$^{th}$ first phase deviation in the N first phase deviations. For details about $\theta_{ij}(t_1)$, refer to related descriptions of the foregoing Formula 3. $\theta_{ij}(t_{10})$ represents the i$^{th}$ fourth phase deviation in the N fourth phase deviations. $\theta_{ij}(t_{10})$ is the difference between the i$^{th}$ fifth phase deviation $\theta_i(t_{10})$ in the N fifth phase deviations and the sixth phase deviation $\theta_j(t_{10})$.

Based on the foregoing Formula 1, it can be learned that the i$^{th}$ first cumulative phase difference rate in the N first cumulative phase difference rates may be expressed as:

$$\partial\Delta\varphi_i = \Delta\varphi_{ij}(t_1, t_{10}) / (t_{10} - t_1) \quad \text{Formula 17}$$

With reference to a scenario shown in FIG. 10, the following shows a possible implementation in which the second network device performs positioning on the terminal device. A TRP 1 is a reference network device, and a TRP 2 to a TRP 5 are measurement network devices. The second network device may construct the following plurality of sets of equations by using obtained measurement quantities:

$$\Delta d_{21} = (\Delta\varphi_{21}(t_1, t_{10}) - \Delta\theta_{21})\lambda / 2\pi \quad \text{Formula 18}$$

$$\Delta d_{31} = (\Delta\varphi_{31}(t_1, t_{10}) - \Delta\theta_{31})\lambda / 2\pi \quad \text{Formula 19}$$

$$\Delta d_{41} = (\Delta\varphi_{41}(t_1, t_{10}) - \Delta\theta_{41})\lambda / 2\pi \quad \text{Formula 20}$$

$$\Delta d_{51} = (\Delta\varphi_{51}(t_1, t_{10}) - \Delta\theta_{51})\lambda / 2\pi \quad \text{Formula 21}$$

In the foregoing Formula 18, the TRP 2 is the 1$^{st}$ measurement network device in the N measurement network devices. $\Delta d_{21}$ represents the 1$^{st}$ first equivalent distance change amount in the N first equivalent distance change amounts, that is, a difference between distances from the terminal device to the TRP 1 and the TRP 2 at the first moment $t_1$ and distances from the terminal device to the TRP 1 and the TRP 2 at the second moment $t_{10}$. $\Delta\varphi_{21}(t_1, t_{10})$ is the 1$^{st}$ first cumulative phase difference in the N first cumulative phase differences. $\Delta\theta_{21}$ is the 1$^{st}$ cumulative phase deviation in the N cumulative phase deviations. $\Delta\theta_{21}$ is used to compensate for a phase of the 1$^{st}$ first cumulative phase difference $\Delta\varphi_{21}(t_1, t_{10})$ in the N first cumulative phase differences, to compensate for a synchronization error between the TRP 1 and the TRP 2. $\lambda$ is a wavelength corresponding to a frequency of a carrier signal carrying a positioning reference signal of a TRP. Herein, an example in which a wavelength corresponding to a frequency of a carrier signal carrying a positioning reference signal of each TRP is $\lambda$ is used for description.

In the foregoing Formula 19, the TRP 3 is the 2$^{nd}$ measurement network device in the N measurement network devices. $\Delta d_{31}$ represents the 2$^{nd}$ first equivalent distance change amount in the N first equivalent distance change amounts, that is, a difference between distances from the terminal device to the TRP 1 and the TRP 3 at the first moment $t_1$ and distances from the terminal device to the TRP 1 and the TRP 3 at the second moment $t_{10}$. $\Delta\varphi_{31}(t_1, t_{10})$ is the 2$^{nd}$ first cumulative phase difference in the N first cumulative phase differences. $\Delta\theta_{31}$ is the 2$^{nd}$ cumulative phase deviation in the N cumulative phase deviations. $\Delta\theta_{31}$ is used to compensate for a phase of the 2$^{nd}$ first cumulative phase difference $\Delta\varphi_{31}(t_1, t_{10})$ in the N first cumulative phase differences, to compensate for a synchronization error between the TRP 3 and the TRP 1.

In the foregoing Formula 20, the TRP 4 is the 3$^{rd}$ measurement network device in the N measurement network devices. $\Delta d_{41}$ represents the 3$^{rd}$ first equivalent distance change amount in the N first equivalent distance change amounts, that is, a difference between distances from the terminal device to the TRP 1 and the TRP 4 at the first moment $t_1$ and distances from the terminal device to the TRP 1 and the TRP 4 at the second moment $t_{10}$. $\Delta\varphi_{41}(t_1, t_{10})$ is the 3$^{rd}$ first cumulative phase difference in the N first cumulative phase differences. $\Delta\theta_{41}$ is the 3$^{rd}$ cumulative phase deviation in the N cumulative phase deviations. $\Delta\theta_{41}$ is used to compensate for a phase of the 3$^{rd}$ first cumulative phase difference $\Delta\varphi_{41}(t_1, t_{10})$ in the N first cumulative phase differences, to compensate for a synchronization error between the TRP 4 and the TRP 1.

In the foregoing Formula 21, the TRP 5 is the 4$^{th}$ measurement network device in the N measurement network devices. $\Delta d_{51}$ represents the 4$^{th}$ first equivalent distance change amount in the N first equivalent distance change amounts, that is, a difference between distances from the terminal device to the TRP 1 and the TRP 5 at the first moment $t_1$ and distances from the terminal device to the TRP 1 and the TRP 5 at the second moment $t_{10}$. $\Delta\varphi_{51}(t_1, t_{10})$ is the 4$^{th}$ first cumulative phase difference in the N first cumulative phase differences. $\Delta\theta_{51}$ is the 4$^{th}$ cumulative phase deviation in the N cumulative phase deviations. $\Delta\theta_{51}$ is used to compensate for a phase of the 4$^{th}$ first cumulative phase difference $\Delta\varphi_{51}(t_1, t_{10})$ in the N first cumulative phase differences, to compensate for a synchronization error between the TRP 5 and the TRP 1.

The second network device may obtain a position of the terminal device at the first moment and a position of the terminal device at the second moment through calculation with reference to Formula 18 to Formula 21. Specifically, the second network device may calculate the position of the terminal device at the first moment and the position of the terminal device at the second moment by using the following Formula 22.

$$(x'_1, y_1', x_2', y_2') = \min_{x_1, y_1, x_2, y_2} \sum_i \frac{(\Delta d_{ij}^{xy}(x_1, y_1, x_2, y_2) - \Delta d_{ij})^2}{\sigma_i^2} \quad \text{Formula 22}$$

In the foregoing Formula 22, $\Delta d_{ij}^{xy}(x_1, y_1, x_2, y_2)$ represents a difference between distances from the position (x1, y1) of the terminal device at the first moment to the TRP 1 and the $i^{th}$ TRP in the N measurement network devices and distances from the position (x2, y2) of the terminal device at the second moment to the TRP 1 and the $i^{th}$ TRP in the N measurement network devices. $\sigma_i^2$ represents a fluctuation coefficient of the $i^{th}$ TRP in the N measurement network devices. The fluctuation coefficient is related to channel quality between the terminal device and the $i^{th}$ TRP in the N measurement network devices. Better channel quality between the terminal device and the $i^{th}$ TRP in the N measurement network devices indicates higher received energy of a signal of the $i^{th}$ TRP in the N measurement network devices received by the terminal device and smaller $\sigma_i^2$.

In the foregoing Formula 22, the second network device may search for the position (x1, y1) of the terminal device at the first moment and the position (x2, y2) of the terminal device at the second moment, and the second network device may substitute the position (x1, y1) of the terminal device at the first moment and the position (x2, y2) of the terminal device at the second moment into $\Delta d_{ij}^{xy}(x_1, y_1, x_2, y_2)$, so that the foregoing Formula 14 is minimized. Therefore, it can be learned that (x1, y1, x2, y2) is $(x'_1, y_1', x_2', y_2')$ in the foregoing Formula 14.

It can be learned that in the foregoing implementation, the second network device receives the first information from the terminal device. The second network device obtains the N cumulative phase deviations. Then, the second network device performs positioning on the terminal device based on the first information and the N cumulative phase deviations. The terminal device reports the at least one first cumulative phase difference, the at least one first equivalent distance change amount, the at least one first cumulative phase difference rate, or the at least one first equivalent distance change rate, so that error impact such as a radio frequency initial phase of the terminal device and synchronization errors between the terminal device and a plurality of first network devices can be eliminated, and a cumulative phase deviation caused by linear drift of each first network device in terms of time can be further eliminated. Then, the second network device performs positioning on the terminal device with reference to the first information reported by the terminal device and information reported by the calibration terminal device. This implements compensation for a synchronization error between different first network devices, thereby implementing high-accuracy positioning on the terminal device.

3. The at least one first network device includes one or more first network devices; and the first information includes at least one phase difference; or the first information includes at least one of the following: at least one second cumulative phase difference or at least one second equivalent distance change amount; or the first information includes at least one of the following: at least one second cumulative phase difference rate or at least one second equivalent distance change rate.

The at least one phase difference includes at least one of the following: a phase difference between phases obtained by the terminal device by measuring positioning reference signals sent by each of the at least one first network device at different moments; or a phase difference between channel first path phases obtained by the terminal device by measuring positioning reference signals sent by each of the at least one first network device at different moments; or a phase difference, at a same frequency, between frequency domain channel coefficients obtained by the terminal device by measuring positioning reference signals sent by each of the at least one first network device at different moments.

The following provides descriptions by using an example in which the at least one phase difference includes the phase difference between the phases obtained by the terminal device by measuring the positioning reference signals sent by each of the at least one first network device at different moments.

With reference to FIG. 8 and FIG. 9, the following describes some possible implementations in which the second network device performs positioning on the terminal device based on the first information.

Refer to FIG. 8. The terminal device reports the following four phase differences 3 to the second network device: $\Delta\varphi_1(t_1, t_{10})$, $\Delta\varphi_2(t_{10}, t_{20})$, $\Delta\varphi_3(t_1, t_{10})$, and $\Delta\varphi_4(t_1, t_{10})$. For $\Delta\varphi_1(t_1, t_{10})$, $\Delta\varphi_2(t_{10}, t_{20})$, $\Delta\varphi_3(t_1, t_{10})$, and $\Delta\varphi_4(t_1, t_{10})$, refer to the foregoing related descriptions.

The second network device obtains a distance difference $\Delta d_1$, a distance difference $\Delta d_2$, a distance difference $\Delta d_3$, and a distance difference $\Delta d_4$ through calculation by using the four phase differences 3 reported by the terminal device. The distance difference $\Delta d_1$ is a difference between distances from the terminal device to the TRP 1 at the first moment $t_1$ and the second moment $t_{10}$. The distance difference $\Delta d_2$ is a difference between distances from the terminal device to the TRP 2 at the first moment $t_1$ and the second moment $t_{10}$. The distance difference $\Delta d_3$ is a difference between distances from the terminal device to the TRP 3 at the first moment $t_1$ and the second moment $t_{10}$. The distance difference $\Delta d_4$ is a difference between distances from the terminal device to the TRP 4 at the first moment $t_1$ and the second moment $t_{10}$. The following separately represents the distance difference $\Delta d_1$, the distance difference $\Delta d_2$, the distance difference $\Delta d_3$, and the distance difference $\Delta d_4$ by using formulas.

$$\Delta d_1 = \Delta \varphi_1(t_1, t_{10}) \lambda / 2\pi \quad \text{Formula 23}$$

$$\Delta d_2 = \Delta \varphi_2(t_1, t_{10}) \lambda / 2\pi \quad \text{Formula 24}$$

$$\Delta d_3 = \Delta \varphi_3(t_1, t_{10}) \lambda / 2\pi \quad \text{Formula 25}$$

$$\Delta d_4 = \Delta \varphi_4(t_1, t_{10}) \lambda / 2\pi \quad \text{Formula 26}$$

The second network device may obtain a position of the terminal device at the first moment $t_1$ and a position of the terminal device at the second moment $t_{10}$ through calculation with reference to Formula 23 to Formula 26. Specifically, the second network device may calculate the position of the terminal device at the first moment $t_1$ and the position of the terminal device at the second moment $t_{10}$ by using the following Formula 27.

$$(x'_1, y'_1, x'_2, y'_2) = \min_{x_1, y_1, x_2, y_2} \sum_b \frac{(\Delta d_{diff}^b(x_1, y_1, x_2, y_2) - \Delta d_b)^2}{\sigma_b^2} \quad \text{Formula 27}$$

In the foregoing Formula 27, $\Delta d_{diff}^b(x_1, y_1, x_2, y_2)$ represents a difference between a distance from the position (x1, y1) of the terminal device at the first moment to a b$^{th}$ TRP and a distance from the position (x2, y2) of the terminal device at the second moment to the b$^{th}$ TRP. $\sigma_b^2$ is similar to $\sigma_i^2$ above. For details, refer to the foregoing related descriptions. Details are not described herein again. b is an integer greater than or equal to 1 and less than or equal to a quantity of the one or more first network devices. $\lambda$ is a wavelength corresponding to a frequency of a carrier signal carrying a positioning reference signal of a TRP. Herein, an example in which a wavelength corresponding to a frequency of a carrier signal carrying a positioning reference signal of each TRP is $\lambda$ is used for description.

In the foregoing Formula 27, the second network device may search for the position (x1, y1) of the terminal device at the first moment and the position (x2, y2) of the terminal device at the second moment, and the second network device may substitute the position (x1, y1) of the terminal device at the first moment and the position (x2, y2) of the terminal device at the second moment into $\Delta d_{diff}^b(x_1, y_1, x_2, y_2)$, so that the foregoing Formula 27 is minimized. Therefore, (x1, y1, x2, y2) is $(x'_1, y'_1, x'_2, y'_2)$ in the foregoing Formula 27.

It can be learned that, in the scenario shown in FIG. 8, if a synchronization error between the terminal device and the TRP is fixed at different moments, the terminal device reports the P phase differences 3, to eliminate the radio frequency initial phase of the terminal device and the synchronization error between the terminal device and the TRP. In this way, the second network device determines the position of the terminal device at the first moment and the position of the terminal device at the second moment by using the P phase differences 3 reported by the terminal device. In this way, high-accuracy positioning on the terminal device is implemented.

Refer to FIG. 9. If the TRP 1 to the TRP 4 all meet a clock linear drift model, a synchronization error between the terminal device and the b$^{th}$ TRP may be expressed as:

$$t_{b,sync} = a_b t_{period} + k \quad \text{Formula 28}$$

**EP 4 492 882 A1**

$a_b$ represents a deviation of a clock drift rate between the terminal device and the bth TRP. $t_{period}$ represents an absolute time interval. $k$ represents a fixed time offset.

According to the linear clock model, it can be learned that the phase difference 3 includes a linear synchronization error. For example, the terminal device measures a phase difference between phases of positioning reference signals separately sent by the bth TRP at a moment $t_1$ and a moment $t_{10}$. Details are shown in Formula 29:

$$\Delta\varphi_b(t_1,t_{10}) = \frac{c*a_b(t_{10}-t_1)*2\pi}{\lambda} + \Delta\varphi_b{'}(t_1,t_{10}) \quad \text{Formula 29}$$

$\dfrac{c*a_b(t_{10}-t_1)*2\pi}{\lambda}$ represents a cumulative phase caused by movement of the terminal device in a time interval $(t_{10}-t_1)$. $\Delta\varphi_b{'}(t_1,t_{10})$ represents a phase change caused by a linear clock error of the terminal device in the time interval $(t_{10}-t_1)$. $\lambda$ represents a wavelength corresponding to a frequency of a carrier signal carrying a positioning reference signal of the bth TRP.

$$\Delta\varphi_b(t_{10},t_{20}) = \frac{c*a_b(t_{20}-t_{10})*2\pi}{\lambda} + \Delta\varphi_b{'}(t_{10},t_{20}) \quad \text{Formula 30}$$

$\dfrac{c*a_b(t_{20}-t_{10})*2\pi}{\lambda}$ represents a cumulative phase caused by movement of the terminal device in a time interval $t_{20}-t_{10}$. $\Delta\varphi_b{'}(t_{10},t_{20})$ represents a phase change caused by a linear clock error of the terminal device in the time interval $t_{20}-t_{10}$. $\lambda$ represents a wavelength corresponding to a frequency of a carrier signal carrying a positioning reference signal of the bth TRP.

It can be learned from the foregoing Formula 29 and Formula 30 that the phase difference 3 includes a linear synchronization error. To eliminate impact of a linear clock drift error on positioning accuracy, the second network device or the terminal device may obtain the second cumulative phase difference $\nabla\phi_b$ through calculation with reference to Formula 29 and Formula 30. The second cumulative phase difference $\nabla\phi_b$ may be expressed as:

$$\nabla\phi_b = \Delta\varphi_b(t_1,t_{10}) - \Delta\varphi_b(t_{10},t_{20}) \quad \text{Formula 31}$$

The linear clock drift error can be eliminated as long as it is ensured that a time interval between $t_1$ and $t_{10}$ is equal to a time interval between $t_{10}$ and $t_{20}$. The second cumulative phase change rate may be expressed as:

$$\partial\nabla\phi_b = \frac{\nabla\phi_b}{t_{20}-t_1} \quad \text{Formula 32}$$

For example, the terminal device reports the following information to the second network device: a second cumulative phase difference $\nabla\phi_1$, a second cumulative phase difference $\nabla\phi_2$, a second cumulative phase difference $\nabla\phi_3$, and a second cumulative phase difference $\nabla\phi_4$. These second cumulative phase differences are represented below by using formulas.

$$\nabla\phi_1 = \Delta\varphi_1(t_1,t_{10}) - \Delta\varphi_1(t_{20},t_{10}) \quad \text{Formula 33}$$

$$\nabla\phi_2 = \Delta\varphi_2(t_1,t_{10}) - \Delta\varphi_2(t_{20},t_{10}) \quad \text{Formula 34}$$

$$\nabla\phi_3 = \Delta\varphi_3(t_1,t_{10}) - \Delta\varphi_3(t_{20},t_{10}) \quad \text{Formula 35}$$

$$\nabla\phi_4 = \Delta\varphi_4(t_1,t_{10}) - \Delta\varphi_4(t_{20},t_{10}) \quad \text{Formula 36}$$

The second network device may determine the following second equivalent distance change amount $\nabla d_1$,

second equivalent distance change amount $\nabla d_2$, second equivalent distance change amount $\nabla d_3$, and second equivalent distance change amount $\nabla d_4$ with reference to the information reported by the terminal device.

The second equivalent distance change amount $\nabla d_1$ is a difference between $\Delta d_1$ and $\Delta d_5$, and $\Delta d_5$ is a difference between distances from the terminal device to the TRP 1 at the second moment $t_{10}$ and the third moment $t_{20}$. For example, as shown in FIG. 9, $\Delta d_1 = d_2^1 - d_1^1$ , and $\Delta d_5 = d_3^1 - d_2^1$ .

The second equivalent distance change amount $\nabla d_2$ is a difference between $\Delta d_2$ and $\Delta d_6$, and $\Delta d_6$ is a difference between distances from the terminal device to the TRP 2 at the second moment $t_{10}$ and the third moment $t_{20}$. For example, as shown in FIG. 9, $\Delta d_2 = d_2^2 - d_1^2$ , and $\Delta d_6 = d_3^2 - d_2^2$ .

The second equivalent distance change amount $\nabla d_3$ is a difference between $\Delta d_3$ and $\Delta d_7$, and $\Delta d_7$ is a difference between distances from the terminal device to the TRP 3 at the second moment $t_{10}$ and the third moment $t_{20}$. For example, as shown in FIG. 9, $\Delta d_3 = d_2^3 - d_1^3$ , and $\Delta d_7 = d_3^3 - d_2^3$ .

The second equivalent distance change amount $\nabla d_4$ is a difference between $\Delta d_4$ and $\Delta d_8$, and $\Delta d_8$ is a difference between distances from the terminal device to the TRP 4 at the second moment $t_{10}$ and the third moment $t_{20}$. For example, as shown in FIG. 9, $\Delta d_4 = d_2^4 - d_1^4$ , and $\Delta d_8 = d_3^4 - d_2^4$ .

As shown in FIG. 9, the following represents the second equivalent distance change amount $\nabla d_1$, the second equivalent distance change amount $\nabla d_2$, the second equivalent distance change amount $\nabla d_3$, and the second equivalent distance change amount $\nabla d_4$ with reference to formulas.

$$\nabla d_1 = \Delta d_1 - \Delta d_5 = \nabla \phi_1 \lambda / 2\pi \quad \text{Formula 37}$$

$$\nabla d_2 = \Delta d_2 - \Delta d_6 = \nabla \phi_2 \lambda / 2\pi \quad \text{Formula 38}$$

$$\nabla d_3 = \Delta d_3 - \Delta d_7 = \nabla \phi_3 \lambda / 2\pi \quad \text{Formula 39}$$

$$\nabla d_4 = \Delta d_4 - \Delta d_8 = \nabla \phi_4 \lambda / 2\pi \quad \text{Formula 40}$$

The second network device may obtain positions of the terminal device at the first moment $t_1$, the second moment $t_{10}$, and the third moment $t_{20}$ through calculation with reference to the foregoing Formula 37 to Formula 40. Specifically, the second network device may calculate the positions of the terminal device at the first moment, the second moment, and the third moment by using the following Formula 41:

$$(x_1', y_1', x_2', y_2', x_3', y_3') = \min_{x_1, y_1, x_2, y_2} \sum_i \frac{(\Delta d_{diff}^b(x_2, y_2, x_3, y_3) - \Delta d_{diff}^b(x_1, y_1, x_2, y_2) - \nabla d_b)^2}{\sigma_b^2} \quad \text{Formula 41}$$

$\Delta d_{diff}^b(x_2, y_2, x_3, y_3)$ represents a difference between distances from the terminal device to the $b^{th}$ TRP at the second moment $t_{10}$ and the third moment $t_{20}$. The position of the terminal device at the second moment $t_{10}$ is (x2, y2), and the position of the terminal device at the third moment $t_{20}$ is (x3, y3). $\Delta d_{diff}^b(x_1, y_1, x_2, y_2)$ represents a difference between distances from the terminal device to the $b^{th}$ TRP at the first moment $t_1$ and the second moment $t_{10}$. The position of the terminal device at the first moment $t_1$ is (x1, y1), and the position of the terminal device at the second moment $t_{10}$ is (x2, y2). For $\sigma_b^2$ , refer to the foregoing related descriptions. Details are not described herein again. $\lambda$ is a wavelength corresponding to a frequency of a carrier signal carrying a positioning reference signal of a TRP. Herein, an example in which a wavelength corresponding to a frequency of a carrier signal carrying a positioning reference signal of each TRP is $\lambda$ is used for description.

In Formula 41, the second network device may search for the position (x1, y1) of the terminal device at the first moment, the position (x2, y2) of the terminal device at the second moment, and the position (x3, y3) of the terminal device at the third moment. The second network device substitutes the position (x1, y1) of the terminal device at the first moment, the position (x2, y2) of the terminal device at the second moment, and the position (x3, y3) of the terminal device at the third

moment into $\Delta d_{diff}^{b}(x_{2}, y_{2}, x_{3}, y_{3})$ and $\Delta d_{diff}^{b}(x_{1}, y_{1}, x_{2}, y_{2})$, so that the foregoing Formula 41 is minimized. Therefore, (x1, y1, x2, y2, x3, y3) is $(x'_{1}, y'_{1}, x'_{2}, y'_{2}, x'_{3}, y'_{3})$ in the foregoing Formula 28.

It should be noted that the positioning method shown in FIG. 9 may also be extended to an inter-station first cumulative phase difference or an inter-station first cumulative phase difference rate. The second network device may perform positioning on the terminal device based on the inter-station first cumulative phase difference or the inter-station first cumulative phase difference rate with reference to the positioning method shown in FIG. 9. This is not specifically limited in this application.

In the foregoing implementation, in the scenario shown in FIG. 9, the second network device performs positioning on the terminal device based on the at least one second cumulative phase difference provided by the terminal device. In this method, based on a characteristic that a time drift error included in a phase difference 3 changes linearly in terms of time, impact of the time drift error is eliminated through differentiation based on the phase difference 3. The phase difference 3 can eliminate a radio frequency initial phase of the terminal device and a synchronization error between the terminal device and the TRP. The second cumulative phase difference can further eliminate the impact of the time drift error. The second network device may implement high-accuracy positioning on the terminal device based on the at least one second cumulative phase difference or the at least one second cumulative phase difference rate reported by the terminal device. Participation of a calibration terminal device is not needed. This avoids difficulty caused by deployment.

Therefore, according to the technical solutions of this application, impact of an inter-station synchronization error and an error introduced by a clock drift on positioning accuracy can be effectively avoided, thereby helping improve positioning accuracy of a cellular communication system.

In embodiments of this application, the terminal device measures the positioning reference signal sent by the at least one first network device, to obtain the at least one phase difference. Then, the terminal device sends the first information to the second network device, where the first information includes the at least one phase difference, or the first information is determined based on the at least one phase difference. It can be learned that the first information provided by the terminal device is determined with reference to the at least one phase difference, and helps eliminate a synchronization error between the terminal device and the first network device and a synchronization error between different first network devices. This helps the second network device perform accurate positioning on the terminal device with reference to the first information. For example, in a cellular communication system, the second network device can perform accurate positioning on the terminal device according to the technical solution in this application. This avoids a problem that positioning accuracy is reduced due to the synchronization error between the terminal device and the first network device and the synchronization error between different first network devices.

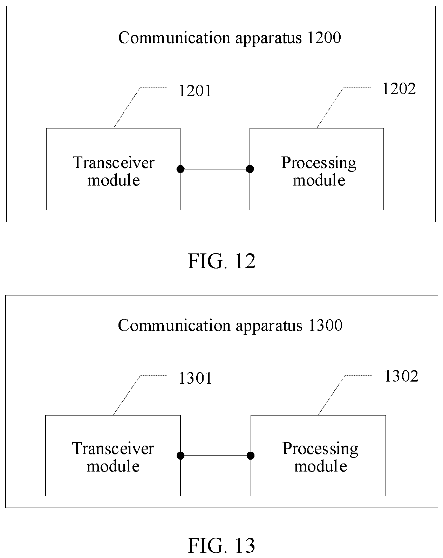

A communication apparatus provided in embodiments of this application is described below. Refer to FIG. 12. FIG. 12 is a diagram of a structure of a communication apparatus according to an embodiment of this application. The communication apparatus may be configured to perform steps performed by the terminal device in the embodiment shown in FIG. 6. For details, refer to related descriptions in the foregoing method embodiments.

The communication apparatus 1200 includes a transceiver module 1201 and a processing module 1202.

The transceiver module 1201 may implement a corresponding communication function, and the transceiver module 1201 may also be referred to as a communication interface or a communication unit. The processing module 1202 is configured to perform a processing operation.

Optionally, the communication apparatus 1200 may further include a storage module. The storage module may be configured to store instructions and/or data. The processing module 1202 may read the instructions and/or the data in the storage module, so that the communication apparatus implements the method embodiment shown in FIG. 6.

The communication apparatus 1200 may be configured to perform an action performed by the terminal device in the foregoing method embodiments. The communication apparatus 1200 may be a terminal device or a component that can be disposed in the terminal device. The transceiver module 1201 is configured to perform a receiving-related operation on a terminal device side in the foregoing method embodiments, and the processing module 1202 is configured to perform a processing-related operation on the terminal device side in the foregoing method embodiments.

Optionally, the transceiver module 1201 may include a sending module and a receiving module. The sending module is configured to perform a sending operation of the terminal device in the method embodiment shown in FIG. 6. The receiving module is configured to perform a receiving operation of the terminal device in the method embodiment shown in FIG. 6.

It should be noted that the communication apparatus 1200 may include a sending module, but does not include a receiving module. Alternatively, the communication apparatus 1200 may include a receiving module, but does not include a sending module. This may be specifically determined depending on whether the foregoing solution performed by the communication apparatus 1200 includes a sending action and a receiving action.

For example, the communication apparatus 1200 is configured to perform the following solution.

The processing module 1202 is configured to measure a positioning reference signal sent by at least one first network device, to obtain at least one phase difference.

The transceiver module 1201 is configured to send first information to a second network device, where the first information includes the at least one phase difference, or the first information is determined based on the at least one phase difference.

In a possible implementation, the at least one first network device includes a reference network device and at least one measurement network device; and the at least one phase difference includes at least one of the following:

a phase difference between a phase obtained by the communication apparatus 1200 by measuring a positioning reference signal sent by the reference network device and a phase obtained by the communication apparatus 1200 by measuring a positioning reference signal sent by the at least one measurement network device; or

a phase difference between a channel first path phase obtained by the communication apparatus 1200 by measuring a positioning reference signal sent by the reference network device and a channel first path phase obtained by the communication apparatus 1200 by measuring a positioning reference signal sent by the at least one measurement network device; or

a phase difference, at a same frequency, between a frequency domain channel coefficient obtained by the communication apparatus 1200 by measuring a positioning reference signal sent by the reference network device and a frequency domain channel coefficient obtained by the communication apparatus 1200 by measuring a positioning reference signal sent by the at least one measurement network device.

In another possible implementation, the at least one first network device includes one first network device, and the at least one phase difference includes at least one of the following:

a phase difference between phases obtained by the communication apparatus 1200 by measuring positioning reference signals sent by the first network device at different moments; or

a phase difference between channel first path phases obtained by the communication apparatus 1200 by measuring positioning reference signals sent by the first network device at different moments; or

a phase difference, at a same frequency, between frequency domain channel coefficients obtained by the communication apparatus 1200 by measuring positioning reference signals sent by the first network device at different moments.

In another possible implementation, the at least one first network device includes a reference network device and at least one measurement network device; and the first information includes at least one of the following: at least one first cumulative phase difference or at least one first equivalent distance change amount;

the at least one first cumulative phase difference includes at least one of the following:

a cumulative amount, in terms of time, of a phase difference between a phase obtained by the communication apparatus 1200 by measuring a positioning reference signal sent by the reference network device and a phase obtained by the communication apparatus 1200 by measuring a positioning reference signal sent by the at least one measurement network device; or

a cumulative amount, in terms of time, of a phase difference between a channel first path phase obtained by the communication apparatus 1200 by measuring a positioning reference signal sent by the reference network device and a channel first path phase obtained by the communication apparatus 1200 by measuring a positioning reference signal sent by the at least one measurement network device; or

a cumulative amount, in terms of time, of a phase difference, at a same frequency, between a frequency domain channel coefficient obtained by the communication apparatus 1200 by measuring a positioning reference signal sent by the reference network device and a frequency domain channel coefficient obtained by the communication apparatus 1200 by measuring a positioning reference signal sent by the at least one measurement network device; and

the at least one first equivalent distance change amount includes a change amount, in terms of time, of a distance difference between a distance from the communication apparatus 1200 to the reference network device and a distance from the communication apparatus 1200 to the at least one measurement network device.

In another possible implementation, the at least one first equivalent distance change amount is determined based on the at least one first cumulative phase difference.

In another possible implementation, the at least one first network device includes a reference network device and at least one measurement network device; and the first information includes at least one of the following: at least one first cumulative phase difference rate or at least one first equivalent distance change rate;
the at least one first cumulative phase difference rate includes at least one of the following:

a cumulative amount, in terms of unit time, of a phase difference between a phase obtained by the communication apparatus 1200 by measuring a positioning reference signal sent by the reference network device and a phase obtained by the communication apparatus 1200 by measuring a positioning reference signal sent by the at least one measurement network device; or
a cumulative amount, in terms of unit time, of a phase difference between a channel first path phase obtained by the communication apparatus 1200 by measuring a positioning reference signal sent by the reference network device and a channel first path phase obtained by the communication apparatus 1200 by measuring a positioning reference signal sent by the at least one measurement network device; or
a cumulative amount, in terms of unit time, of a phase difference, at a same frequency, between frequency domain channel coefficients obtained by the communication apparatus 1200 by measuring a positioning reference signal sent by the reference network device and a positioning reference signal sent by the at least one measurement network device; and
the at least one first equivalent distance change rate includes a change amount, in terms of unit time, of a distance difference between a distance from the communication apparatus 1200 to the reference network device and a distance from the communication apparatus 1200 to the at least one measurement network device.

In another possible implementation, the at least one first equivalent distance change rate is determined based on the at least one first cumulative phase difference rate.

In another possible implementation, the at least one first network device includes one first network device;

the first information includes at least one of the following: at least one second cumulative phase difference or at least one second equivalent distance change amount;
the at least one second cumulative phase difference includes at least one of the following:

a cumulative amount, in terms of time, of a phase difference between phases obtained by the communication apparatus 1200 by measuring positioning reference signals sent by the first network device at different moments; or
a cumulative amount, in terms of time, of a phase difference between channel first path phases obtained by the communication apparatus 1200 by measuring positioning reference signals sent by the first network device at different moments; or
a cumulative amount, in terms of time, of a phase difference, at a same frequency, between frequency domain channel coefficients obtained by the communication apparatus 1200 by measuring positioning reference signals sent by the first network device at different moments; and
the at least one second equivalent distance change amount includes a change amount, in terms of time, of a distance difference between distances from the communication apparatus 1200 to the first network device at different moments.

In another possible implementation, the at least one second equivalent distance change amount is determined based on the at least one second cumulative phase difference.

In another possible implementation, the at least one first network device includes one first network device; and
the first information includes at least one of the following: at least one second cumulative phase difference rate or at least one second equivalent distance change rate;
the at least one second cumulative phase difference rate includes at least one of the following:

a cumulative amount, in terms of unit time, of a phase difference between phases obtained by the communication apparatus 1200 by measuring positioning reference signals sent by the first network device at different moments; or
a cumulative amount, in terms of unit time, of a phase difference between channel first path phases obtained by the communication apparatus 1200 by measuring positioning reference signals sent by the first network device at different moments; or
a cumulative amount, in terms of unit time, of a phase difference, at a same frequency, between frequency domain channel coefficients obtained by the communication apparatus 1200 by measuring positioning reference signals sent by the first network device at different moments; and
the at least one second equivalent distance change rate is a change amount, in terms of time, of a distance difference between distances from the communication apparatus 1200 to the first network device at different moments.

In another possible implementation, the at least one second equivalent distance change rate is determined based on the at least one second cumulative phase difference rate.

A communication apparatus provided in embodiments of this application is described below. Refer to FIG. 13. FIG. 13 is a diagram of a structure of a communication apparatus according to an embodiment of this application. The communication apparatus may be configured to perform steps performed by the second network device in the embodiment shown in FIG. 6. For details, refer to related descriptions in the foregoing method embodiments.

The communication apparatus 1300 includes a transceiver module 1301 and a processing module 1302.

The transceiver module 1301 may implement a corresponding communication function, and the transceiver module 1301 may also be referred to as a communication interface or a communication unit. The processing module 1302 is configured to perform a processing operation.

Optionally, the communication apparatus 1300 may further include a storage module. The storage module may be configured to store instructions and/or data. The processing module 1302 may read the instructions and/or the data in the storage module, so that the communication apparatus implements the method embodiment shown in FIG. 6.

The communication apparatus 1300 may be configured to perform an action performed by the second network device in the foregoing method embodiments. The communication apparatus 1300 may be a second network device or a component that can be disposed in the second network device. The transceiver module 1301 is configured to perform a receiving-related operation on a second network device side in the foregoing method embodiments, and the processing module 1302 is configured to perform a processing-related operation on the second network device side in the foregoing method embodiments.

Optionally, the transceiver module 1301 may include a sending module and a receiving module. The sending module is configured to perform a sending operation of the second network device in the method embodiment shown in FIG. 6. The receiving module is configured to perform a receiving operation of the second network device in the method embodiment shown in FIG. 6.

It should be noted that the communication apparatus 1300 may include a sending module, but does not include a receiving module. Alternatively, the communication apparatus 1300 may include a receiving module, but does not include a sending module. This may be specifically determined depending on whether the foregoing solution performed by the communication apparatus 1300 includes a sending action and a receiving action.

For example, the communication apparatus 1300 may be configured to perform the following solution.

The transceiver module 1301 is configured to receive first information from a terminal device, where the first information includes at least one phase difference, or the first information is determined based on the at least one phase difference, and the at least one phase difference is obtained by the terminal device by measuring a positioning reference signal sent by at least one first network device.

The processing module 1302 is configured to perform positioning on the terminal device based on the first information.

In a possible implementation, the at least one first network device includes a reference network device and at least one measurement network device; and the at least one phase difference includes at least one of the following:

a phase difference between a phase obtained by the terminal device by measuring a positioning reference signal sent by the reference network device and a phase obtained by the terminal device by measuring a positioning reference signal sent by the at least one measurement network device; or

a phase difference between a channel first path phase obtained by the terminal device by measuring a positioning reference signal sent by the reference network device and a channel first path phase obtained by the terminal device by measuring a positioning reference signal sent by the at least one measurement network device; or

a phase difference, at a same frequency, between a frequency domain channel coefficient obtained by the terminal device by measuring a positioning reference signal sent by the reference network device and a frequency domain channel coefficient obtained by the terminal device by measuring a positioning reference signal sent by the at least one measurement network device.

In another possible implementation, the at least one first network device includes one first network device, and the at least one phase difference includes at least one of the following:

a phase difference between phases obtained by the terminal device by measuring positioning reference signals sent by the first network device at different moments; or

a phase difference between channel first path phases obtained by the terminal device by measuring positioning reference signals sent by the first network device at different moments; or

a phase difference, at a same frequency, between frequency domain channel coefficients obtained by the terminal device by measuring positioning reference signals sent by the first network device at different moments.

In another possible implementation, the at least one first network device includes a reference network device and at least one measurement network device; and the first information includes at least one of the following: at least one first cumulative phase difference or at least one first equivalent distance change amount;

the at least one first cumulative phase difference includes at least one of the following:

a cumulative amount, in terms of time, of a phase difference between a phase obtained by the terminal device by measuring a positioning reference signal sent by the reference network device and a phase obtained by the terminal device by measuring a positioning reference signal sent by the at least one measurement network device; or
a cumulative amount, in terms of time, of a phase difference between a channel first path phase obtained by the terminal device by measuring a positioning reference signal sent by the reference network device and a channel first path phase obtained by the terminal device by measuring a positioning reference signal sent by the at least one measurement network device; or
a cumulative amount, in terms of time, of a phase difference, at a same frequency, between a frequency domain channel coefficient obtained by the terminal device by measuring a positioning reference signal sent by the reference network device and a frequency domain channel coefficient obtained by the terminal device by measuring a positioning reference signal sent by the at least one measurement network device; and

the at least one first equivalent distance change amount includes a change amount, in terms of time, of a distance difference between a distance from the terminal device to the reference network device and a distance from the terminal device to the at least one measurement network device.

In another possible implementation, the at least one first equivalent distance change amount is determined based on the at least one first cumulative phase difference.

In another possible implementation, the at least one first network device includes a reference network device and at least one measurement network device; and the first information includes at least one of the following: at least one first cumulative phase difference rate or at least one first equivalent distance change rate;

the at least one first cumulative phase difference rate includes at least one of the following:

a cumulative amount, in terms of unit time, of a phase difference between a phase obtained by the terminal device by measuring a positioning reference signal sent by the reference network device and a phase obtained by the terminal device by measuring a positioning reference signal sent by the at least one measurement network device; or
a cumulative amount, in terms of unit time, of a phase difference between a channel first path phase obtained by the terminal device by measuring a positioning reference signal sent by the reference network device and a channel first path phase obtained by the terminal device by measuring a positioning reference signal sent by the at least one measurement network device; or
a cumulative amount, in terms of unit time, of a phase difference, at a same frequency, between frequency domain channel coefficients obtained by the terminal device by measuring a positioning reference signal sent by the reference network device and a positioning reference signal sent by the at least one measurement network device; and

the at least one first equivalent distance change rate includes a change amount, in terms of unit time, of a distance difference between a distance from the terminal device to the reference network device and a distance from the terminal device to the at least one measurement network device.

In another possible implementation, the at least one first equivalent distance change rate is determined based on the at least one first cumulative phase difference rate.

In another possible implementation, the at least one first network device includes one first network device;

the first information includes at least one of the following: at least one second cumulative phase difference or at least one second equivalent distance change amount;

the at least one second cumulative phase difference includes at least one of the following:

a cumulative amount, in terms of time, of a phase difference between phases obtained by the terminal device by measuring positioning reference signals sent by the first network device at different moments; or
a cumulative amount, in terms of time, of a phase difference between channel first path phases obtained by the terminal device by measuring positioning reference signals sent by the first network device at different moments; or
a cumulative amount, in terms of time, of a phase difference, at a same frequency, between frequency domain channel coefficients obtained by the terminal device by measuring positioning reference signals sent by the first network device at different moments; and

the at least one second equivalent distance change amount includes a change amount, in terms of time, of a distance difference between distances from the terminal device to the first network device at different moments.

In another possible implementation, the at least one second equivalent distance change amount is determined based on the at least one second cumulative phase difference.

In another possible implementation, the at least one first network device includes one first network device; and the first information includes at least one of the following: at least one second cumulative phase difference rate or at least one second equivalent distance change rate;

the at least one second cumulative phase difference rate includes at least one of the following:

a cumulative amount, in terms of unit time, of a phase difference between phases obtained by the terminal device by measuring positioning reference signals sent by the first network device at different moments; or
a cumulative amount, in terms of unit time, of a phase difference between channel first path phases obtained by the terminal device by measuring positioning reference signals sent by the first network device at different moments; or
a cumulative amount, in terms of unit time, of a phase difference, at a same frequency, between frequency domain channel coefficients obtained by the terminal device by measuring positioning reference signals sent by the first network device at different moments; and
the at least one second equivalent distance change rate is a change amount, in terms of time, of a distance difference between distances from the terminal device to the first network device at different moments.

In another possible implementation, the at least one second equivalent distance change rate is determined based on the at least one second cumulative phase difference rate.

In another possible implementation, the processing module 1302 is specifically configured to:

perform positioning on the terminal device based on the first information and at least one phase deviation, where the at least one phase deviation includes a phase deviation between different first network devices in the at least one first network device that is obtained by a calibration terminal device by measuring the positioning reference signal sent by the at least one first network device, and the at least one phase deviation is reported by the calibration terminal device.

In another possible implementation, the transceiver module 1301 is further configured to:

receive the at least one phase deviation from the calibration terminal device.

In another possible implementation, the processing module 1302 is specifically configured to:

perform positioning on the terminal device based on the first information and at least one cumulative phase deviation, where the at least one cumulative phase deviation includes a cumulative amount, in terms of time, of a phase deviation between different first network devices in the at least one first network device that is obtained by a calibration terminal device by measuring the positioning reference signal sent by the at least one first network device, and the at least one cumulative phase deviation is reported by the calibration terminal device.

In another possible implementation, the transceiver module 1301 is further configured to:

receive the at least one cumulative phase deviation from the calibration terminal device.

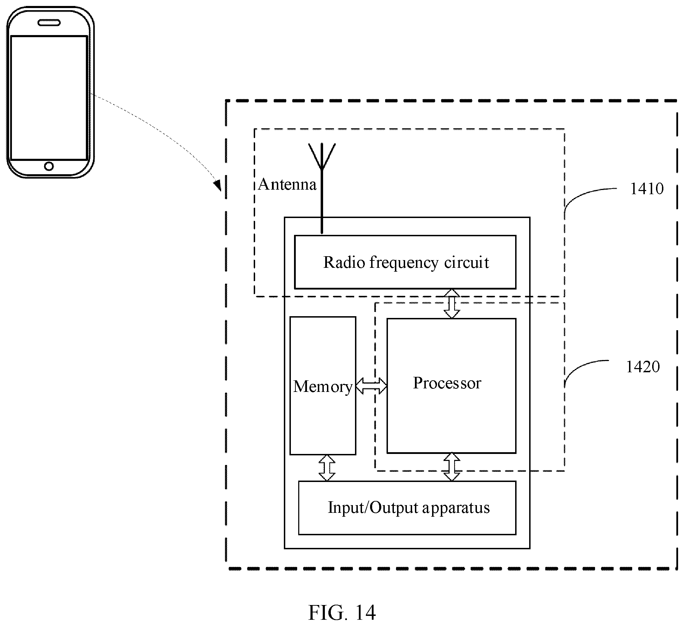

FIG. 14 below is a diagram of a possible structure of a terminal device.

FIG. 14 is a simplified diagram of a structure of a terminal device. For ease of understanding and illustration, an example in which the terminal device is a mobile phone is used in FIG. 14. As shown in FIG. 14, the terminal device includes a processor, a memory, a radio frequency circuit, an antenna, and an input/output apparatus.

The processor is mainly configured to: process a communication protocol and communication data, control the terminal device, execute a software program, process data of the software program, and the like.

The memory is mainly configured to store the software program and data.

The radio frequency circuit is mainly configured to perform conversion between a baseband signal and a radio frequency signal, and process the radio frequency signal.

The antenna is mainly configured to receive and send radio frequency signals in a form of electromagnetic waves.

The input/output apparatus, such as a touchscreen, a display, or a keyboard, is mainly configured to: receive data input by a user and output data to the user.

It should be noted that some types of terminal devices may have no input/output apparatus.

When data needs to be sent, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data.

For ease of description, FIG. 14 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have sending and receiving functions may be considered as a transceiver unit of the terminal device, and the processor that has a processing function may be considered as a processing unit of the terminal device. As shown in FIG. 14, the terminal device includes a transceiver unit 1410 and a processing unit 1420. The transceiver unit may also be referred to as a transceiver machine, a transceiver, a transceiver apparatus, or the like. The processing unit may also be referred to as a processor, a processing board, a processing module, a processing apparatus, or the like.

Optionally, a component that is in the transceiver unit 1410 and that is configured to implement a receiving function may be considered as a receiving unit, and a component that is in the transceiver unit 1410 and that is configured to implement a sending function may be considered as a sending unit. In other words, the transceiver unit 1410 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 1410 is configured to perform a sending operation and a receiving operation of the terminal device in the foregoing method embodiments, and the processing unit 1420 is configured to perform an operation other than the receiving and sending operations on the terminal device in the foregoing method embodiments.

When the terminal device is a chip, the chip includes a transceiver unit and a processing unit. The transceiver unit may be an input/output circuit or a communication interface. The processing unit is a processor, a microprocessor, an integrated circuit, or a logic circuit integrated on the chip.

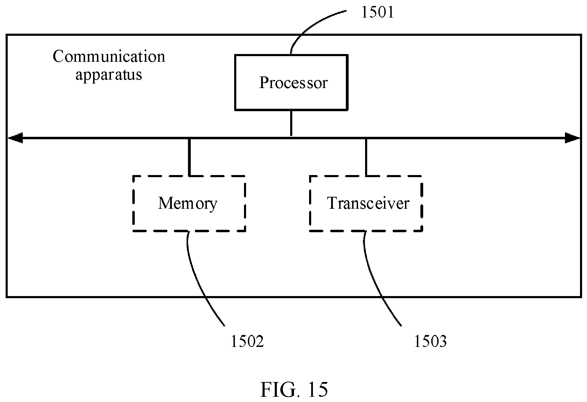

This application further provides a communication apparatus. FIG. 15 is a diagram of another structure of a communication apparatus according to an embodiment of this application. The communication apparatus may be configured to perform steps performed by the second network device in the embodiment shown in FIG. 6. For details, refer to related descriptions in the foregoing method embodiments.

The communication apparatus includes a processor 1501. Optionally, the communication apparatus further includes a memory 1502 and a transceiver 1503.

In a possible implementation, the processor 1501, the memory 1502, and the transceiver 1503 are separately connected by using a bus, and the memory stores computer instructions.

The processing module 1302 in the foregoing embodiment may be specifically the processor 1501 in this embodiment. Therefore, specific implementation of the processor 1501 is not described again. The transceiver module 1301 in the foregoing embodiment may be specifically the transceiver 1503 in this embodiment. Therefore, specific implementation of the transceiver 1503 is not described.

An embodiment of this application further provides a communication system. The communication system includes a terminal device and a second network device. The terminal device is configured to perform all or some steps performed by the terminal device in the embodiment shown in FIG. 6. The second network device is configured to perform all or some steps performed by the second network device in the embodiment shown in FIG. 6.

An embodiment of this application further provides a computer program product including instructions. When the computer program product runs on a computer, the computer is enabled to perform the communication method in the embodiment shown in FIG. 6.

An embodiment of this application further provides a computer-readable storage medium, including computer instructions. When the computer instructions are run on a computer, the computer is enabled to perform the method in the embodiment shown in FIG. 6.

An embodiment of this application further provides a chip apparatus, including a processor, configured to connect to a memory and invoke a program stored in the memory, so that the processor performs the method in the embodiment shown in FIG. 6.

Any processor mentioned above may be a general-purpose central processing unit, a microprocessor, an application-specific integrated circuit (application-specific integrated circuit, ASIC), or one or more integrated circuits configured to control program execution of the method in the embodiment shown in FIG. 6. Any memory mentioned above may be a read-only memory (read-only memory, ROM), another type of static storage device that can store static information and instructions, a random access memory (random access memory, RAM), or the like.

It may be clearly understood by a person skilled in the art that, for the purpose of convenient and brief description, for a detailed working process of the foregoing described system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, function units in embodiments of this application may be integrated into one processing unit, or each unit may exist alone physically, or two or more units may be integrated into one unit. The integrated unit may be implemented in a form of hardware, or may be implemented in a form of a software function unit.

When the integrated unit is implemented in a form of a software function unit and sold or used as an independent product, the integrated unit may be stored in a computer-readable storage medium. Based on such an understanding, the technical solutions of this application essentially, or the contributing part, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing embodiments are merely used to describe the technical solutions of this application, but not limit the technical solutions of this application. Although this application is described in detail with reference to the foregoing embodiments, persons of ordinary skill in the art should understand that they may still modify the technical solutions described in the foregoing embodiments, or perform equivalent replacement on some technical features. However, these modifications or replacements do not make the essence of the corresponding technical solutions depart from the scope of the technical solutions in embodiments of this application.

## Claims

1. A positioning information determining method, wherein the method comprises:

   measuring, by a terminal device, a positioning reference signal sent by at least one first network device, to obtain at least one phase difference; and
   sending, by the terminal device, first information to a second network device, wherein the first information comprises the at least one phase difference, or the first information is determined based on the at least one phase difference.

2. A positioning method, wherein the method comprises:

   receiving, by a second network device, first information from a terminal device, wherein the first information comprises at least one phase difference, or the first information is determined based on the at least one phase difference, and the at least one phase difference is obtained by the terminal device by measuring a positioning reference signal sent by at least one first network device; and
   performing, by the second network device, positioning on the terminal device based on the first information.

3. The method according to claim 1 or 2, wherein the at least one first network device comprises a reference network device and at least one measurement network device; and
   the at least one phase difference comprises at least one of the following:

   a phase difference between a phase obtained by the terminal device by measuring a positioning reference signal sent by the reference network device and a phase obtained by the terminal device by measuring a positioning reference signal sent by the at least one measurement network device; or
   a phase difference between a channel first path phase obtained by the terminal device by measuring a positioning reference signal sent by the reference network device and a channel first path phase obtained by the terminal device by measuring a positioning reference signal sent by the at least one measurement network device; or
   a phase difference, at a same frequency, between a frequency domain channel coefficient obtained by the terminal device by measuring a positioning reference signal sent by the reference network device and a frequency domain channel coefficient obtained by the terminal device by measuring a positioning reference signal sent by the at least one measurement network device.

4. The method according to claim 3, wherein the at least one phase difference is a phase difference obtained by the terminal device by measuring positioning reference signals sent by the at least one first network device at a same moment.

5. The method according to claim 4, wherein the same moment comprises: a same orthogonal frequency division multiplexing OFDM symbol, a same slot, a same sub-slot, a same subframe, a same frame, a same measurement window, a same measurement gap, a same positioning reference signal PRS processing window, a same reference signal cycle, or a same uplink-downlink switching cycle.

6. The method according to any one of claims 3 to 5, wherein the at least one phase difference is associated with a same timestamp.

7. The method according to claim 1 or 2, wherein the at least one first network device comprises one first network device, and the at least one phase difference comprises at least one of the following:

a phase difference between phases obtained by the terminal device by measuring positioning reference signals sent by the first network device at different moments; or
a phase difference between channel first path phases obtained by the terminal device by measuring positioning reference signals sent by the first network device at different moments; or
a phase difference, at a same frequency, between frequency domain channel coefficients obtained by the terminal device by measuring positioning reference signals sent by the first network device at different moments.

8. The method according to claim 1 or 2, wherein the at least one first network device comprises a reference network device and at least one measurement network device;

the first information comprises at least one of the following: at least one first cumulative phase difference or at least one first equivalent distance change amount;
the at least one first cumulative phase difference comprises at least one of the following:

a cumulative amount, in terms of time, of a phase difference between a phase obtained by the terminal device by measuring a positioning reference signal sent by the reference network device and a phase obtained by the terminal device by measuring a positioning reference signal sent by the at least one measurement network device; or
a cumulative amount, in terms of time, of a phase difference between a channel first path phase obtained by the terminal device by measuring a positioning reference signal sent by the reference network device and a channel first path phase obtained by the terminal device by measuring a positioning reference signal sent by the at least one measurement network device; or
a cumulative amount, in terms of time, of a phase difference, at a same frequency, between a frequency domain channel coefficient obtained by the terminal device by measuring a positioning reference signal sent by the reference network device and a frequency domain channel coefficient obtained by the terminal device by measuring a positioning reference signal sent by the at least one measurement network device; and
the at least one first equivalent distance change amount comprises a change amount, in terms of time, of a distance difference between a distance from the terminal device to the reference network device and a distance from the terminal device to the at least one measurement network device.

9. The method according to claim 8, wherein the at least one first equivalent distance change amount is determined based on the at least one first cumulative phase difference.

10. The method according to claim 1 or 2, wherein the at least one first network device comprises a reference network device and at least one measurement network device;

the first information comprises at least one of the following: at least one first cumulative phase difference rate or at least one first equivalent distance change rate;
the at least one first cumulative phase difference rate comprises at least one of the following:

a cumulative amount, in terms of unit time, of a phase difference between a phase obtained by the terminal device by measuring a positioning reference signal sent by the reference network device and a phase obtained by the terminal device by measuring a positioning reference signal sent by the at least one measurement network device; or

a cumulative amount, in terms of unit time, of a phase difference between a channel first path phase obtained by the terminal device by measuring a positioning reference signal sent by the reference network device and a channel first path phase obtained by the terminal device by measuring a positioning reference signal sent by the at least one measurement network device; or

a cumulative amount, in terms of unit time, of a phase difference, at a same frequency, between frequency domain channel coefficients obtained by the terminal device by measuring a positioning reference signal sent by the reference network device and a positioning reference signal sent by the at least one measurement network device; and

the at least one first equivalent distance change rate comprises a change amount, in terms of unit time, of a distance difference between a distance from the terminal device to the reference network device and a distance from the terminal device to the at least one measurement network device.

11. The method according to claim 10, wherein the at least one first equivalent distance change rate is determined based on the at least one first cumulative phase difference rate.

12. The method according to claim 1 or 2, wherein the at least one first network device comprises one first network device;

the first information comprises at least one of the following: at least one second cumulative phase difference or at least one second equivalent distance change amount;

the at least one second cumulative phase difference comprises at least one of the following:

a cumulative amount, in terms of time, of a phase difference between phases obtained by the terminal device by measuring positioning reference signals sent by the first network device at different moments; or

a cumulative amount, in terms of time, of a phase difference between channel first path phases obtained by the terminal device by measuring positioning reference signals sent by the first network device at different moments; or

a cumulative amount, in terms of time, of a phase difference, at a same frequency, between frequency domain channel coefficients obtained by the terminal device by measuring positioning reference signals sent by the first network device at different moments; and

the at least one second equivalent distance change amount comprises a change amount, in terms of time, of a distance difference between distances from the terminal device to the first network device at different moments.

13. The method according to claim 12, wherein the at least one second equivalent distance change amount is determined based on the at least one second cumulative phase difference.

14. The method according to claim 1 or 2, wherein the at least one first network device comprises one first network device;

the first information comprises at least one of the following: at least one second cumulative phase difference rate or at least one second equivalent distance change rate;

the at least one second cumulative phase difference rate comprises at least one of the following:

a cumulative amount, in terms of unit time, of a phase difference between phases obtained by the terminal device by measuring positioning reference signals sent by the first network device at different moments; or

a cumulative amount, in terms of unit time, of a phase difference between channel first path phases obtained by the terminal device by measuring positioning reference signals sent by the first network device at different moments; or

a cumulative amount, in terms of unit time, of a phase difference, at a same frequency, between frequency domain channel coefficients obtained by the terminal device by measuring positioning reference signals sent by the first network device at different moments; and

the at least one second equivalent distance change rate is a change amount, in terms of unit time, of a distance difference between distances from the terminal device to the first network device at different moments.

15. The method according to claim 14, wherein the at least one second equivalent distance change rate is determined based on the at least one second cumulative phase difference rate.

16. The method according to any one of claims 2 to 15, wherein the performing, by the second network device, positioning on the terminal device based on the first information comprises:
performing, by the second network device, positioning on the terminal device based on the first information and at least one phase deviation, wherein the at least one phase deviation comprises a phase deviation between different first network devices in the at least one first network device that is obtained by a calibration terminal device by measuring the positioning reference signal sent by the at least one first network device, and the at least one phase deviation is reported by the calibration terminal device.

17. The method according to any one of claims 2 to 15, wherein the performing, by the second network device, positioning on the terminal device based on the first information comprises:
performing, by the second network device, positioning on the terminal device based on the first information and at least one cumulative phase deviation, wherein the at least one cumulative phase deviation comprises a cumulative amount, in terms of time, of a phase deviation between different first network devices in the at least one first network device that is obtained by a calibration terminal device by measuring the positioning reference signal sent by the at least one first network device, and the at least one cumulative phase deviation is reported by the calibration terminal device.

18. A first communication apparatus, wherein the first communication apparatus comprises a transceiver module and a processing module, wherein

The transceiver module is configured to measure a positioning reference signal sent by at least one first network device, to obtain at least one phase difference; and
the processing module is configured to send first information to a second network device, wherein the first information comprises the at least one phase difference, or the first information is determined based on the at least one phase difference.

19. A second communication apparatus, wherein the second communication apparatus comprises a transceiver module and a processing module, wherein

the transceiver module is configured to receive first information from a terminal device, wherein the first information comprises at least one phase difference, or the first information is determined based on the at least one phase difference, and the at least one phase difference is obtained by the terminal device by measuring a positioning reference signal sent by at least one first network device; and
the processing module is configured to perform positioning on the terminal device based on the first information.

20. The first communication apparatus according to claim 18 or the second communication apparatus according to claim 19, wherein the at least one first network device comprises a reference network device and at least one measurement network device; and
the at least one phase difference comprises at least one of the following:

a phase difference between a phase obtained by the first communication apparatus by measuring a positioning reference signal sent by the reference network device and a phase obtained by the first communication apparatus by measuring a positioning reference signal sent by the at least one measurement network device; or
a phase difference between a channel first path phase obtained by the first communication apparatus by measuring a positioning reference signal sent by the reference network device and a channel first path phase obtained by the first communication apparatus by measuring a positioning reference signal sent by the at least one measurement network device; or
a phase difference, at a same frequency, between a frequency domain channel coefficient obtained by the first communication apparatus by measuring a positioning reference signal sent by the reference network device and a frequency domain channel coefficient obtained by the first communication apparatus by measuring a positioning reference signal sent by the at least one measurement network device.

21. The first communication apparatus or the second communication apparatus according to claim 20, wherein the at least one phase difference is a phase difference obtained by the first communication apparatus by measuring positioning reference signals sent by the at least one first network device at a same moment.

22. The first communication apparatus or the second communication apparatus according to claim 21, wherein the same moment comprises: a same orthogonal frequency division multiplexing OFDM symbol, a same slot, a same sub-slot, a same subframe, a same frame, a same measurement window, a same measurement gap, a same positioning reference signal PRS processing window, a same reference signal cycle, or a same uplink-downlink switching cycle.

23. The first communication apparatus or the second communication apparatus according to any one of claims 20 to 22, wherein the at least one phase difference is associated with a same timestamp.

24. The first communication apparatus according to claim 18 or the second communication apparatus according to claim 19, wherein the at least one first network device comprises one first network device, and the at least one phase difference comprises at least one of the following:

a phase difference between phases obtained by the first communication apparatus by measuring positioning reference signals sent by the first network device at different moments; or
a phase difference between channel first path phases obtained by the first communication apparatus by measuring positioning reference signals sent by the first network device at different moments; or
a phase difference, at a same frequency, between frequency domain channel coefficients obtained by the first communication apparatus by measuring positioning reference signals sent by the first network device at different moments.

25. The first communication apparatus according to claim 18 or the second communication apparatus according to claim 19, wherein the at least one first network device comprises a reference network device and at least one measurement network device;

the first information comprises at least one of the following: at least one first cumulative phase difference or at least one first equivalent distance change amount;
the at least one first cumulative phase difference comprises at least one of the following:

a cumulative amount, in terms of time, of a phase difference between a phase obtained by the first communication apparatus by measuring a positioning reference signal sent by the reference network device and a phase obtained by the first communication apparatus by measuring a positioning reference signal sent by the at least one measurement network device; or
a cumulative amount, in terms of time, of a phase difference between a channel first path phase obtained by the first communication apparatus by measuring a positioning reference signal sent by the reference network device and a channel first path phase obtained by the first communication apparatus by measuring a positioning reference signal sent by the at least one measurement network device; or
a cumulative amount, in terms of time, of a phase difference, at a same frequency, between a frequency domain channel coefficient obtained by the first communication apparatus by measuring a positioning reference signal sent by the reference network device and a frequency domain channel coefficient obtained by the first communication apparatus by measuring a positioning reference signal sent by the at least one measurement network device; and
the at least one first equivalent distance change amount comprises a change amount, in terms of time, of a distance difference between a distance from the first communication apparatus to the reference network device and a distance from the first communication apparatus to the at least one measurement network device.

26. The first communication apparatus or the second communication apparatus according to claim 25, wherein the at least one first equivalent distance change amount is determined based on the at least one first cumulative phase difference.

27. The first communication apparatus according to claim 18 or the second communication apparatus according to claim 19, wherein the at least one first network device comprises a reference network device and at least one measurement network device;

the first information comprises at least one of the following: at least one first cumulative phase difference rate or at least one first equivalent distance change rate;
the at least one first cumulative phase difference rate comprises at least one of the following:

a cumulative amount, in terms of unit time, of a phase difference between a phase obtained by the first communication apparatus by measuring a positioning reference signal sent by the reference network device and a phase obtained by the first communication apparatus by measuring a positioning reference signal sent by the at least one measurement network device; or

a cumulative amount, in terms of unit time, of a phase difference between a channel first path phase obtained by the first communication apparatus by measuring a positioning reference signal sent by the reference network device and a channel first path phase obtained by the first communication apparatus by measuring a positioning reference signal sent by the at least one measurement network device; or

a cumulative amount, in terms of unit time, of a phase difference, at a same frequency, between frequency domain channel coefficients obtained by the first communication apparatus by measuring a positioning reference signal sent by the reference network device and a positioning reference signal sent by the at least one measurement network device; and

the at least one first equivalent distance change rate comprises a change amount, in terms of unit time, of a distance difference between a distance from the first communication apparatus to the reference network device and a distance from the first communication apparatus to the at least one measurement network device.

28. The first communication apparatus or the second communication apparatus according to claim 27, wherein the at least one first equivalent distance change rate is determined based on the at least one first cumulative phase difference rate.

29. The first communication apparatus according to claim 18 or the second communication apparatus according to claim 19, wherein the at least one first network device comprises one first network device;

the first information comprises at least one of the following: at least one second cumulative phase difference or at least one second equivalent distance change amount;

the at least one second cumulative phase difference comprises at least one of the following:

a cumulative amount, in terms of time, of a phase difference between phases obtained by the first communication apparatus by measuring positioning reference signals sent by the first network device at different moments; or

a cumulative amount, in terms of time, of a phase difference between channel first path phases obtained by the first communication apparatus by measuring positioning reference signals sent by the first network device at different moments; or

a cumulative amount, in terms of time, of a phase difference, at a same frequency, between frequency domain channel coefficients obtained by the first communication apparatus by measuring positioning reference signals sent by the first network device at different moments; and

the at least one second equivalent distance change amount comprises a change amount, in terms of time, of a distance difference between distances from the first communication apparatus to the first network device at different moments.

30. The first communication apparatus or the second communication apparatus according to claim 29, wherein the at least one second equivalent distance change amount is determined based on the at least one second cumulative phase difference.

31. The first communication apparatus according to claim 18 or the second communication apparatus according to claim 19, wherein the at least one first network device comprises one first network device;

the first information comprises at least one of the following: at least one second cumulative phase difference rate or at least one second equivalent distance change rate;

the at least one second cumulative phase difference rate comprises at least one of the following:

a cumulative amount, in terms of unit time, of a phase difference between phases obtained by the first communication apparatus by measuring positioning reference signals sent by the first network device at different moments; or

a cumulative amount, in terms of unit time, of a phase difference between channel first path phases obtained by the first communication apparatus by measuring positioning reference signals sent by the first network device at different moments; or

a cumulative amount, in terms of unit time, of a phase difference, at a same frequency, between frequency domain channel coefficients obtained by the first communication apparatus by measuring positioning reference signals sent by the first network device at different moments; and

the at least one second equivalent distance change rate is a change amount, in terms of unit time, of a distance difference between distances from the first communication apparatus to the first network device at different moments.

32. The first communication apparatus or the second communication apparatus according to claim 31, wherein the at least one second equivalent distance change rate is determined based on the at least one second cumulative phase difference rate.

33. The second communication apparatus according to any one of claims 19 to 32, wherein the processing module is specifically configured to:
perform positioning on the terminal device based on the first information and at least one phase deviation, wherein the at least one phase deviation comprises a phase deviation between different first network devices in the at least one first network device that is obtained by a calibration terminal device by measuring the positioning reference signal sent by the at least one first network device, and the at least one phase deviation is reported by the calibration terminal device.

34. The second communication apparatus according to any one of claims 19 to 32, wherein the processing module is specifically configured to:
perform positioning on the terminal device based on the first information and at least one cumulative phase deviation, wherein the at least one cumulative phase deviation comprises a cumulative amount, in terms of time, of a phase deviation between different first network devices in the at least one first network device that is obtained by a calibration terminal device by measuring the positioning reference signal sent by the at least one first network device, and the at least one cumulative phase deviation is reported by the calibration terminal device.

35. A communication apparatus, wherein the communication apparatus comprises a processor, and the processor is configured to execute a computer program or computer instructions in a memory, to perform the method according to any one of claims 1 to 17.

36. The communication apparatus according to claim 35, wherein the communication apparatus further comprises the memory.

37. A computer-readable storage medium, wherein the computer-readable storage medium stores a computer program, and when the computer program is executed by a communication apparatus, the communication apparatus is enabled to perform the method according to any one of claims 1 to 17.

FIG. 1

FIG. 2

FIG. 3

FIG. 4A

Local oscillator signal of a
first network device

Propagation
delay

Arrive at a receiving end

Local oscillator signal of a
terminal device

Synchronization error     Baseband first path phase

FIG. 4B

Channel impulse response CIR

$H_1(K)$

FFT
processing
or IFFT
processing

Line-of-sight LOS
path (also referred
to as a channel
first path)

Non-line-of-sight
NLOS path (also
referred to as a
reflection path)

Non-line-of-sight
NLOS path (also
referred to as a
reflection path)

Sidelobe,
noise, and the
like

FIG. 4C

FIG. 4D

FIG. 5

| Terminal device | At least one first network device | Second network device |
|---|---|---|

601: Positioning reference signal

602: Measure the positioning reference signal sent by the at least one first network device, to obtain at least one phase difference

603a: Determine first information based on the at least one phase difference

603: First information

604a: Obtain at least one phase deviation

604b: Obtain at least one cumulative phase deviation

604: Perform positioning on the terminal device based on the first information

FIG. 6

FIG. 7

FIG. 8

60

FIG. 9

FIG. 10

FIG. 11

Communication apparatus 1200

1201

1202

Transceiver module

Processing module

FIG. 12

Communication apparatus 1300

1301

1302

Transceiver module

Processing module

FIG. 13

Antenna

Radio frequency circuit

1410

Memory

Processor

1420

Input/Output apparatus

FIG. 14

FIG. 15

## INTERNATIONAL SEARCH REPORT

| International application No. |
|---|
| **PCT/CN2023/085643** |

### A. CLASSIFICATION OF SUBJECT MATTER

H04W64/00(2009.01)i;G01S 19/43(2010.01)i

According to International Patent Classification (IPC) or to both national classification and IPC

### B. FIELDS SEARCHED

Minimum documentation searched (classification system followed by classification symbols)

H04W64/-; G01S19/-

Documentation searched other than minimum documentation to the extent that such documents are included in the fields searched

Electronic data base consulted during the international search (name of data base and, where practicable, search terms used)

CNTXT, ENTXTC, OETXT, VEN, WPABSC, CNKI, IEEE, 百度学术, BAIDU SCHOLAR: 华为技术有限公司; 李成; 载波相位, 双差, 同步, 时钟误差, 时钟偏差, 定位, 位置, 蜂窝网络, 服务器, 距离; phase, double, dual, difference, PDOA, synchronization, clock, position, location, LMF, UE, cellular network, server, range, distance.

### C. DOCUMENTS CONSIDERED TO BE RELEVANT

| Category* | Citation of document, with indication, where appropriate, of the relevant passages | Relevant to claim No. |
|---|---|---|
| PX | CN 115767415 A (HUAWEI TECHNOLOGIES CO., LTD.) 07 March 2023 (2023-03-07) description, paragraphs 136-137, 187-202, 213, and 248-277 | 1-37 |
| X | CN 111279208 A (FRAUNHOFER-GESELLSCHAFT ZUR FÖRDERUNG DER ANGEWANDTEN FORSCHUNG E. V.) 12 June 2020 (2020-06-12) description, paragraphs 13, 24, 32, 52-53, and 60, and figures 1, 3, and 6 | 1-15,18-32, 35-37 |
| Y | CN 111279208 A (FRAUNHOFER-GESELLSCHAFT ZUR FÖRDERUNG DER ANGEWANDTEN FORSCHUNG E. V.) 12 June 2020 (2020-06-12) description, paragraphs 13, 24, 32, 52-53, and 60, and figures 1, 3, and 6 | 16-17, 33-34 |
| Y | CN 112543160 A (DATANG MOBILE COMMUNICATIONS EQUIPMENT CO., LTD.) 23 March 2021 (2021-03-23) description, paragraphs 36-46 and 126-170, and figure 4 | 16-17, 33-34 |
| A | CN 112788733 A (DATANG MOBILE COMMUNICATIONS EQUIPMENT CO., LTD.) 11 May 2021 (2021-05-11) entire document | 1-37 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 May 2023** | **19 May 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/085643** |

### C. DOCUMENTS CONSIDERED TO BE RELEVANT

| Category* | Citation of document, with indication, where appropriate, of the relevant passages | Relevant to claim No. |
|---|---|---|
| A | US 2011037646 A1 (TOYOTA MOTOR CO., LTD.) 17 February 2011 (2011-02-17) <br> entire document | 1-37 |
| A | CN 113691929 A (DATANG MOBILE COMMUNICATIONS EQUIPMENT CO., LTD.) 23 November 2021 (2021-11-23) <br> entire document | 1-37 |
| A | CN 110062457 A (TELECOMMUNICATIONS TECHNOLOGY RESEARCH INSTITUTE CO., LTD.) 26 July 2019 (2019-07-26) <br> entire document | 1-37 |
| A | CN 109073732 A (MURATA MANUFACTURING CO., LTD.) 21 December 2018 (2018-12-21) <br> entire document | 1-37 |
| A | CN 113115436 A (TSINGHUA UNIVERSITY) 13 July 2021 (2021-07-13) <br> entire document | 1-37 |

Form PCT/ISA/210 (second sheet) (July 2022)

## INTERNATIONAL SEARCH REPORT
**Information on patent family members**

International application No.

**PCT/CN2023/085643**

| Patent document cited in search report | | | Publication date (day/month/year) | Patent family member(s) | | | Publication date (day/month/year) |
|---|---|---|---|---|---|---|---|
| CN | 115767415 | A | 07 March 2023 | None | | | |
| CN | 111279208 | A | 12 June 2020 | WO | 2019053228 | A1 | 21 March 2019 |
| | | | | EP | 3682260 | A1 | 22 July 2020 |
| | | | | US | 2020212990 | A1 | 02 July 2020 |
| | | | | US | 11211993 | B2 | 28 December 2021 |
| CN | 112543160 | A | 23 March 2021 | None | | | |
| CN | 112788733 | A | 11 May 2021 | None | | | |
| US | 2011037646 | A1 | 17 February 2011 | US | 8593340 | B2 | 26 November 2013 |
| | | | | DE | 112009000848 | T5 | 12 May 2011 |
| | | | | JP | 2009270927 | A | 19 November 2009 |
| | | | | JP | 4807376 | B2 | 02 November 2011 |
| | | | | WO | 2009136254 | A1 | 12 November 2009 |
| CN | 113691929 | A | 23 November 2021 | None | | | |
| CN | 110062457 | A | 26 July 2019 | KR | 20200105506 | A | 07 September 2020 |
| | | | | KR | 102307426 | B1 | 29 September 2021 |
| | | | | EP | 3742829 | A1 | 25 November 2020 |
| | | | | EP | 3742829 | A4 | 10 March 2021 |
| | | | | JP | 2021511508 | A | 06 May 2021 |
| | | | | WO | 2019141090 | A1 | 25 July 2019 |
| | | | | US | 2020408871 | A1 | 31 December 2020 |
| | | | | US | 11353542 | B2 | 07 June 2022 |
| CN | 109073732 | A | 21 December 2018 | JPWO | 2017204087 | A1 | 20 December 2018 |
| | | | | JP | 6708255 | B2 | 10 June 2020 |
| | | | | US | 2019079160 | A1 | 14 March 2019 |
| | | | | US | 10495724 | B2 | 03 December 2019 |
| | | | | WO | 2017204087 | A1 | 30 November 2017 |
| CN | 113115436 | A | 13 July 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210336233

- CN 2023079525 W